# EUROPEAN PATENT APPLICATION

(11) **EP 2 852 158 A1**
(43) Date of publication of application: **25.03.2015**
(21) Application number: 13790183.1
(22) Date of filing: 07.03.2013
(51) Int. Cl.: H04N 7/26

(54) **IMAGE PROCESSING DEVICE AND IMAGE PROCESSING METHOD**

(30) Priority: 15.05.2012 JP 2012111271
(71) Applicant: Sony Corporation, Tokyo 108-0075 (JP)
(72) Inventor: SATO, Kazushi, Tokyo 108-0075 (JP)
(74) Representative: Robinson, Nigel Alexander Julian
(86) International application number: PCT/JP2013/056302
(87) International publication number: WO 2013/172074

(57) **Abstract**

Provided is an image processing apparatus including a first setting section configured to set a macroblock in a base layer decoded with a first coding scheme which is based on the macroblock with a fixed size, and a second setting section configured to set a coding unit in an enhancement layer decoded with a second coding scheme which is based on the coding unit subjected to recursive block division in accordance with a block size set by the first setting section.

## Description

### Technical Field

The present disclosure relates to an image processing apparatus and an image processing method.

### Background Art

The standardization of an image coding scheme called HEVC (High Efficiency Video Coding) by JCTVC (Joint Collaboration Team-Video Coding), which is a joint standardization organization of ITU-T and ISO/IEC, is currently under way for the purpose of improving coding efficiency more than H.264/AVC. For the HEVC standard, Committee draft as the first draft specifications was issued in February, 2012 (see, for example, Non-Patent Literature 1 below).

In order to enable an encoded stream to be decoded with another image coding scheme, encoding a base layer in scalable video coding with an image coding scheme of the related art and encoding an enhancement layer according to HEVC has been suggested (for example, see Non-Patent Literature 2 below).

The scalable video coding (SVC) is generally a technology that hierarchically encodes a layer transmitting a rough image signal and a layer transmitting a fine image signal. Typical attributes hierarchized in the scalable video coding mainly include the following three:
- Space scalability: Spatial resolutions or image sizes are hierarchized.
- Time scalability: Frame rates are hierarchized.
- SNR (Signal to Noise Ratio) scalability: SN ratios are hierarchized.

Further, though not yet adopted in the standard, the bit depth scalability and chroma format scalability are also discussed. Also, encoding a base layer in scalable video coding by a conventional image coding scheme and encoding an enhancement layer by HEVC is also proposed (see Non-Patent Literature 3 below).

In the scalable video coding, coding efficiency can be improved by encoding parameters which can be shared between layers in only one layer.

### Citation List

### Non-Patent Literature

Non-Patent Literature 1: Benjamin Bross, Woo-Jin Han, Jens-Rainer Ohm, Gary J. Sullivan, Thomas Wiegand, "High efficiency video coding (HEVC) text specification draft 6" (JCTVC-H1003 ver20, February 17, 2012)

Non-Patent Literature 2: Ajay Luthra, Jens-Rainer Ohm, Joern Ostermann, "Draft requirements for the scalable enhancement of HEVC" (ISO/IEC JTC1/SC29/WG11 N12400, November, 2011)

In HEVC, however, an encoding process is performed for each coding unit in a Quad-Tree structure formed by performing block division on an image recursively. On the other hand, in image coding schemes of the related art, such as MPEG2 or AVC, an encoding process is performed for each macroblock having a fixed size. Further, in image coding schemes of base layers in the related art, optimum solutions to how block structures are mapped between layers in scalable video coding of a multi-codec in which each enhancement layer is encoded according to HEVC have not yet been suggested.

For example, when a macroblock structure in a base layer is completely ignored and a Quad-Tree structure is formed in an enhancement layer from the beginning, mapping of blocks between layers may be lost. In this case, it is difficult to reuse various parameters set for each block between the layers, the advantages of the scalable video coding are lost, and thus coding efficiency deteriorates.

Accordingly, in scalable video coding of multiple codecs, it is desirable to provide an improved structure configured to set blocks in enhancement layers.

According to the present disclosure, there is provided an image processing apparatus including a first setting section configured to set a macroblock in a base layer decoded with a first coding scheme which is based on the macroblock with a fixed size, and a second setting section configured to set a coding unit in an enhancement layer decoded with a second coding scheme which is based on the coding unit subjected to recursive block division in accordance with a block size set by the first setting section.

The image processing apparatus mentioned above may be typically realized as an image decoding device that decodes an image.

Further, according to the present disclosure, there is provided an image processing method including setting a macroblock in a base layer decoded with a first coding scheme which is based on the macroblock with a fixed size, and setting a coding unit in an enhancement layer decoded with a second coding scheme which is based on the coding unit subjected to recursive block division in accordance with a block size set in the base layer.

Further, according to the present disclosure, there is provided an image processing apparatus including a first setting section configured to set a macroblock in a base layer encoded with a first coding scheme which is based on the macroblock with a fixed size, and a second setting section configured to set a coding unit in an enhancement layer encoded with a second coding scheme which is based on the coding unit subjected to recursive block division in accordance with a block size set by the first setting section.

The image processing apparatus mentioned above may be typically realized as an image encoding device that encodes an image.

Further, according to the present disclosure, there is provided an image processing method including setting a macroblock in a base layer encoded with a first coding scheme which is based on the macroblock with a fixed size, and setting a coding unit in an enhancement layer encoded with a second coding scheme which is based on the coding unit subjected to recursive block division in accordance with a block size set in the base layer.

According to the technology in the present disclosure, coding efficiency can be improved according to the improved structure configured to set the blocks in the enhancement layers a scalable video coding of multiple codecs.

### Brief Description of Drawings

[FIG. 1] FIG. 1 is an explanatory view illustrating scalable video coding.
[FIG. 2] FIG. 2 is an explanatory view illustrating a Quad-Tree structure of a coding unit in HEVC.
[FIG. 3A] FIG. 3A is an explanatory view illustrating a first method of setting an LCU size of HEVC.
[FIG. 3B] FIG. 3B is an explanatory view illustrating a second method of setting an LCU size of HEVC.
[FIG. 4A] FIG. 4A is an explanatory view illustrating a first method of setting an SCU size of HEVC.
[FIG. 4B] FIG. 4B is an explanatory view illustrating a second method of setting an SCU size of HEVC.
[FIG. 5A] FIG. 5A is an explanatory view illustrating a first method of setting a TU size of HEVC.
[FIG. 5B] FIG. 5B is an explanatory view illustrating a second method of setting a TU size of HEVC.
[FIG. 6A] FIG. 6A is an explanatory view illustrating a first method of setting a PU size of HFVC.
[FIG. 6B] FIG. 6B is an explanatory view illustrating a second method of setting a PU size of HEVC.
[FIG. 7A] FIG. 7A is an explanatory view illustrating candidates of a prediction block size available in inter prediction of AVC.
[FIG. 7B] FIG. 7B is an explanatory view illustrating a third method of setting a PU size of inter prediction of HEVC.
[FIG. 8] FIG. 8 is a block diagram showing a schematic configuration of an image encoding device according to an embodiment.
[FIG. 9] FIG. 9 is a block diagram showing a schematic configuration of an image decoding device according to an embodiment.
[FIG. 10] FIG. 10 is a block diagram showing an example of the configuration of a first encoding section and a second encoding section shown in FIG. 8.
[FIG. 11] FIG. 11 is a block diagram showing an example of the detailed configurations of block setting sections shown in FIG. 10.
[FIG. 12] FIG. 12 is a block diagram showing an example of the detailed configurations of orthogonal transform sections shown in FIG. 10.
[FIG. 13] FIG. 13 is a block diagram showing an example of the detailed configuration of an intra prediction section shown in FIG. 10.
[FIG. 14] FIG. 14 is a block diagram showing an example of the detailed configuration of an inter prediction section shown in FIG. 10.
[FIG. 15A] FIG. 15A is a flow chart showing a first example of the flow of a block setting process in an enhancement layer at the time of encoding.
[FIG. 15B] FIG. 15B is a flow chart showing a second example of the flow of a block setting process in an enhancement layer at the time of encoding.
[FIG. 16A] FIG. 16A is a flow chart showing a first example of the flow of an orthogonal transform process in the enhancement layer at the time of encoding.
[FIG. 16B] FIG. 16B is a flow chart showing a second example of the flow of an orthogonal transform process in the enhancement layer at the time of encoding.
[FIG. 17A] FIG. 17A is a flow chart showing a first example of the flow of an intra prediction process in the enhancement layer at the time of encoding.
[FIG. 17B] FIG. 17B is a flow chart showing a second example of the flow of an intra prediction process in the enhancement layer at the time of encoding.
[FIG. 18A] FIG. 18A is a flow chart showing a first example of the flow of an inter prediction process in the enhancement layer at the time of encoding.
[FIG. 18B] FIG. 18B is a flow chart showing a second example of the flow of an inter prediction process in the enhancement layer at the time of encoding.
[FIG. 19] FIG. 19 is a block diagram showing an example of the configurations of the first decoding section and the second decoding section shown in FIG. 9
[FIG. 20] FIG. 20 is a block diagram showing an example of the detailed configurations of block setting sections shown in FIG. 19.
[FIG. 21] FIG. 21 is a block diagram showing an example of the detailed configurations of inverse orthogonal transform sections shown in FIG. 19.
[FIG. 22] FIG. 22 is a block diagram showing an example of the detailed configuration of an intra prediction section shown in FIG. 19.
[FIG. 23] FIG. 23 is a block diagram showing an example of the detailed configuration of an inter prediction section shown in FIG. 19.
[FIG. 24A] FIG. 24A is a flow chart showing a first example of the flow of a block setting process in the enhancement layer at the time of decoding.
[FIG. 24B] FIG. 24B is a flow chart showing a second example of the flow of a block setting process in the enhancement layer at the time of decoding.
[FIG. 25A] FIG. 25A is a flow chart showing a first example of the flow of an inverse orthogonal transform process in the enhancement layer at the time of decoding.
[FIG. 25B] FIG. 25B is a flow chart showing a second example of the flow of an inverse orthogonal transform process in the enhancement layer at the time of decoding.
[FIG. 26A] FIG. 26A is a flow chart showing a first example of the flow of an intra prediction process in the enhancement layer at the time of decoding.
[FIG. 26B] FIG. 26B is a flow chart showing a second example of the flow of an intra prediction process in the enhancement layer at the time of decoding.
[FIG. 27A] FIG. 27A is a flow chart showing a first example of the flow of an inter prediction process in the enhancement layer at the time of decoding.
[FIG. 27B] FIG. 27B is a flow chart showing a second example of the flow of an inter prediction process in the enhancement layer at the time of decoding.
[FIG. 28] FIG. 28 is a block diagram showing an example of a schematic configuration of a television.
[FIG. 29] FIG. 29 is a block diagram showing an example of a schematic configuration of a mobile phone.
[FIG. 30] FIG. 30 is a block diagram showing an example of a schematic configuration of a recording/reproduction device.
[FIG. 31] FIG. 31 is a block diagram showing an example of a schematic configuration of an image capturing device.
[FIG. 32] FIG. 32 is an explanatory view illustrating a first example of use of the scalable video coding.
[FIG. 33] FIG. 33 is an explanatory view illustrating a second example of use of the scalable video coding.
[FIG. 34] FIG. 34 is an explanatory view illustrating a third example of use of the scalable video coding.
[FIG. 35] FIG. 35 is an explanatory view illustrating a multi-view codec.
[FIG. 36] FIG. 36 is a block diagram showing a schematic configuration of the image encoding device for multi-view codec.
[FIG. 37] FIG. 37 is a block diagram showing a schematic configuration of the image decoding device for multi-view codec.

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

The description will be made in the following order.
1. Overview
   1-1. Description of Problems
   1-2. Mapping in Coding Unit
   1-3. Mapping in Transform Unit
   1-4. Mapping in Prediction Unit
   1-5. Basic Configuration Example of Encoder
   1-6. Basic Configuration Example of Decoder
2. Configuration Example of Encoding Section According to Embodiment
   2-1. Overall Configuration
   2-2. Detailed Configuration of Block Setting Section
   2-3. Detailed Configuration of Orthogonal Transform Section
   2-4. Detailed Configuration of Intra Prediction Section
   2-5. Detailed Configuration of Inter Prediction Section
3. Process Flow at Time of Encoding According to Embodiment
   3-1. Block Setting Process
   3-2. Orthogonal Transform Process
   3-3. Intra Prediction Process
   3-4. Inter Prediction Process
4. Configuration Example of Decoding Section According to Embodiment
   4-1. Overall Configuration
   4-2. Detailed Configuration of Block Setting Section
   4-3. Detailed Configuration of Inverse Orthogonal Transform Section
   4-4. Detailed Configuration of Intra Prediction Section
   4-5. Detailed Configuration of Inter Prediction Section
5. Process Flow at Time of Decoding According to Embodiment
   5-1. Block Setting Process
   5-2. Inverse Orthogonal Transform Process
   5-3. Intra Prediction Process
   5-4. Inter Prediction Process
6. Example Application
   6-1. Application to Various Products
   6-2. Various Uses of Scalable Video Coding
   6-3. Others
7. Conclusion

### <1. Overview>

### [1.1. Description of Problems]

In the scalable video coding, a plurality of layers, each containing a series of images, is encoded. A base layer is a layer encoded first to represent roughest images. An encoded stream of the base layer may be independently decoded without decoding encoded streams of other layers. Layers other than the base layer are layers called enhancement layer representing finer images. Encoded streams of enhancement layers are encoded by using information contained in the encoded stream of the base layer. Therefore, to reproduce an image of an enhancement layer, encoded streams of both of the base layer and the enhancement layer are decoded. The number of layers handled in the scalable video coding may be any number equal to 2 or greater. When three layers or more are encoded, the lowest layer is the base layer and the remaining layers are enhancement layers. For an encoded stream of a higher enhancement layer, information contained in encoded streams of a lower enhancement layer and the base layer may be used for encoding and decoding. In this specification, of at least two layers having dependence, the layer on the side depended on is called a lower layer and the layer on the depending side is called an upper layer.

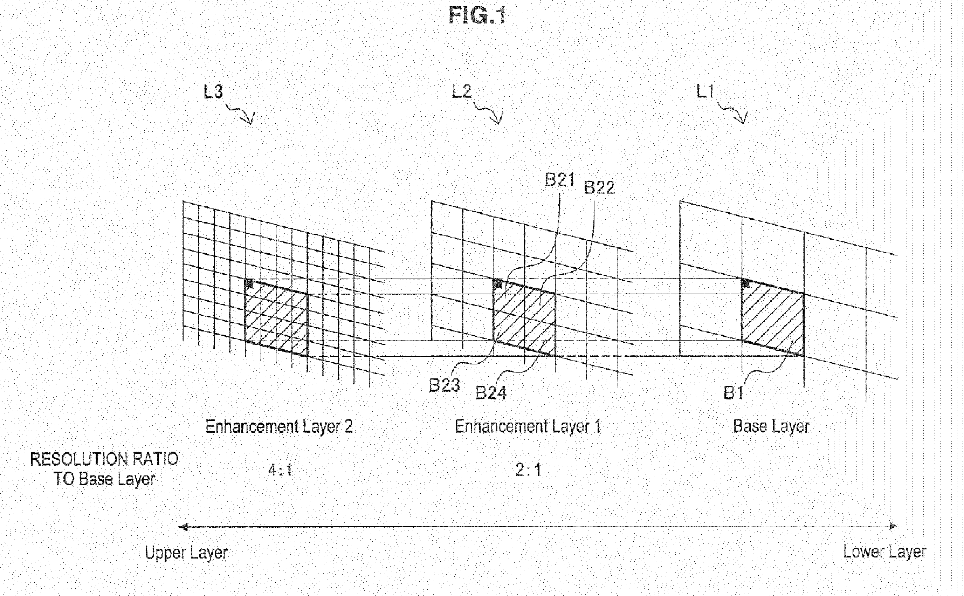

FIG. 1 shows three layers L1, L2, L3 subjected to scalable video coding. The layer L1 is the base layer and the layers L2, L3 are enhancement layers. Here, among various kinds of scalability, the space scalability is taken as an example. The ratio of spatial resolution of the layer L2 to the layer L1 is 2 : 1 (that is, the scalability ratio SR =2 : 0). The ratio of spatial resolution of the layer L3 to the layer L1 is 4 : 1. However, the scalability ratio is not limited to such examples. For example, the scalability ratio of a non-integer like SR=1.5 may be adopted.

Here, the base layer L1 is assumed to be encoded with an image coding scheme for a macroblock base, such as MPEG2 or AVC. A block B1 of the base layer L1 is one macroblock. The size of the macroblock is defined as a fixed size, and thus a macroblock B1 has a size of 16x16 pixels. When the enhancement layer L2 is assumed to be encoded with the image coding scheme for the macroblock base, a scalability ratio of the layer 2 to the layer L1 is 2.0, and therefore an image region of the enhancement layer L2 corresponding to the block B 1 can be divided into four macroblocks B21, B22, B23, and B24.

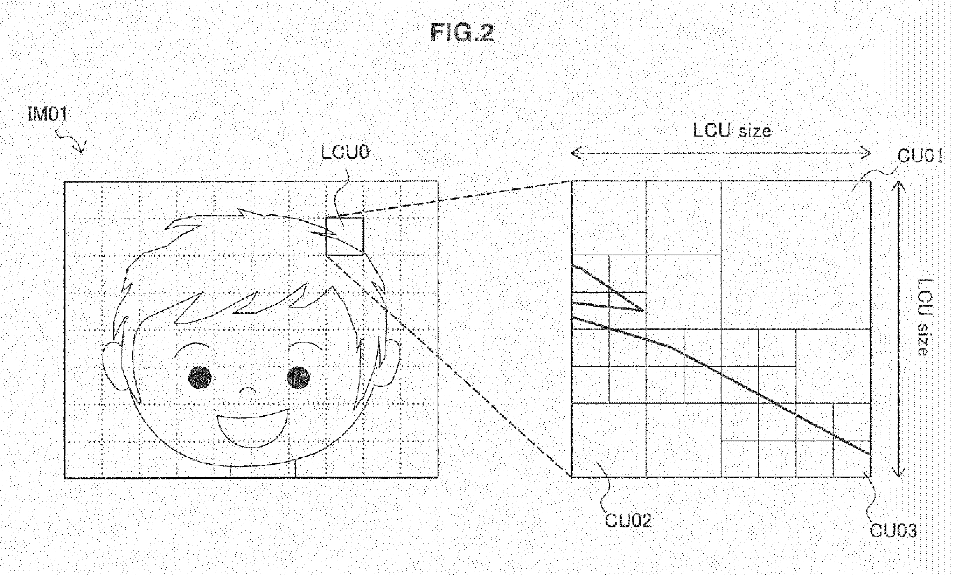

However, when the enhancement layer L2 is encoded according to HEVC, a situation is different. In HEVC, an encoding process is performed in each coding unit in a Quad-Tree structure formed by performing recursive block division on an image. FIG. 2 is an explanatory view illustrating a Quad-Tree structure of a coding unit in HEVC. On the left side of FIG. 2, an image IM01 in which the face of a person is pictured is shown. The image IM01 is first divided into a plurality of largest coding units (LCUs) having a size designated in a sequence parameter set (SPS). The maximum available LCU size is 64x64 pixels. Each LCU is recursively divided into at least one coding unit (CU) within a range which is not lower than a smallest coding unit (SCU) designated in the SPS in the same way. On the right side of FIG. 2, a case in which an LCU0 which a texture boundary crosses is recursively divided into a plurality of CUs is shown in an expanded manner. In a region near the texture boundary, smaller CUs are set by repeating the division. In the other regions, larger CUs are set by reducing the number of divisions. For example, when the size of the LCU0 is assumed to be 64x64 pixels, the size of a CU01 is 32x32 pixels, the size of a CU02 is 16x16 pixels, and the size of a CU03 is 8x8 pixels. Although not shown, each CU is divided into a plurality of transform units (TU) which are each a processing unit of an orthogonal transform. Each CU is divided into a plurality of prediction units (PU) which are each a processing unit of intra prediction or inter prediction. According to the recursive block division, coding efficiency of a high-definition image can be improved by flexibly changing the size of a processing unit of an encoding process according to content of the image.

Referring back to FIG. 1, when the base layer L1 is encoded according to AVC and the enhancement layer L2 is encoded according to HEVC, one CU of 32x32 pixels which corresponds to the block B1 and includes the blocks B21, B22, B23, and B24 can be set in the enhancement layer L2 according to the simplest method. However, when a certain texture is present in, for example, only the block B21 among the blocks B21, B22, B23, and B24, there is a preferable probability of setting a smaller CU rather than one CU including the four blocks in terms of the coding efficiency. In contrast, when a texture is commonly present between adjacent peripheral regions, there is also a preferable probability of setting a larger CU rather than one CU including the four blocks. Accordingly, in a method of reusing the macroblock structure of a lattice form of the base layer L1 simply in the enhancement layer L2, the advantages of the Quad-Tree structure unique to HEVC may not be taken and the coding efficiency may not be optimized.

When the macroblock structure in the base layer L1 is completely ignored and the Quad-Tree structure in the enhancement layer L2 is formed from the beginning, mapping of the blocks between the layers may be lost. In this case, it is difficult to reuse various parameters set for each block between the layers, and thus the coding efficiency may not be optimized either.

Accordingly, in this specification, mapping of blocks between layers in scalable video coding of multiple codecs is defined to resolve or at least partially correct the problems. Then, examples of the configurations of devices encoding and decoding an image according to the mapping will be described.

In the following description, for example, a base layer is assumed to be encoded according to Advanced Video Coding (AVC) and an enhancement layer is assumed to be encoded according to High Efficiency Video Coding (HEVC). However, the technology in the present disclosure is not limited to this example and is also applicable to a combination of other image coding schemes (for example, a base layer is encoded according to MPEG2 and an enhancement layer is encoded according to HEVC). The technology in the present disclosure is applicable not only to space scalability exemplified in FIG. 1 but also to SNR scalability, bit depth scalability, and chroma format scalability.

### [1-2. Mapping in Coding Unit]

In the technology in the present disclosure, a basic idea of the mapping in the CU is that the CU is set in the enhancement layer encoded according to HEVC according to a block size of a macroblock set in the base layer. That is, in the enhancement layer, the Quad-Tree structure is not formed from the beginning, but the Quad-Tree structure is formed using a macroblock size in the base layer.

More specifically, an LCU size in the enhancement layer is set to be a value which is equal to or greater than a product of a macroblock size in the base layer and a scalability ratio. The actually set LCU size may be determined deterministically as a size which is the closest to the product among available sizes or may be selected from a plurality of sizes narrowed using this product as a reference. Each LCU set in this way may be flexibly divided into smaller CUs irrespective of the macroblock size in the base layer.

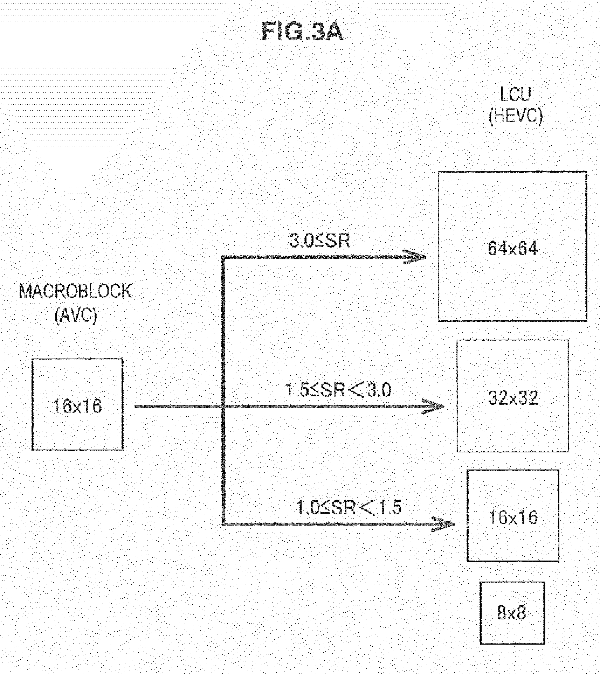

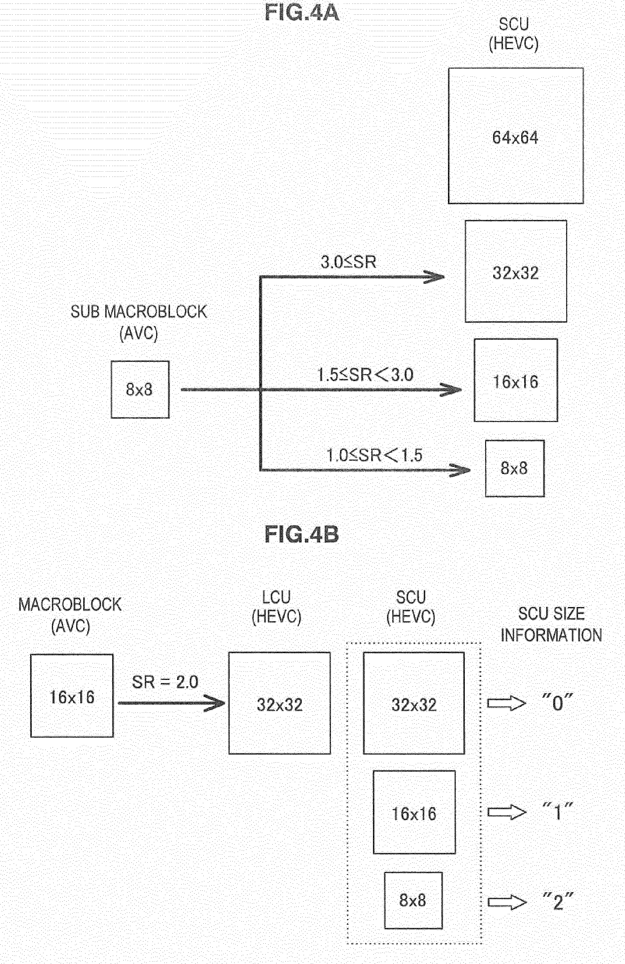

FIG. 3A is an explanatory view illustrating a first method of setting an LCU size of HEVC. In the first method, the LCU size is determined deterministically. On the left side of FIG. 3A, a macroblock having a block size of 16x16 pixels in AVC is shown. On the right side of FIG. 3A, 4 LCUs having 4 kinds of block sizes (64x64 pixels, 32x32 pixels, 16x16 pixels, and 8x8 pixels) available in HEVC are shown. For example, in the case of a scalability ratio "SR=2.0," a product of the macroblock size and the scalability ratio is "16x2.0=32." In this case, 32x32 pixels may be set deterministically as the LCU size in the enhancement layer. Likewise, in the case of "3.0≤SR," 64x64 pixels may be set deterministically as the LCU size. In the case of "1.5≤SR<3.0," 32x32 pixels may be set deterministically as the LCU size. In the case of "1.0≤SR<1.5," 16x16 pixels may be set deterministically as the LCU size. According to the first method, the LCU size can be determined in the enhancement layer without additionally encoding a parameter indicating the LCU size.

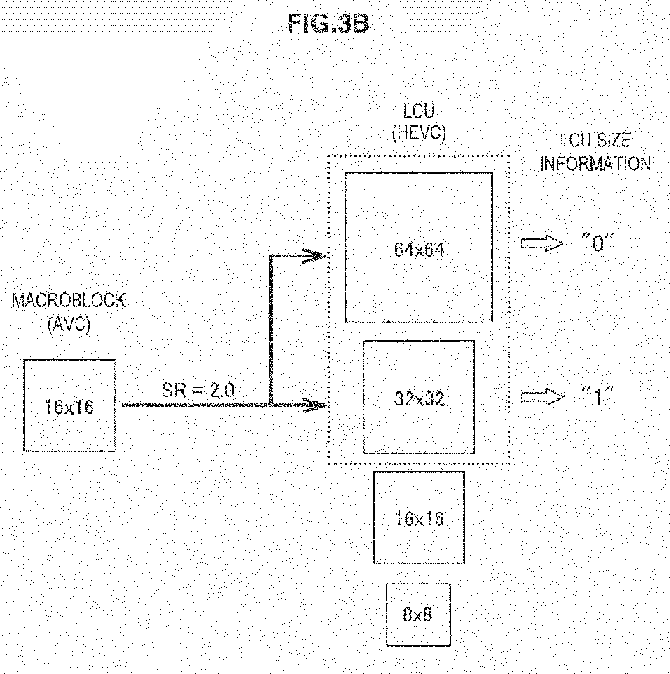

FIG. 3B is an explanatory view illustrating a second method of setting an LCU size of HEVC. In the second method, the LCU size is selected from at least one candidate of the size narrowed using a product of the macroblock size and the scalability ratio as a reference. For example, in the case of the scalability ratio "SR=2.0," a product of the macroblock size and the scalability ratio is "16x2.0=32." Thus, the LCU size in the enhancement layer is selected from 2 kinds of sizes equal to or greater than this product, i.e., 64x64 pixels and 32x32 pixels. For example, when it is preferable to set the CU broader than a region corresponding to the macroblock in the base layer, the LCU size of 64x64 pixels may be selected. Otherwise, the LCU size of 32x32 pixels may be selected. In the second method, a parameter (LCU size information) indicating the LCU size is generated additionally and the generated parameter is encoded in the enhancement layer. However, since the candidates of the selected LCU size are narrowed, the number of bits of the additionally encoded parameter is less than when all kinds of LCU sizes can be selected. In the example of FIG. 3B, the number of bits of the additionally encoded parameter is 1. For example, a parameter value "0" can indicate 64x64 pixels and a parameter value "1" can indicate 32x32 pixels (or vice versa). According to the second method, the encoding amount of a parameter indicating the LCU size can be reduced in the enhancement layer, while maintaining selection flexibility of the LCU size.

A method of narrowing the candidates of the LCU size is not limited to the method exemplified in FIG. 3B. For example, when the scalability ratio is not equal to a power of two, an LCU size identical to a product of the macroblock size and the scalability ratio is not available in HEVC. In this case, the candidates of the LCU size may be narrowed to the minimum size among the available LCU sizes greater than the foregoing product and the maximum size among the available LCU sizes less than the foregoing product. For example, in the case of the scalability ratio "SR=1.5," a product of the macroblock size and the scalability ratio is "16×1.5=24." Accordingly, the candidates of the LCU size may be narrowed to 2 kinds of sizes, i.e., 16x16 pixels and 32x32 pixels. In this case, a 1-bit parameter indicating which LCU size is selected is generated and the generated parameter is encoded. A decoder decodes this parameter and the LCU size is selected with reference to the decoded parameter. The same idea may also be applied to narrowness of an SCU size, a TU size, and a PU size to be described below.

An SCU size in the enhancement layer can be set to a value equal to or less than the LCU size so that desired block division can be performed. The SCU size may be determined without depending on the block size of the base layer. Instead, the SCU size may be determined according to a product of a sub macroblock size and the scalability ratio when the sub macroblock size is defined in the base layer.

FIG. 4A is an explanatory view illustrating a first method of setting an SCU size of HEVC. In a first method, the SCU size is determined deterministically. On the left side of FIG. 4A, a sub macroblock having a block size of 8x8 pixels in AVC is shown. On the right side of FIG. 4A, 4 SCUs having 4 kinds of block sizes (64x64 pixels, 32x32 pixels, 16x16 pixels, and 8x8 pixels) are shown. For example, in the case of a scalability ratio "SR=2.0," a product of the sub macroblock size and the scalability ratio is "8×2.0=16." In this case, 16×16 pixels may be set deterministically as the SCU size in the enhancement layer. Likewise, in the case of "3.0≤SR," 32x32 pixels may be set deterministically as the SCU size. In the case of "1.5≤SR<3.0," 32x32 pixels may be set deterministically as the SCU size. In the case of "1.0≤SR<1.5," 16x16 pixels may be set deterministically as the SCU size. According to the first method, the SCU size can be determined in the enhancement layer without additionally encoding a parameter indicating the SCU size.

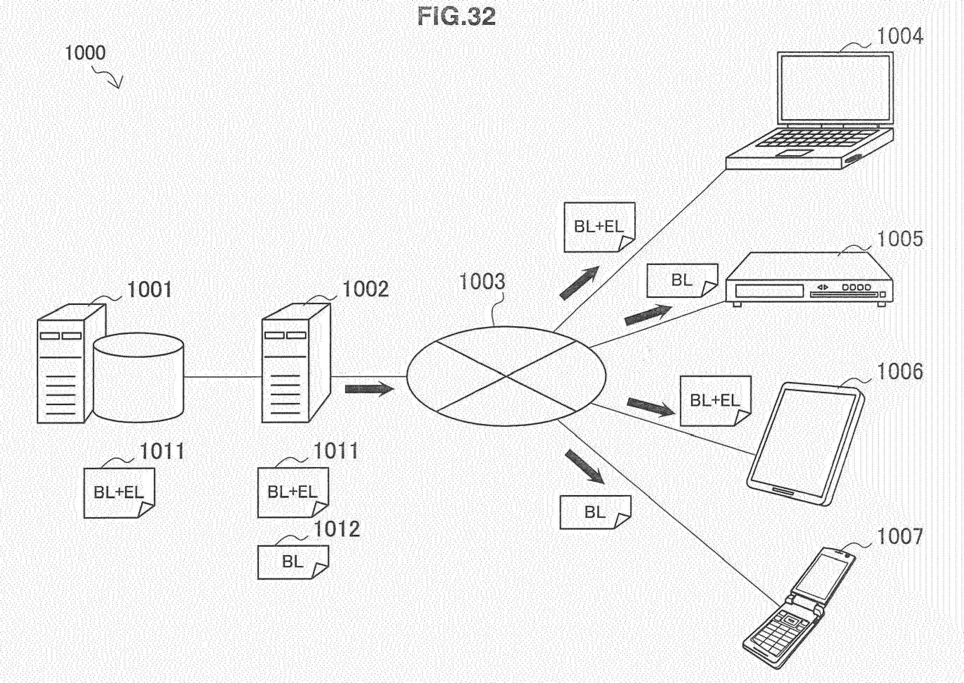

FIG. 4B is an explanatory view illustrating a second method of setting an SCU size of HEVC. In the second method, the SCU size is selected from a plurality of sizes equal to or less than the LCU size. For example, in FIG. 4B, 32x32 pixels are set as the LCU size. Accordingly, candidates of the SCU size can include 32x32 pixels, 16x16 pixels, and 8x8 pixels. For example, when it is preferable to enable more minute block division, a smaller SCU size may be selected. In the second method, a parameter (SCU size information) indicating the SCU size is additionally generated in the enhancement layer and the generated parameter is encoded. In the example of FIG. 4B, a parameter value "0" can indicate 32×32 pixels, a parameter value "1" can indicate 16×16 pixels, and a parameter value "2" can indicate 8x8 pixels.

The method of setting the LCU and the method of setting the SCU described in this section may be combined in any way.

### [1-3. Mapping in Transform Unit]

The basic idea of the mapping in the TU is similar to that of the mapping in the CU. In the technology in the present disclosure, a TU size set in the enhancement layer is determined according to the size of a transform block set in the base layer, i.e., a Discrete Cosine Transform (DCT) size.

In AVC, the DCT size of a transform block which is a processing unit of an orthogonal transform is selected from 8x8 pixels and 4x4 pixels. In HEVC, the size (i.e., the TU size) of a transform block which is a processing unit of an orthogonal transform is selected from 32x32 pixels, 16x16 pixels, 8x8 pixels, and 4x4 pixels. Of available sizes, the TU size actually set in the enhancement layer may be determined deterministically as a size which is the closest to a product of the scalability ratio and the DCT size set in the base layer. Instead, the actually set TU size may be selected from a plurality of sizes narrowed using the foregoing product as a reference.

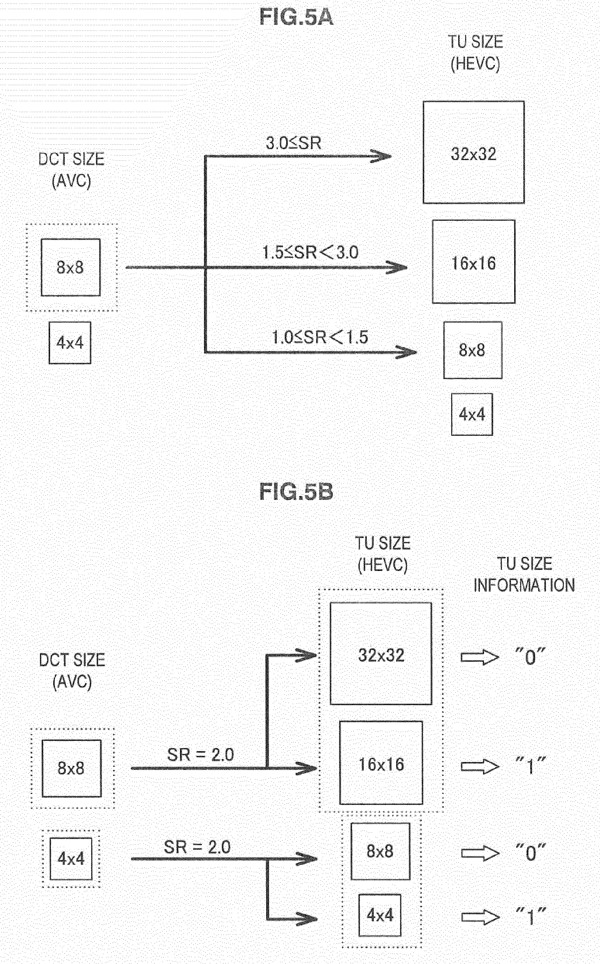

FIG. 5A is an explanatory view illustrating a first method of setting a TU size of HEVC. In the first method, the TU size is determined deterministically. On the left side of FIG. 5A, a dotted line range indicates that the DCT size of 8x8 pixels in AVC is set. On the right side of FIG. 5A, 4 TUs having 4 kinds of block sizes (32x32 pixels, 16x16 pixels, 8x8 pixels, and 4x4 pixels) available in HEVC are shown. For example, in the case of a scalability ratio "SR=2.0," a product of the DCT size and the scalability ratio is "8x2.0=16." In this case, 16×16 pixels may be set deterministically as the TU size in the enhancement layer. Likewise, in the case of "3.0≤SR," 32x32 pixels may be set deterministically as the TU size. In the case of "1.5≤SR<3.0," 16×16 pixels may be set deterministically as the TU size. In the case of "1.0≤SR<1.5," 8x8 pixels may be set deterministically as the TU size. According to the first method, the TU size can be determined in the enhancement layer without additionally encoding a parameter indicating the TU size.

FIG. 5B is an explanatory view illustrating a second method of setting a TU size of HEVC. In the second method, the TU size is selected from at least one candidate of the size narrowed using a product of the DCT size and the scalability ratio as a reference. For example, the scalability ratio "SR=2.0" is assumed and the DCT size set in the base layer is assumed to be 8x8 pixels. In this case, a product of the DCT size and the scalability ratio is "8×2.0=16." Here, when the fact that the DCT size smaller than 8x8 pixels in the base layer is not selected is considered, an adverse effect on the coding efficiency can be said not to occur despite exclusion of the DCT sizes smaller than 16×16 pixels from the candidates in the enhancement layer. Accordingly, in this case, the candidates of the TU size in the enhancement layer are narrowed to 2 kinds of sizes, i.e., 32x32 pixels and 16×16 pixels. Further, a parameter (TU size information) indicating the actually set TU size is generated additionally and the generated parameter is encoded in the enhancement layer. Likewise, for example, the scalability ratio "SR=2.0" is assumed and the DCT size set in the base layer is assumed to be 4x4 pixels. In this case, a product of the DCT size and the scalability ratio is "4x2.0=8.0." Here, when the fact that the DCT size greater than 4x4 pixels in the base layer is not selected is considered, an adverse effect on the coding efficiency can be said not to occur despite exclusion of the DCT sizes greater than 8x8 pixels from the candidates in the enhancement layer. Accordingly, in this case, the candidates of the TU size in the enhancement layer are narrowed to 2 kinds of sizes, i.e., 8x8 pixels and 4x4 pixels. Further, a parameter (TU size information) indicating the actually set TU size is generated additionally and the generated parameter is encoded in the enhancement layer. In any case, since the candidates of the TU size are narrowed, the number of bits of the additionally encoded parameter is less than when all kinds of TU sizes can be selected. According to the second method, the encoding amount of a parameter indicating the TU size can be reduced in the enhancement layer, while maintaining selection flexibility of the TU size.

### [1-4. Mapping in Prediction Unit]

The basic idea of the mapping in the PU is similar to that of the mapping in the TU. In the technology in the present disclosure, a PU size set in the enhancement layer is determined according to the size of a prediction block set in the base layer.

In AVC, the size of a prediction block (i.e., a prediction block size) which is a processing unit of prediction is selected from 16×16 pixels, 8x8 pixels, and 4x4 pixels for intra prediction. Non-square prediction block sizes, i.e., 8x16 pixels, 16x8 pixels, 4x8 pixels and 8x4 pixels, are also available for inter prediction (motion compensation). In HEVC, the size (i.e., a PU size) of a prediction block which is a processing unit of prediction is selected from 64x64 pixels, 32x32 pixels, 16x16 pixels, 8x8 pixels, and 4x4 pixels for the intra prediction. Non-square prediction block sizes are also available for the inter prediction (motion compensation). Of available sizes, the PU size actually set in the enhancement layer may be determined deterministically as a size which is the closest to a product of the scalability ratio and the prediction block size set in the base layer. Instead, the actually set PU size may be selected from a plurality of sizes narrowed using the foregoing product as a reference.

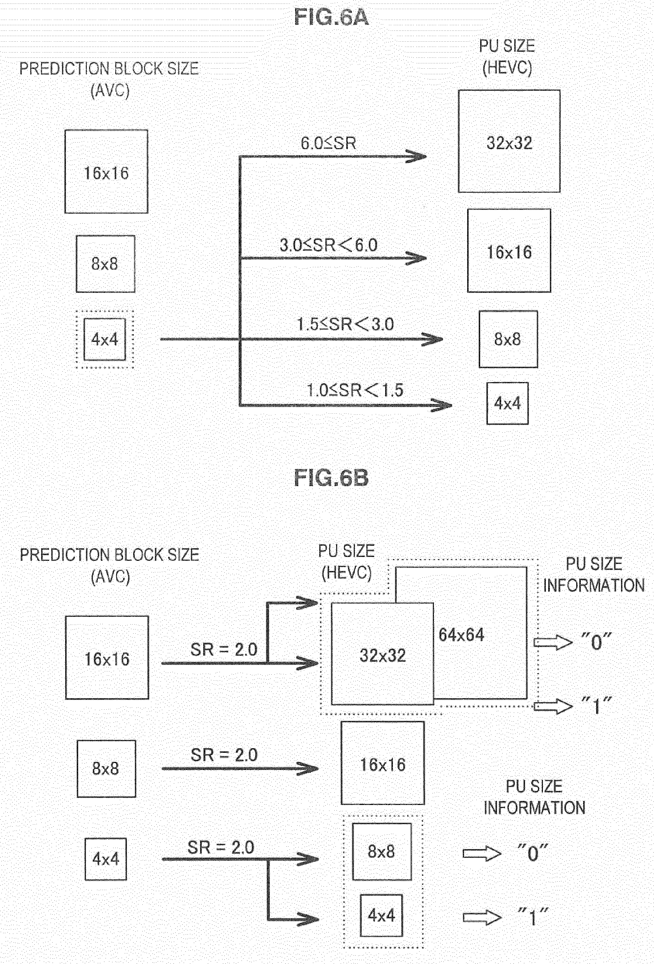

FIG. 6A is an explanatory view illustrating a first method of setting a PU size of HEVC. Here, for example, the intra prediction will be described. In the first method, the PU size is determined deterministically. On the left side of FIG. 6A, a dotted line range indicates that the prediction block size of 4x4 pixels in AVC is set. On the right side of FIG. 6A, 4 PUs having 4 kinds of PU sizes (32x32 pixels, 16x16 pixels, 8x8 pixels, and 4x4 pixels) are shown. For example, in the case of a scalability ratio "SR=2.0," a product of the prediction block size and the scalability ratio is "4x2.0=8.0." In this case, 8x8 pixels may be set deterministically as the PU size in the enhancement layer. Likewise, in the case of "6.0≤SR," 32×32 pixels may be set deterministically as the PU size. In the case of "3.0≤SR<6.0," 16×16 pixels may be set deterministically as the PU size. In the case of "1.5≤SR<3.0," 8x8 pixels may be set deterministically as the PU size. In the case of "1.0≤SR<1.5," 4x4 pixels may be set deterministically as the PU size. According to the first method, the PU size can be determined in the enhancement layer without additionally encoding a parameter indicating the PU size.

FIG. 6B is an explanatory view illustrating a second method of setting a PU size of HEVC. Here, for example, the intra prediction will be described. In the second method, the PU size is selected from at least one candidate of the size narrowed using a product of the prediction block size and the scalability ratio as a reference. For example, the scalability ratio "SR=2.0" is assumed and the prediction block size set in the base layer is assumed to be 16×16 pixels. In this case, a product of the prediction block size and the scalability ratio is "16x2.0=32." Here, when the fact that the prediction block sizes smaller than 16×16 pixels in the base layer are not selected is considered, an adverse effect on the coding efficiency can be said not to occur despite exclusion of the prediction block sizes smaller than 32x32 pixels from the candidates in the enhancement layer. Accordingly, in this case, the candidates of the PU size in the enhancement layer are narrowed to 2 kinds of sizes, i.e., 64x64 pixels and 32x32 pixels. Further, a parameter (PU size information) indicating the actually set PU size is generated additionally and the generated parameter is encoded in the enhancement layer. Likewise, for example, the scalability ratio "SR=2.0" is assumed and the prediction block size set in the base layer is assumed to be 4x4 pixels. In this case, a product of the prediction block size and the scalability ratio is "4x2.0=8.0." Here, when the fact that the prediction block size greater than 4x4 pixels in the base layer is not selected is considered, an adverse effect on the coding efficiency can be said not to occur despite exclusion of the prediction block sizes greater than 8x8 pixels from the candidates in the enhancement layer. Accordingly, in this case, the candidates of the PU size in the enhancement layer are narrowed to 2 kinds of sizes, i.e., 8x8 pixels and 4x4 pixels. Further, a parameter (PU size information) indicating the actually set PU size is generated additionally and the generated parameter is encoded in the enhancement layer. When the scalability ratio "SR=2.0" is set and the prediction block size set in the base layer is 8x8 pixels, the candidate of the PU size in the enhancement layer is only 16×16 pixels as the result of the narrowness. In this case, the PU size of 16×16 pixels may be inevitably set in the enhancement layer and the parameter indicating the PU size is not generated. In any case, since the candidates of the PU size are narrowed, the number of bits of the additionally encoded parameter is less than when all kinds of PU sizes can be selected. According to the second method, the encoding amount of a parameter indicating the PU size can be reduced in the enhancement layer, while maintaining selection flexibility of the PU size.

While the candidates of the available prediction block are different between the two methods described with reference to FIGS. 6A and 6B, the candidates may be used to set the PU of inter prediction of HEVC.

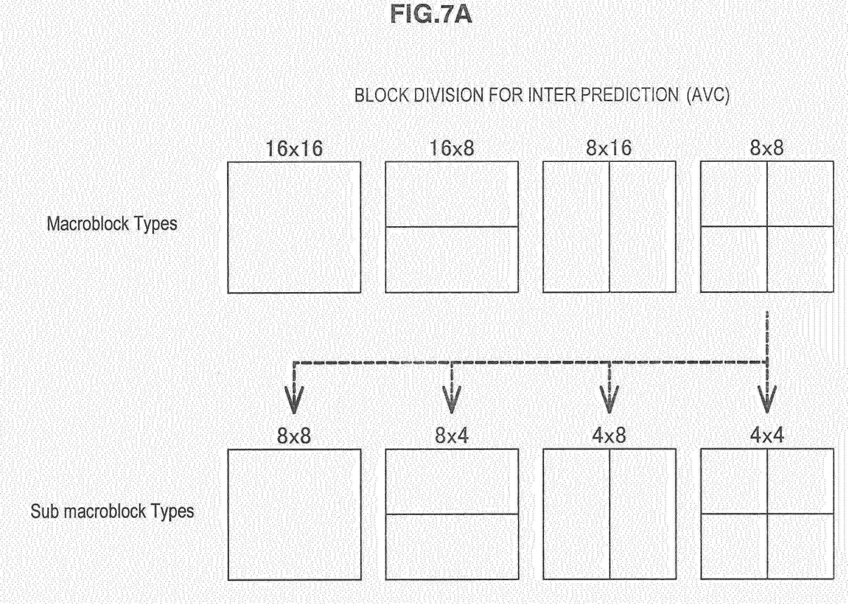

FIG. 7A is an explanatory view illustrating candidates of a prediction block size available in inter prediction of AVC. In AVC, when a prediction block with a size equal to or less than 8x8 pixels is used at the time of the inter prediction, i.e., division into sub macroblocks is used, a parameter which is a sub macroblock type indicating the shape and the size of a sub macroblock is encoded. Thus, in the enhancement layer, the candidates of the PU size may be narrowed according to whether the division into the sub macroblocks is used, i.e., the sub macroblock type is encoded.

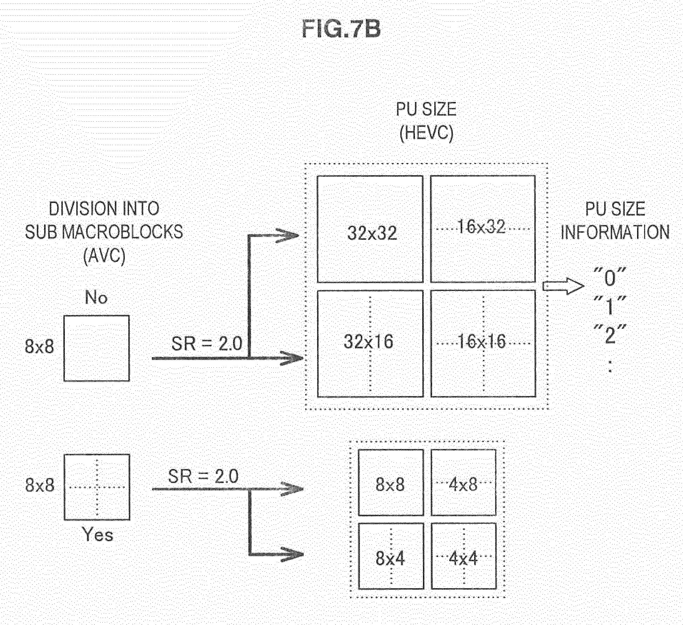

FIG. 7B is an explanatory view illustrating a third method of setting a PU size of inter prediction of HEVC. In the third method, the PU sizes are narrowed according to whether the sub macroblock type is encoded for a block corresponding to the base layer. For example, when the scalability ratio "SR=2.0" is set and the sub macroblock type is not encoded in the base layer, the candidates of the PU size in the enhancement layer are narrowed to sizes equal to or greater than 16×16 pixels. Further, a parameter (PU size information) indicating the actually set PU size is generated additionally and the generated parameter is encoded in the enhancement layer. Conversely, for example, when the scalability ratio "SR=2.0" is set and the sub macroblock type is encoded in the base layer, the candidates of the PU size in the enhancement layer are narrowed to sizes equal to or less than 8x8 pixels. Further, a parameter (PU size information) indicating the actually set PU size is generated additionally and the generated parameter is encoded in the enhancement layer. In any case, since the candidates of the PU size are narrowed, the number of bits of the additionally encoded parameter is less than when all kinds of PU sizes can be selected. According to the third method, the encoding amount of a parameter indicating the PU size can be reduced in the enhancement layer, while maintaining selection flexibility of the PU size.

### [1-5. Basic Configuration Example of Encoder]

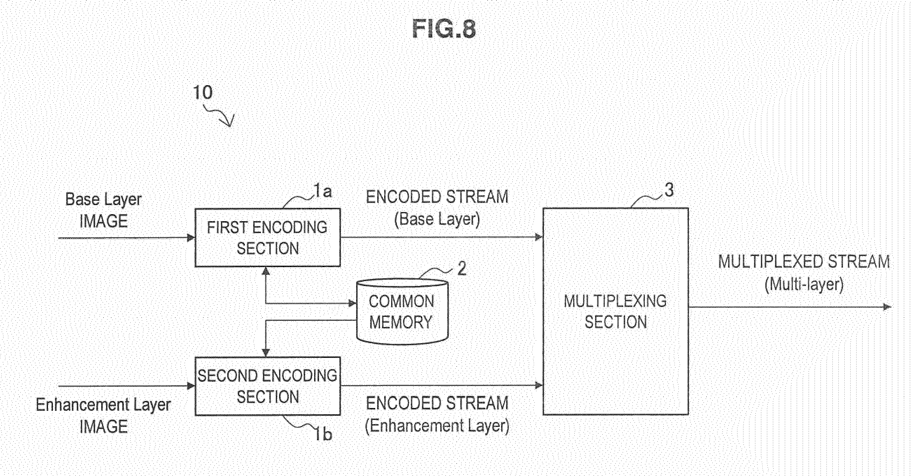

FIG. 8 is a block diagram showing a schematic configuration of an image encoding device 10 according to an embodiment supporting scalable video coding. Referring to FIG. 8, the image encoding device 10 includes a first encoding section 1a, a second encoding section 1b, a common memory 2, and a multiplexing section 3.

The first encoding section 1a encodes a base layer image to generate an encoded stream of the base layer. The second encoding section 1b encodes an enhancement layer image to generate an encoded stream of an enhancement layer. The common memory 2 stores information commonly used between layers. The multiplexing section 3 multiplexes an encoded stream of the base layer generated by the first encoding section 1a and an encoded stream of at least one enhancement layer generated by the second encoding section 1b to generate a multilayer multiplexed stream.

### [1-6. Basic Configuration Example of Decoder]

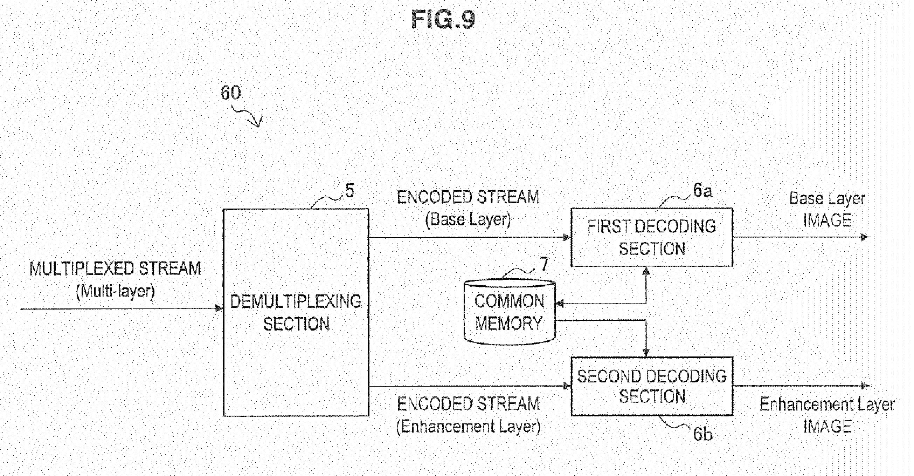

FIG. 9 is a block diagram showing a schematic configuration of an image decoding device 60 according to an embodiment supporting scalable video coding. Referring to FIG. 9, the image decoding device 60 includes a demultiplexing section 5, a first decoding section 6a, a second decoding section 6b, and a common memory 7.

The demultiplexing section 5 demultiplexes a multilayer multiplexed stream into an encoded stream of the base layer and an encoded stream of at least one enhancement layer. The first decoding section 6a decodes a base layer image from an encoded stream of the base layer. The second decoding section 6b decodes an enhancement layer image from an encoded stream of an enhancement layer. The common memory 7 stores information commonly used between layers.

In the image encoding device 10 illustrated in FIG. 8, the configuration of the first encoding section 1a to encode the base layer and that of the second encoding section 1b to encode an enhancement layer are similar to each other, although there is some differences in the image encoding systems. Some parameters generated or acquired by the first encoding section 1a are buffered by using the common memory 2 and reused by the second encoding section 1b. In the next section, such a configuration of the first encoding section 1a and the second encoding section 1b will be described in detail.

Similarly, in the image decoding device 60 illustrated in FIG. 9, the configuration of the first decoding section 6a to decode the base layer and that of the second decoding section 6b to decode an enhancement layer are similar to each other, although there is some differences in the image encoding systems. Some parameters generated or acquired by the first decoding section 6a are buffered by using the common memory 7 and reused by the second decoding section 6b. Further in the next section, such a configuration of the first decoding section 6a and the second decoding section 6b will be described in detail.

### <2. Configuration Example of Encoding Section According to Embodiment>

### [2-1. Overall Configuration]

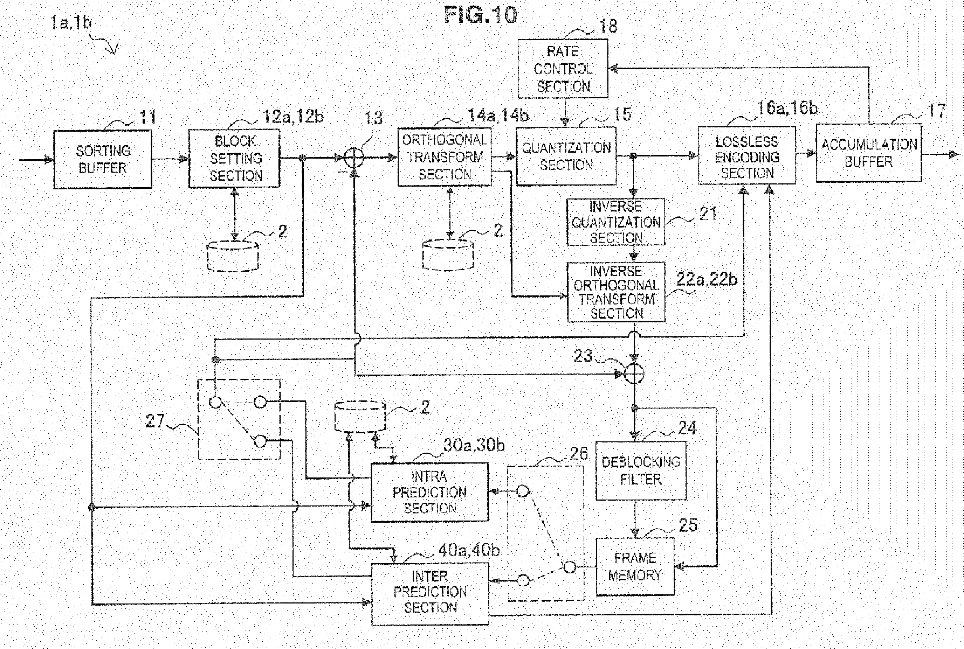

FIG. 10 is a block diagram showing an example of the configuration of the first encoding section 1a and the second encoding section 1b shown in FIG. 8. Referring to FIG. 10, the first encoding section 1a includes a sorting buffer 11, a block setting section 12a, a subtraction section 13, an orthogonal transform section 14a, a quantization section 15, a lossless encoding section 16a, an accumulation buffer 17, a rate control section 18, an inverse quantization section 21, an inverse orthogonal transform section 22a, an addition section 23, a deblocking filter 24, a frame memory 25, selectors 26 and 27, an intra prediction section 30a, and an inter prediction section 40a. The second encoding section 1b includes a block setting section 12b, an orthogonal transform section 14b, a lossless encoding section 16b, an inverse orthogonal transform section 22b, an intra prediction section 30b, and an inter prediction section 40b instead of the block setting section 12a, the orthogonal transform section 14a, the lossless encoding section 16a, the inverse orthogonal transform section 22a, the intra prediction section 30a, and the inter prediction section 40a

The sorting buffer 11 sorts the images included in the series of image data. After sorting the images according to a GOP (Group of Pictures) structure according to the encoding process, the sorting buffer 11 outputs the image data which has been sorted to the block setting section 12a or 12b.

The block setting section 12a sets at least one macroblock in the image data of the base layer input from the sorting buffer 11. For example, a macroblock size in AVC is defined as a fixed size and the macroblock size is stored in advance by the common memory 2. The block setting section 12a outputs the image data to the subtraction section 13, the intra prediction section 30a, and the inter prediction section 40a for each of the set macroblocks.

The block setting section 12b sets the LCU size and the SCU size for the image data of the enhancement layer input from the sorting buffer 11. The setting of the LCU size and the SCU size may be changed for each sequence. The block setting section 12b can determine the LCU size using the macroblock size and the scalability ratio stored by the common memory 2. The SCU size may be determined by further referring to the sub macroblock size stored by the common memory 2. Then, the block setting section 12b outputs the image data to the subtraction section 13, the intra prediction section 30b, and the inter prediction section 40b for each of the set LCUs.

The image data input from the block setting section 12a or 12b and predicted image data input by the intra prediction section 30a or 30b or the inter prediction section 40a or 40b described later are supplied to the subtraction section 13. The subtraction section 13 calculates predicted error data which is a difference between the image data input from the sorting buffer 12 and the predicted image data and outputs the calculated predicted error data to the orthogonal transform section 14a or 14b.

The orthogonal transform section 14a sets the transform block in the macroblock in regard to the predicted error data of the base layer input from the subtraction section 13 and performs the orthogonal transform on each of the set transform blocks. The orthogonal transform performed by the orthogonal transform section 14a may be, for example, a Discrete Cosine Transform (DCT). The size of the transform block set by the orthogonal transform section 14a is 8×8 pixels or 4x4 pixels. The orthogonal transform section 14a outputs transform coefficient data acquired through the orthogonal transform process for each transform block to the quantization section 15. The orthogonal transform section 14a causes the common memory 2 to buffer DCT size information indicating the size of each of the set transform blocks.

The orthogonal transform section 14b sets the TU in the LCU in regard to the predicted error data of the enhancement layer input from the subtraction section 13 and performs the orthogonal transform for each of the set TUs. The orthogonal transform performed by the orthogonal transform section 14b may also be a Discrete Cosine Transform (DCT). The size of the TU set by the orthogonal transform section 14b is 32x32 pixels, 16x16 pixels, 8x8 pixels, or 4x4 pixels. The orthogonal transform section 14b can determine the TU size to be set in the enhancement layer using the scalability ratio and the DCT size information of the base layer stored in the common memory 2. The orthogonal transform section 14b outputs transform coefficient data acquired through the orthogonal transform process for each TU to the quantization section 15.

The transform coefficient data input from the orthogonal transform section 14a or 14b and a rate control signal from the rate control section 18 described later are supplied to the quantization section 15. The quantization section 15 quantizes the transform coefficient data, and outputs the transform coefficient data which has been quantized (hereinafter, referred to as quantized data) to the lossless encoding section 16a or 16b and the inverse quantization section 21. Also, the quantization section 15 switches a quantization parameter (a quantization scale) based on the rate control signal from the rate control section 18 to thereby change the bit rate of the quantized data.

The lossless encoding section 16a performs a lossless encoding process on the quantized data of the base layer input from the quantization section 15 to generate an encoded stream of the base layer. The lossless encoding section 16a encodes information regarding various block sizes set in the base layer and multiplexes the encoded parameter in a header region of the encoded stream. The information encoded herein can include, for example, the DCT size information, information regarding the intra prediction, and information regarding the inter prediction. Then, the lossless encoding section 16a outputs the generated encoded stream to the accumulation buffer 17.

The lossless encoding section 16b performs a lossless encoding process on the quantized data of the enhancement layer input from the quantization section 15 to generate an encoded stream of the enhancement layer. The lossless encoding section 16b encodes information regarding various block sizes set in the enhancement layer and multiplexes the encoded parameter in a header region of the encoded stream. The information encoded herein can include, for example, the scalability ratio, the block size information, a division flag (split_flag) indicating the block splitting in each LCU, the information regarding the intra prediction, and the information regarding the inter prediction. Then, the lossless encoding section 16b outputs the generated encoded stream to the accumulation buffer 17.

The accumulation buffer 17 temporarily accumulates an encoded stream of the base layer input from the lossless encoding section 16a and an encoded stream of the enhancement layer input from the lossless encoding section 16b using a storage medium such as a semiconductor memory. Then, the accumulation buffer 17 outputs the accumulated encoded stream to a transmission section (not shown) (for example, a communication interface or an interface to peripheral devices) at a rate in accordance with the band of a transmission path.

The rate control section 18 monitors the free space of the accumulation buffer 17. Then, the rate control section 18 generates a rate control signal according to the free space on the accumulation buffer 17, and outputs the generated rate control signal to the quantization section 15. For example, when there is not much free space on the accumulation buffer 17, the rate control section 18 generates a rate control signal for lowering the bit rate of the quantized data. Also, for example, when the free space on the accumulation buffer 17 is sufficiently large, the rate control section 18 generates a rate control signal for increasing the bit rate of the quantized data.

The inverse quantization section 21 performs an inverse quantization process on the quantized data input from the quantization section 15. Then, the inverse quantization section 21 outputs transform coefficient data acquired by the inverse quantization process to the inverse orthogonal transform section 22a or 22b.

The inverse orthogonal transform section 22a performs an inverse orthogonal transform process on the transform coefficient data of the base layer input from the inverse quantization section 21 for each transform block set by the orthogonal transform section 14a to restore the predicted error data. Then, the inverse orthogonal transform section 22a outputs the restored predicted error data to the addition section 23.

The inverse orthogonal transform section 22b performs an inverse orthogonal transform process on the transform coefficient data of the enhancement layer input from the inverse quantization section 21 for each TU set by the orthogonal transform section 14b to restore the predicted error data. Then, the inverse orthogonal transform section 22b outputs the restored predicted error data to the addition section 23.

The addition section 23 adds the restored predicted error data input from the inverse orthogonal transform section 22a or 22b and the predicted image data input from the intra prediction section 30a or 30b or the inter prediction section 40a or 40b to thereby generate decoded image data (so-called reconstructed image). Then, the addition section 23 outputs the generated decoded image data to the deblocking filter 24 and the frame memory 25.

The deblocking filter 24 performs a filtering process for reducing block distortion occurring at the time of encoding of an image. The deblocking filter 24 filters the decoded image data input from the addition section 23 to remove the block distortion, and outputs the decoded image data after filtering to the frame memory 25.

The frame memory 25 stores, using a storage medium, the decoded image data input from the addition section 23 and the decoded image data after filtering input from the deblocking filter 24.

The selector 26 reads the decoded image data before filtering which is to be used for intra prediction from the frame memory 25, and supplies the decoded image data which has been read to the intra prediction section 30a or 30b as reference image data. Also, the selector 26 reads the decoded image data after filtering which is to be used for inter prediction from the frame memory 25, and supplies the decoded image data which has been read to the inter prediction section 40a or 40b as reference image data.

In the inter prediction mode, the selector 27 outputs predicted image data as a result of intra prediction output from the intra prediction section 30a or 30b to the subtraction section 13 and also outputs information about the intra prediction to the lossless encoding section 16a or 16b. In the inter prediction mode, the selector 27 outputs predicted image data as a result of inter prediction output from the inter prediction section 40a or 40b to the subtraction section 13 and also outputs information about the inter prediction to the lossless encoding section 16a or 16b. The selector 27 switches the intra prediction mode and the inter prediction mode in accordance with the magnitude of a cost function value.

The intra prediction section 30a performs an intra prediction process for each prediction block of AVC based on the original image data and the decoded image data of the base layer. For example, the intra prediction section 30a sets the prediction block in the macroblock and performs the intra prediction for each of the set prediction blocks. The size of the prediction block set by the intra prediction section 30a is 16x16 pixels, 8×8 pixels, or 4x4 pixels. Then, the intra prediction section 30a evaluates prediction results in each prediction mode using a predetermined cost function. Next, the intra prediction section 30a selects the prediction mode in which the cost function value is minimum, that is, the compression rate is the highest as the optimum prediction mode. Also, the intra prediction section 30a generates predicted image data of the base layer according to the optimum prediction mode. Then, the intra prediction section 30a outputs information about the intra prediction including prediction mode information indicating the selected optimum prediction mode, the cost function value, and predicted image data to the selector 27. The intra prediction section 30a causes the common memory 2 to buffer prediction block size information.

The intra prediction section 30b performs the intra prediction process for each PU of HEVC based on the original image data and the decoded image data of the enhancement layer. For example, the intra prediction section 30b sets the PU in the LCU and performs the intra prediction for each of the set PUs. The size of the PU set by the intra prediction section 30b is 64x64 pixels, 32x32 pixels, 16x16 pixels, 8×8 pixels, or 4x4 pixels. The intra prediction section 30b can determine the PU size to be set in the enhancement layer using the prediction block size information and the scalability ratio of the base layer stored by the common memory 2. Next, the intra prediction section 30b evaluates the prediction result in each prediction mode using a predetermined cost function. Next, the intra prediction section 30b selects a prediction mode in which a cost function value is the minimum, i.e., a prediction mode in which a compression ratio is the highest, as an optimum prediction mode. The intra prediction section 30b generates the predicted image data of the enhancement layer according to the optimum prediction mode. Then, the intra prediction section 30b outputs information regarding the intra prediction including the prediction mode information indicating the selected optimum prediction mode, the cost function value, and the predicted image data to the selector 27.

The inter prediction section 40a performs an inter prediction process (motion searching process) for each prediction block of AVC based on the original image data and the decoded image data of the base layer. For example, the inter prediction section 40a sets the prediction block in the macroblock and performs the inter prediction for each of the set prediction blocks. The size of the prediction block set by the inter prediction section 40a is one of the 7 kinds of sizes shown in FIG. 7A. Next, the inter prediction section 40a evaluates the prediction result in each prediction mode using a predetermined cost function. Next, the inter prediction section 40a selects a prediction mode in which a cost function value is the minimum, i.e., a prediction mode in which a compression ratio is the highest, as an optimum prediction mode. The inter prediction section 40a generates the predicted image data of the base layer according to the optimum prediction mode. Then, the inter prediction section 40a outputs information regarding the inter prediction including motion information corresponding to the selected optimum prediction mode, the cost function value, and the predicted image data to the selector 27. Next, the inter prediction section 40a causes the common memory 2 to buffer the prediction block size information. The prediction block size information can include the sub macroblock type.

The inter prediction section 40b performs an inter prediction process (motion searching process) for each PU of HEVC based on the original image data and the decoded image data of the enhancement layer. For example, the inter prediction section 40b sets the PU in the LCU and performs the inter prediction for each of the set PUs. The inter prediction section 40b can determine the PU size to be set in the enhancement layer using the prediction block size information and the scalability ratio of the base layer stored by the common memory 2. Next, the inter prediction section 40b evaluates the prediction result in each prediction mode using a predetermined cost function. Next, the inter prediction section 40b selects a prediction mode in which a cost function value is the minimum, i.e., a prediction mode in which a compression ratio is the highest, as an optimum prediction mode. The inter prediction section 40b generates the predicted image data of the enhancement layer according to the optimum prediction mode. Then, the inter prediction section 40b outputs information regarding the inter prediction including motion information corresponding to the selected optimum prediction mode, the cost function value, and the predicted image data to the selector 27.

The first encoding section 1a performs a series of encoding processes described here on a sequence of image data of the base layer. The second encoding section 1b performs a series of encoding processes described here on a sequence of image data of an enhancement layer. When a plurality of enhancement layers is present, the encoding process of the enhancement layer may be repeated as many times as the number of enhancement layers.

### [2-2. Detailed Configuration of Block Setting Section]

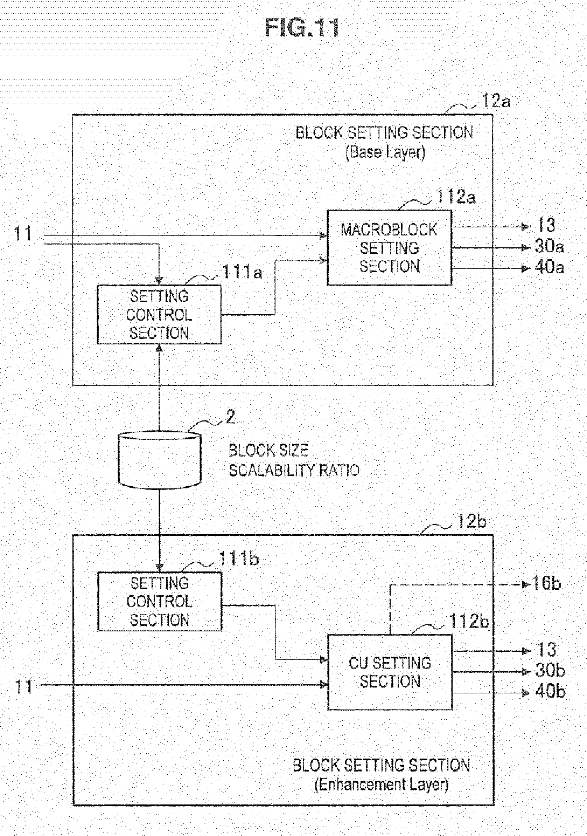

FIG. 11 is a block diagram showing an example of the detailed configurations of the block setting sections 12a and 12b shown in FIG. 10. Referring to FIG. 11, the block setting section 12a includes a setting control section 111a and a macroblock setting section 112a. The block setting section 12b includes a setting control section 111b and a CU setting section 112b.

### (1) Block Setting Process of Base Layer

The setting control section 111a of the block setting section 12a acquires a fixed macroblock size stored in advance by the common memory 2 and instructs the macroblock setting section 112a to set the macroblock with the acquired size.

The macroblock setting section 112a sets at least one macroblock in the image data of the base layer in response to the instruction from the setting control section 111a. Then, the macroblock setting section 112a outputs the image data for each of the set macroblocks to the subtraction section 13, the intra prediction section 30a, and the inter prediction section 40a.

### (2) Block Setting Process of Enhancement Layer

The setting control section 111b of the block setting section 12b acquires the macroblock size stored by the common memory 2 and the scalability ratio between the base layer and the enhancement layer. The scalability ratio may be stored in advance by the common memory 2 or may be calculated from resolution data of two layers. Then, the setting control section 111b instructs the CU setting section 112b to set the LCU size and the SCU size determined using the macroblock size and the scalability ratio.

The CU setting section 112b sets the LCU size and the SCU size in the enhancement layer in response to the instruction from the setting control section 111b. The CU setting section 112b may deterministically determine the LCU size by multiplying the macroblock size by the scalability ratio according to the first method described with reference to FIG. 3A. Instead, the CU setting section 112b may determine, as the LCU size, the size selected from the plurality of size candidates narrowed using a product of the macroblock size and the scalability ratio as a reference according to the second method described with reference to FIG. 3B. In the latter case, the CU setting section 112b generates LCU size information indicating the selected LCU size.

The CU setting section 112b may deterministically determine the SCU size by multiplying the sub macroblock size stored in advance by the common memory 2 by the scalability ratio according to the first method described with reference to FIG. 4A. Instead, the CU setting section 112b may determine, as the SCU size, the size selected from the plurality of size candidates equal to or less than the LCU size according to the second method described with reference to FIG. 4B. In the latter case, the CU setting section 112b generates SCU size information indicating the selected SCU size.

Then, the CU setting section 112b outputs the image data for each LCU to the subtraction section 13, the intra prediction section 30b, and the inter prediction section 40b. Further, when generating the LCU size information or the SCU size information, the macroblock setting section 112b outputs the generated size information to the lossless encoding section 16b.

### [2-3. Detailed Configuration of Orthogonal Transform Section]

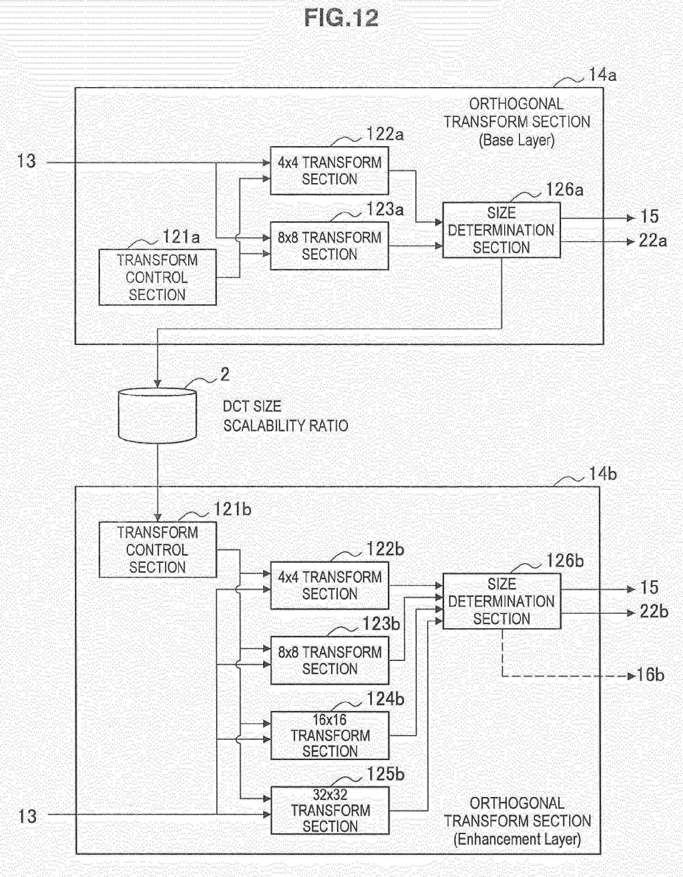

FIG. 12 is a block diagram showing an example of the detailed configurations of the orthogonal transform sections 14a and 14b shown in FIG. 10. Referring to FIG. 12, the orthogonal transform section 14a includes a transform control section 121a, a 4x4 transform section 122a, an 8x8 transform section 123a, and a size determination section 126a. The orthogonal transform section 14b includes a transform control section 121b, a 4x4 transform section 122b, an 8x8 transform section 123b, a 16×16 transform section 124b, a 32x32 transform section 125b, and a size determination section 126b.

### (1) Orthogonal Transform Process of Base Layer

The transform control section 121a of the orthogonal transform section 14a sets the transform block of 4x4 pixels in the macroblock in regard to the predicted error data of the base layer and causes the 4x4 transform section 122a to perform the orthogonal transform for each of the set transform blocks. Likewise, the transform control section 121a sets the transform block of 8x8 pixels in the macroblock and causes the 8x8 transform section 123a to perform the orthogonal transform for each of the set transform blocks. The transform control section 121a causes the size determination section 126a to determine the optimum DCT size.

The 4x4 transform section 122a performs a 2-dimensional DCT of 4x4 pixels on the predicted error data for each transform block set by the transform control section 121a. Then, the 4x4 transform section 122a outputs the transform coefficient data to the size determination section 126a. The 8x8 transform section 123a performs a 2-dimensional DCT of 8x8 pixels on the predicted error data for each transform block set by the transform control section 121a. Then, the 8x8 transform section 123a outputs the transform coefficient data to the size determination section 126a.

The size determination section 126a determines the optimum DCT size based on the transform coefficient data input from the 4x4 transform section 122a and the 8x8 transform section 123a and outputs the transform coefficient data corresponding to the optimum DCT size to the quantization section 15. Further, the size determination section 126a outputs DCT size information indicating the optimum DCT size to the lossless encoding section 16a and the inverse orthogonal transform section 22a and causes the common memory 2 to buffer the DCT size information.

### (2) Orthogonal Transform Process of Enhancement Layer

The transform control section 121b of the orthogonal transform section 14b acquires the scalability ratio and the DCT size information stored by the common memory 2. Then, the transform control section 121b sets the TU with at least one size determined using the DCT size and the scalability ratio in the LCU.

For example, the transform control section 121b sets the TU with the size deterministically determined by multiplying the DCT size by the scalability ratio according to the first method described with reference to FIG. 5A in the LCU of the enhancement layer. Then, the transform control section 121b causes the transform section corresponding to the determined TU size among the 4x4 transform section 122b, the 8x8 transform section 123b, the 16x16 transform section 124b, and the 32x32 transform section 125b to perform the orthogonal transform on the predicted error data.

Instead, the transform control section 121b sets the TU with each of at least one TU size narrowed using the product of the DCT size and the scalability ratio as the reference according to the second method described with reference to FIG. 5B in the LCU. Then, the transform control section 121b causes the corresponding transform section among the 4x4 transform section 122b, the 8x8 transform section 123b, the 16×16 transform section 124b, and the 32x32 transform section 125b to perform the orthogonal transform on the predicted error data. When the second method is adopted, the transform control section 121b causes the size determination section 126b to determine the optimum TU size.

The 4x4 transform section 122b performs a 2-dimensional DCT of 4x4 pixels on the predicted error data. The 8x8 transform section 123b performs a 2-dimensional DCT of 8x8 pixels on the predicted error data. The 16x16 transform section 124b performs a 2-dimensional DCT of 16x16 pixels on the predicted error data. The 32x32 transform section 125b performs a 2-dimensional DCT of 32x32 pixels on the predicted error data.

When the plurality of TU sizes are set for the predicted error data located at the same position by the transform control section 121b, the size determination section 126b determines the optimum TU size based on the transform coefficient data input from the plurality of corresponding transform sections. Then, the size determination section 126b outputs the transform coefficient data corresponding to the optimum TU size to the quantization section 15. Further, the size determination section 126b outputs the TU size information indicating the optimum TU size to the lossless encoding section 16b and the inverse orthogonal transform section 22b.

### [2-4. Detailed Configuration of Intra Prediction Section]

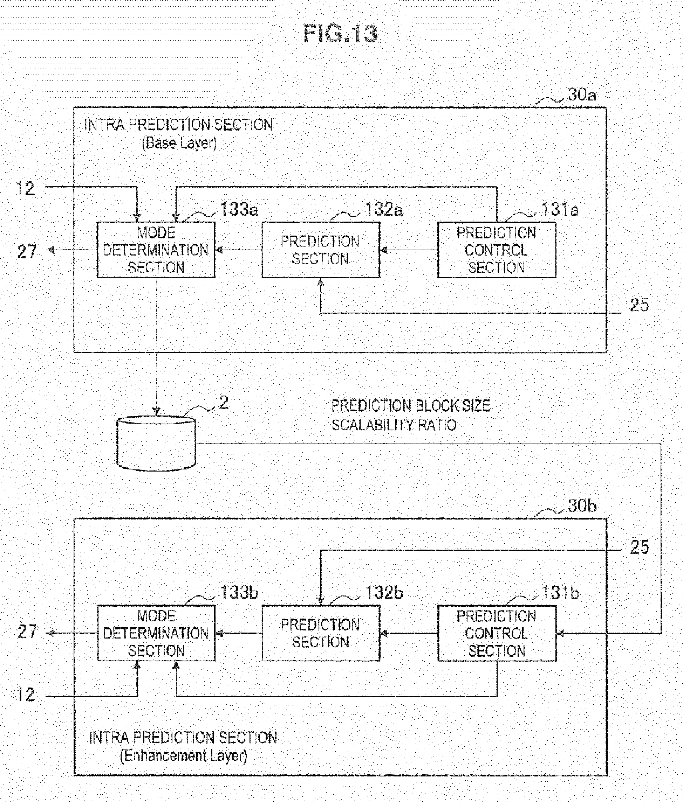

FIG. 13 is a block diagram showing an example of the detailed configurations of the intra prediction sections 30a and 30b shown in FIG. 10. Referring to FIG. 13, the intra prediction section 30a includes a prediction control section 131a, a prediction section 132a, and a mode determination section 133a. The intra prediction section 30b includes a prediction control section 131b, a prediction section 132b, and a mode determination section 133b.

### (1) Intra Prediction Process of Base Layer

The prediction control section 131a of the intra prediction section 30a controls the intra prediction process of the base layer. More specifically, the prediction control section 131a sets the prediction blocks with various sizes in the macroblock of the base layer and causes the prediction section 132a to perform the intra prediction in various prediction modes. Then, the prediction control section 131a causes the mode determination section 133a to determine the optimum prediction block size and prediction mode.

The prediction section 132a generates the predicted image data using the decoded image data input from the frame memory 25 in the various prediction modes (for example, DC prediction, horizontal prediction, vertical prediction, and planar prediction) for each of the prediction blocks set by the prediction control section 131a. Then, the prediction section 132a outputs the generated predicted image data to the mode determination section 133a.

The mode determination section 133a calculates a cost function value by comparing the predicted image data input from the prediction section 132a to the original image data and selects a combination of the prediction block size and the prediction mode in which the cost function value is the minimum. Then, the mode determination section 133a outputs information regarding the intra prediction including prediction mode information indicating the combination of the optimum prediction block size and the prediction mode, the cost function value, and the predicted image data to the selector 27. Further, the mode determination section 133a causes the common memory 2 to buffer the prediction block size information.

### (2) Intra Prediction Process of Enhancement Layer

The prediction control section 131b of the intra prediction section 30b controls the intra prediction process of the enhancement layer. More specifically, the prediction control section 131b sets at least one PU in the LCU of the enhancement layer and causes the prediction section 132b to perform the intra prediction in various prediction modes. Then, the prediction control section 131b causes the mode determination section 133b to determine the optimum prediction mode.

To determine the PU size, the prediction control section 131b acquires the scalability ratio and the prediction block size information of the base layer stored by the common memory 2. Then, the prediction control section 131b determines the PU size to be set in the LCU using the prediction block size and the scalability ratio.

For example, the prediction control section 131b may set the PU with the PU size determined deterministically by multiplying the prediction block size by the scalability ratio in the LCU according to the first method described with reference to FIG. 6A. Instead, the prediction control section 131b may set the PU with at least one PU size narrowed using the product of the prediction block size and the scalability ratio as the reference in the LCU according to the second method described with reference to FIG. 6B.

The prediction section 132b generates the predicted image data using the decoded image data input from the frame memory 25 in the various prediction modes (for example, DC prediction, angle prediction, planar prediction, and luminance base color difference prediction) for each PU set by the prediction control section 131b. Then, the prediction section 132b outputs the generated predicted image data to the mode determination section 133b.

The mode determination section 133b calculates a cost function value by comparing the predicted image data input from the prediction section 132b to the original image data and selects a combination of the PU size and the prediction mode in which the cost function value is the minimum. Then, the mode determination section 133b outputs information regarding the intra prediction including prediction mode information, the cost function value, and the predicted image data to the selector 27. When the plurality of PU sizes are set by the prediction control section 131b, information generated by the mode determination section 133b can include the PU size information exemplified in FIG. 6B.

### [2-5. Detailed Configuration of Inter Prediction Section]

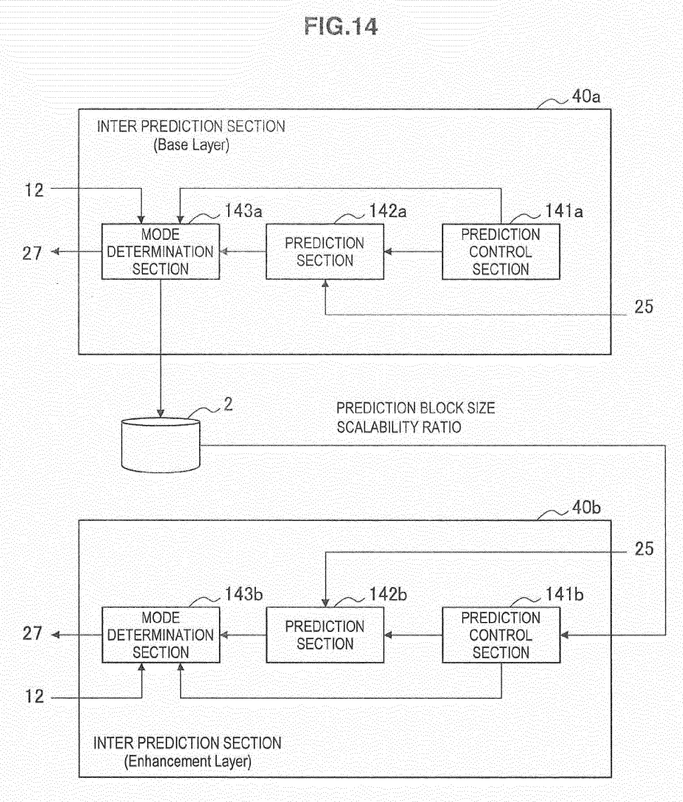

FIG. 14 is a block diagram showing an example of the detailed configurations of the inter prediction sections 40a and 40b shown in FIG. 10. Referring to FIG. 14, the inter prediction section 40a includes a prediction control section 141a, a prediction section 142a, and a mode determination section 143a. The inter prediction section 40b includes a prediction control section 141b, a prediction section 142b, and a mode determination section 143b.

### (1) Inter Prediction Process of Base Layer

The prediction control section 141a of the inter prediction section 40a controls the inter prediction process of the base layer. More specifically, the prediction control section 141a sets the prediction blocks with various sizes in the macroblock of the base layer. The prediction control section 141a sets a reference image in each prediction block. The prediction control section 141a causes the prediction section 142a to perform the inter prediction in various prediction modes. The prediction control section 141a causes the mode determination section 143a to determine the optimum prediction block size and prediction mode.

The prediction section 142a calculates a motion vector for each prediction block set by the prediction control section 141a and generates the predicted image data using the calculated motion vector and the reference image data. Then, the prediction section 142a outputs motion vector information and the predicted image data to the mode determination section 143a.

The mode determination section 143a calculates a cost function value by comparing the predicted image data input from the prediction section 142a to the original image data and selects a combination of the prediction block size and the prediction mode in which the cost function value is the minimum. The mode determination section 143a generates prediction block size information, prediction mode information, and motion information (motion vector information and reference image information) according to the selected optimum combination. The mode determination section 143a outputs the information regarding the inter prediction, the cost function value, and the predicted image data to the selector 27. The mode determination section 143a causes the common memory 2 to buffer the prediction block size information (which can include the sub macroblock type).

### (2) Inter Prediction Process of Enhancement Layer

The prediction control section 141b of the inter prediction section 40b controls the inter prediction process of the enhancement layer. More specifically, the prediction control section 141b sets at least one PU in the LCU of the enhancement layer and causes the prediction section 142b to perform the inter prediction. Then, the prediction control section 141b causes the mode determination section 143b to determine the optimum prediction mode.

To determine the PU size, the prediction control section 141b acquires the scalability ratio and the prediction block size information of the base layer stored by the common memory 2. Then, the prediction control section 141b determines the PU size to be set in the LCU using the prediction block size and the scalability ratio.

For example, the prediction control section 141b may set the PU with the PU size determined deterministically by multiplying the prediction block size by the scalability ratio in the LCU. Instead, the prediction control section 141b may set the PU with at least one PU size narrowed using the product of the prediction block size and the scalability ratio as the reference in the LCU. The prediction control section 141b may, in the LCU, set the PU with at least one PU size narrowed according to whether the sub macroblock type is present in regard to the corresponding prediction block in the base layer.

The prediction section 142b calculates a motion vector for each PU set by the prediction control section 141b and generates the predicted image data using the calculated motion vector and the reference image data. Then, the prediction section 142b outputs motion vector information and the predicted image data to the mode determination section 143b.

The mode determination section 143b calculates a cost function value by comparing the predicted image data input from the prediction section 142b to the original image data and selects a combination of the PU size and the prediction mode in which the cost function value is the minimum. The mode determination section 143b generates prediction mode information and motion information according to the selected optimum combination. The mode determination section 143b outputs the information regarding the inter prediction, the cost function value, and the predicted image data to the selector 27. When the plurality of PU sizes are set by the prediction control section 141b, the information generated by the mode determination section 143b can include the PU size information indicating the PU size selected from the narrowed PU sizes.

### <3. Process Flow at Time of Encoding According to Embodiment>

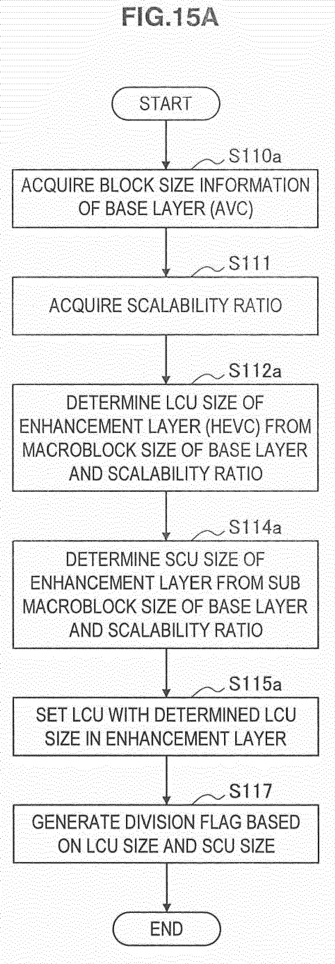

Next, process flows at the time of the encoding according to an embodiment will be described with reference to FIGS. 15A to 18B. For the sake of brevity of description, description of processes not directly relevant to the technology in the present disclosure will be omitted.

### [3-1. Block Setting Process]

### (1) First Example

FIG. 15A is a flow chart showing a first example of the flow of the block setting process in the enhancement layer at the time of the encoding. The block setting process shown in FIG. 15A is a process according to a combination of the first method of setting the LCU size, as described with reference to FIG. 3A, and the first method of setting the SCU size, as described with reference to FIG. 4A.

Referring to FIG. 15A, the setting control section 111b of the block setting section 12b for the enhancement layer first acquires the block size information indicating the macroblock size and the sub macroblock size of the base layer from the common memory 2 (step S110a). Next, the setting control section 111b acquires the scalability ratio between the base layer and the enhancement layer (step S111).

Next, the CU setting section 112b deterministically determines the LCU size of the enhancement layer by multiplying the macroblock size indicated by the block size information by the scalability ratio (step S112a). The CU setting section 112b deterministically determines the SCU size of the enhancement layer by multiplying the sub macroblock size indicated by the block size information by the scalability ratio (step S114a).

Next, the CU setting section 112b sets the LCU with the LCU size determined in step S112a in the enhancement layer (step S115a). The block division into the CUs from each LCU can be determined according to the results of the orthogonal transform, the intra prediction, and the inter prediction. The lossless encoding section 16b generates a division flag indicating the block division based on the LCU size and the SCU size determined by the CU setting section 112b (step S117).

### (2) Second Example

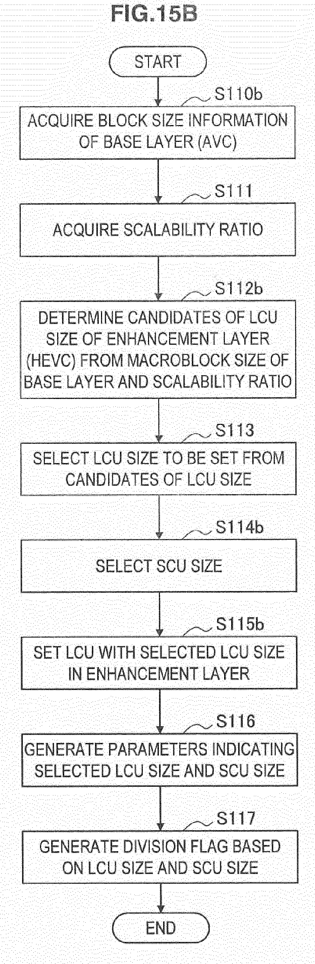

FIG. 15B is a flow chart showing a second example of the flow of the block setting process in an enhancement layer at the time of the encoding. The block setting process shown in FIG. 15B is a process according to a combination of the second method of setting the LCU size described with reference to FIG. 3B and the second method of setting the SCU size described with reference to FIG. 4B.

Referring to FIG. 15B, the setting control section 111b of the block setting section 12b for the enhancement layer first acquires the block size information indicating the macroblock size of the base layer from the common memory 2 (step S110b). Next, the setting control section 111b acquires the scalability ratio between the base layer and the enhancement layer (step S111).

Next, the CU setting section 112b determines at least one candidate of the LCU size of the enhancement layer using the product of the macroblock size and the scalability ratio as the reference (step S112b). Next, the CU setting section 112b selects the LCU size to be set from the narrowed candidates of the LCU size (step S113). Then, the CU setting section 112b selects the SCU size to be set from at least one candidate of the SCU size equal to or less than the LCU size selected in step S113 (step S114b).

Next, the CU setting section 112b sets the LCU with the LCU size selected in step S113 in the enhancement layer (step S115b). Then, the CU setting section 112b generates the parameter indicating the selected LCU size and SCU size (step S116). The parameter generated herein is encoded by the lossless encoding section 16b and is inserted into, for example, the SPS.

The block division into the CUs from each LCU can be determined according to the results of the orthogonal transform, the intra prediction, and the inter prediction. The lossless encoding section 16b generates a division flag indicating the block division based on the LCU size and the SCU size selected by the CU setting section 112b (step S117).

### [3-2. Orthogonal Transform Process]

### (1) First Example

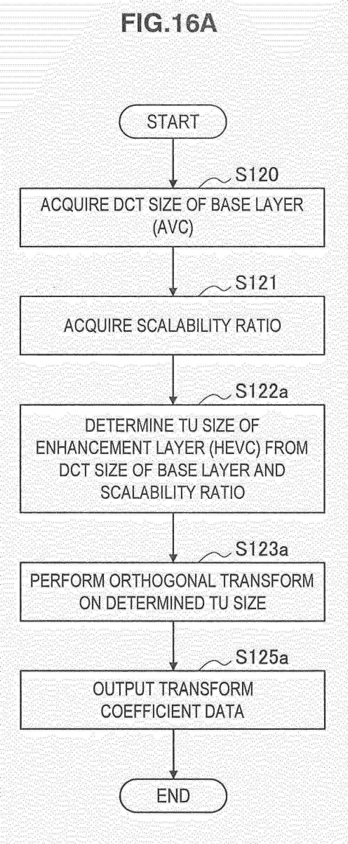

FIG. 16A is a flow chart showing a first example of the flow of the orthogonal transform process in the enhancement layer at the time of the encoding. The orthogonal transform process shown in FIG. 16A is a process according to the first method of setting the TU size described with reference to FIG. 5A.

Referring to FIG. 16A, the transform control section 121b of the orthogonal transform section 14b for the enhancement layer first acquires the DCT size information indicating the DCT size set in the base layer from the common memory 2 (step S120). Next, the transform control section 121b acquires the scalability ratio between the base layer and the enhancement layer (step S121).

Next, the transform control section 121b deterministically determines the size of the TU in the enhancement layer corresponding to the transform block in the base layer by multiplying the DCT size indicated by the DCT size information by the scalability ratio (step S122a). The transform control section 121b sets the TU with the determined TU size in the enhancement layer.

Next, the transform section corresponding to the TU size determined in step S122a among the 4x4 transform section 122b, the 8x8 transform section 123b, the 16x16 transform section 124b, and the 32x32 transform section 125b performs the orthogonal transform on the TU set by the transform control section 121b (step S123a). Then, this transform section outputs the transform coefficient data obtained as the result of the orthogonal transform to the quantization section 15 (step S125a).

### (2) Second Example

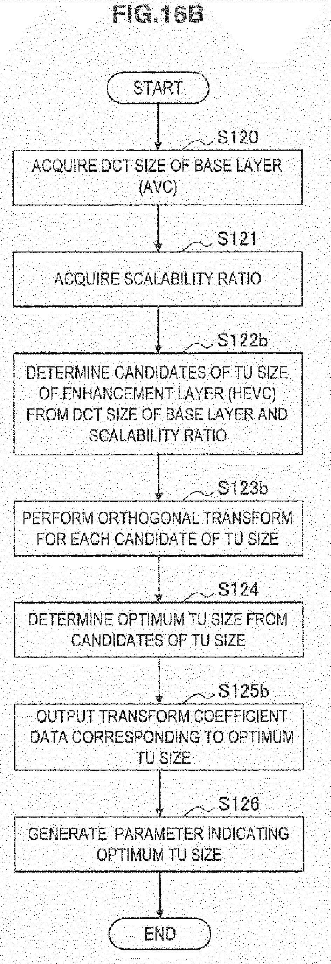

FIG. 16B is a flow chart showing a second example of the flow of the orthogonal transform process in the enhancement layer at the time of the encoding. The orthogonal transform process shown in FIG. 16B is a process according to the second method of setting the TU size described with reference to FIG. 5B.

Referring to FIG. 16B, the transform control section 121b of the orthogonal transform section 14b for the enhancement layer first acquires the DCT size information indicating the DCT size set in the base layer from the common memory 2 (step S120). Next, the transform control section 121b acquires the scalability ratio between the base layer and the enhancement layer (step S121).

Next, the transform control section 121b determines at least one candidate of the TU size of the TU in the enhancement layer corresponding to the transform block in the base layer using the product of the DCT size and the scalability ratio as the reference (step S122b). Then, the transform control section 121b sets the TU with the TU size which is the determined candidate in the enhancement layer.

Next, the transform section corresponding to the TU size determined in step S122b among the 4x4 transform section 122b, the 8x8 transform section 123b, the 16×16 transform section 124b, and the 32x32 transform section 125b performs the orthogonal transform on each candidate of the TU size (step S123b).

Next, the size determination section 126b determines the optimum TU size from at least one candidate of the TU size by comparing the transform coefficient data obtained as the result of the orthogonal transform (step S124). Then, the size determination section 126b outputs the transform coefficient data corresponding to the optimum TU size to the quantization section 15 (step S125b). Then, the size determination section 126b generates the parameter indicating the optimum TU size and outputs the generated parameter to the lossless encoding section 16b and the inverse orthogonal transform section 22b (step S126).

### [3-3. Intra Prediction Process]

### (1) First Example

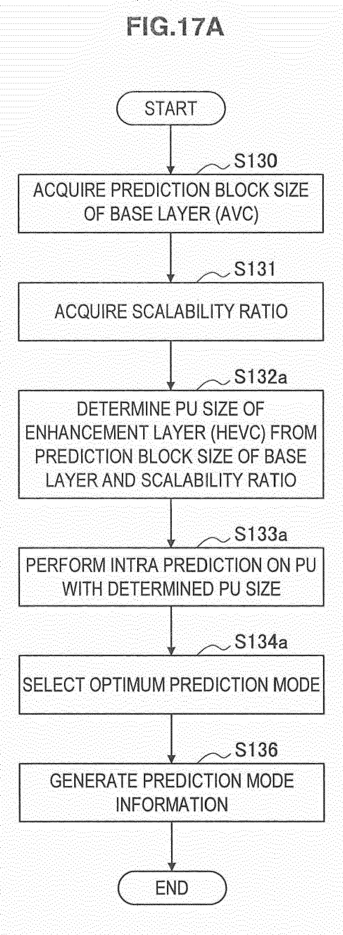

FIG. 17A is a flow chart showing a first example of the flow of the intra prediction process in the enhancement layer at the time of the encoding. The intra prediction process shown in FIG. 17A is a process according to the first method of setting the PU size described with reference to FIG. 6A.

Referring to FIG. 17A, the prediction control section 131b of the intra prediction section 30b for the enhancement layer first acquires the prediction block size information indicating the prediction block size set in the base layer from the common memory 2 (step S130). Next, the prediction control section 131b acquires the scalability ratio between the base layer and the enhancement layer (step S131).

Next, the prediction control section 131b deterministically determines the size of the PU in the enhancement layer corresponding to the prediction block in the base layer by multiplying the prediction block size indicated by the prediction block size information by the scalability ratio (step S132a). The prediction control section 131b sets the PU with the determined PU size in the enhancement layer.

Next, the prediction section 132b performs the intra prediction on the PU set by the prediction control section 131b in various prediction modes (step S133a). Next, the mode determination section 133b selects the optimum prediction mode by comparing the predicted image data input from the prediction section 132b to the original image data (step S134a).

Then, the mode determination section 133b generates the prediction mode information indicating the selected optimum prediction mode (step S136). The mode determination section 133b outputs the information regarding the intra prediction, the cost function value, and the predicted image data to the selector 27.

### (2) Second Example

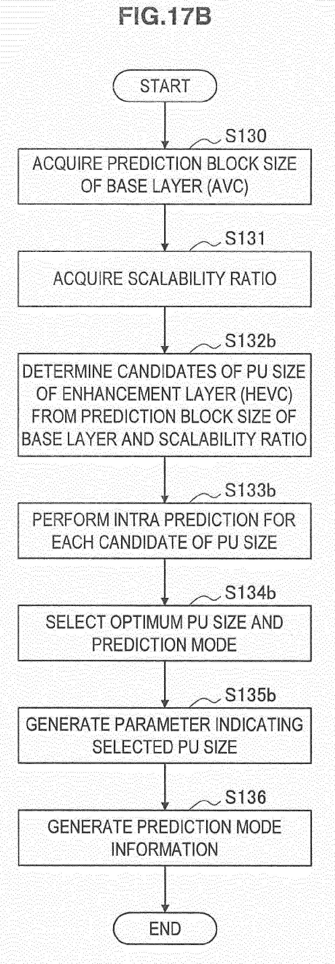

FIG. 17B is a flow chart showing a second example of the flow of the intra prediction process in the enhancement layer at the time of the encoding. The intra prediction process shown in FIG. 17B is a process according to the second method of setting the PU size described with reference to FIG. 6B.

Referring to FIG. 17B, the prediction control section 131b of the intra prediction section 30b for the enhancement layer first acquires the prediction block size information indicating the prediction block size set in the base layer from the common memory 2 (step S130). Next, the prediction control section 131b acquires the scalability ratio between the base layer and the enhancement layer (step S131).

Next, the prediction control section 131b determines at least one candidate of the PU size of the PU in the enhancement layer corresponding to the prediction block in the base layer using the product of the prediction block size and the scalability ratio as the reference (step S 132b). The prediction control section 131b sets the PU with the PU size which is the determined candidate in the enhancement layer.

Next, the prediction section 132b performs the intra prediction on each PU with the PU size which is the candidate in various prediction modes (step S133b). Next, the mode determination section 133b selects the optimum PU size and prediction mode by comparing the predicted image data input from the prediction section 132b to the original image data (step S134b).

Then, the mode determination section 133b generates the parameter indicating the selected optimum PU size (step S135b). The mode determination section 133b generates the prediction mode information indicating the optimum prediction mode (step S136). The mode determination section 133b outputs the information regarding the intra prediction, the cost function value, and the predicted image data to the selector 27.

### [3-4. Inter Prediction Process]

### (1) First Example

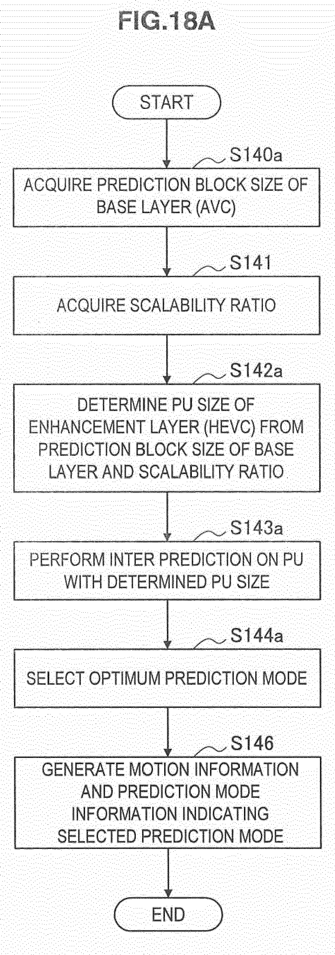

FIG. 18A is a flow chart showing a first example of the flow of the inter prediction process in the enhancement layer at the time of the encoding. The inter prediction process shown in FIG. 18A is a process in which the first method of setting the PU size described with reference to FIG. 6A is applied to the inter prediction.

Referring to FIG. 18A, the prediction control section 141b of the inter prediction section 40b for the enhancement layer first acquires the prediction block size information indicating the prediction block size set in the base layer from the common memory 2 (step S140a). Next, the prediction control section 141b acquires the scalability ratio between the base layer and the enhancement layer (step S141).

Next, the prediction control section 141b deterministically determines the size of the PU in the enhancement layer corresponding to the prediction block in the base layer by multiplying the prediction block size indicated by the prediction block size information by the scalability ratio (step S142a). The prediction control section 141b sets the PU with the determined PU size in the enhancement layer.

Next, the prediction section 142b performs the inter prediction on the PU set by the prediction control section 141b in various prediction modes (step S143a). Next, the mode determination section 143b selects the optimum prediction mode by comparing the predicted image data input from the prediction section 142b to the original image data (step S 144a).

Then, the mode determination section 143b generates the motion information and the prediction mode information indicating the selected optimum prediction mode (step S146). The mode determination section 143b outputs the information regarding the inter prediction, the cost function value, and the predicted image data to the selector 27.

### (2) Second Example

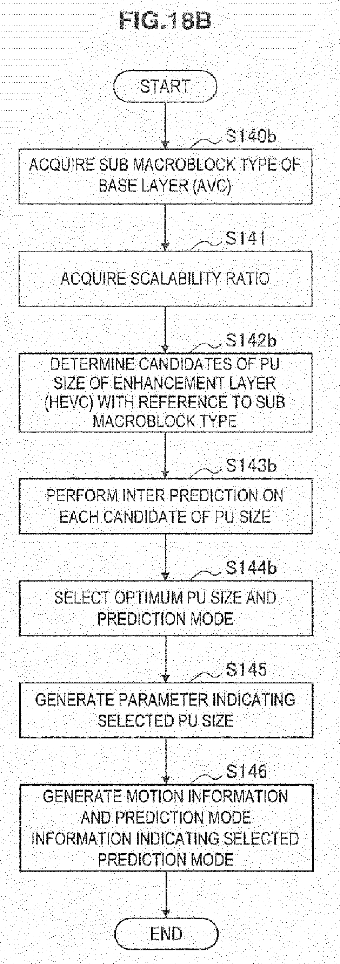

FIG. 18B is a flow chart showing a second example of the flow of the inter prediction process in the enhancement layer at the time of the encoding. The inter prediction process shown in FIG. 18B is a process according to the third method of setting the PU size described with reference to FIG. 7B.

Referring to FIG. 18B, the prediction control section 141b of the inter prediction section 40b for the enhancement layer first acquires the sub macroblock type indicating whether the division into the sub macroblocks in the base layer is used from the common memory 2 (step S140b). Next, the prediction control section 141b acquires the scalability ratio between the base layer and the enhancement layer (step S141).

Next, the prediction control section 141b determines at least one candidate of the PU size of the PU in the enhancement layer corresponding to the prediction block according to whether the division into the sub macroblocks is used in the prediction block in the base layer with reference to the sub macroblock type (step S142b). The prediction control section 141b sets the PU with the PU size which is the determined candidate in the enhancement layer.

Next, the prediction section 142b performs the inter prediction on each PU with the PU size which is the candidate in various prediction modes (step S143b). Next, the mode determination section 143b selects the optimum PU size and prediction mode by comparing the predicted image data input from the prediction section 142b to the original image data (step S144b).

Then, the mode determination section 143b generates the parameter indicating the selected optimum PU size (step S145). The mode determination section 143b generates the motion information and the prediction mode information indicating the optimum prediction mode (step S146). The mode determination section 143b outputs the information regarding the inter prediction, the cost function value, and the predicted image data to the selector 27.

### <4. Configuration Example of Decoding Section According to Embodiment>

### [4-1. Overall Configuration]

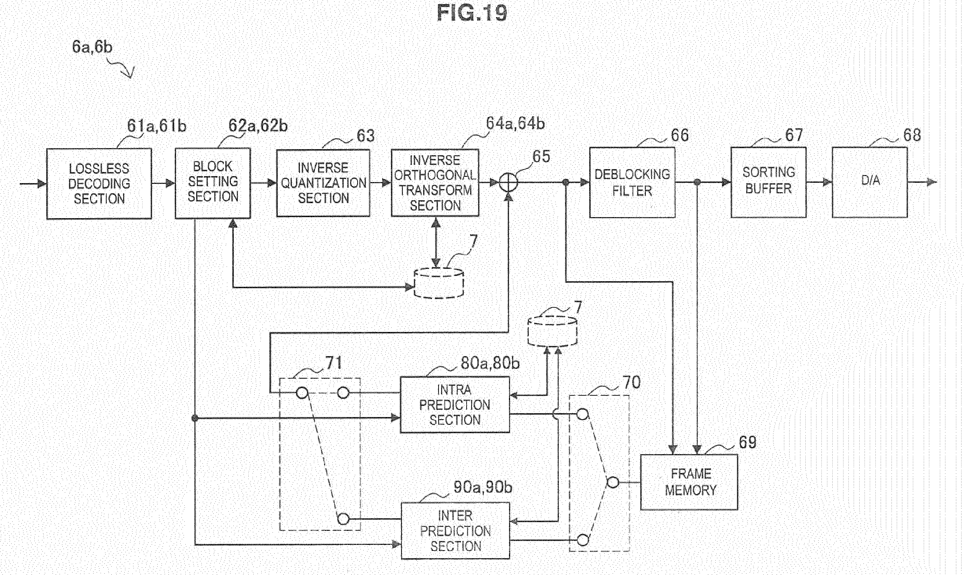

FIG. 19 is a block diagram illustrating an example of the configurations of the first decoding section 6a and the second decoding section 6b shown in FIG. 9. Referring to FIG. 19, the first decoding section 6a includes a lossless decoding section 61a, a block setting section 62a, an inverse quantization section 63, an inverse orthogonal transform section 64a, an addition section 65, a deblocking filter 66, a sorting buffer 67, a D/A (Digital to Analogue) transform section 68, a frame memory 69, selectors 70 and 71, an intra prediction section 80a, and an inter prediction section 90a. The second decoding section 6b includes a lossless decoding section 61b, a block setting section 62b, an inverse orthogonal transform section 64b, an intra prediction section 80b, and an inter prediction section 90b instead of the lossless decoding section 61a, the block setting section 62a, the inverse orthogonal transform section 64a, the intra prediction section 80a, and the inter prediction section 90a.

The lossless decoding section 61a decodes the encoded stream of the base layer input via the transmission path according to the coding scheme used at the time of the encoding to generate the quantized data of the base layer. The lossless decoding section 61a decodes the information multiplexed in the header region of the encoded stream. The information decoded by the lossless decoding section 61a can include, for example, the DCT size information, the information regarding the intra prediction, and the information regarding the inter prediction.

The lossless decoding section 61b decodes the encoded stream of the enhancement layer input via the transmission path according to the coding scheme used at the time of the encoding to generate the quantized data of the enhancement layer. The lossless decoding section 61b decodes the information multiplexed in the header region of the encoded stream. The information decoded by the lossless decoding section 61b can include, for example, the scalability ratio, the block size information, the division flag, the information regarding the intra prediction, and the information regarding the inter prediction.

The block setting section 62a sets the macroblock with a fixed size in the base layer. For each of the set macroblocks, the block setting section 62a outputs the quantized data to the inverse quantization section 63, outputs the information regarding the intra prediction to the intra prediction section 80a, and outputs the information regarding the inter prediction to the inter prediction section 90a. The macroblock size is stored in advance by the common memory 7.

The block setting section 62b sets the CU in the enhancement layer according to the macroblock size set by the block setting section 62a. More specifically, the block setting section 62b first sets the LCU in the enhancement layer and sets the CU in each LCU by performing the recursive block division on the LCU according to the LCU size, the SCU size, and the division flag. The block setting section 62b can determine the LCU size using the scalability ratio and the macroblock size stored by the common memory 7. The SCU size may be determined by further referring to the sub macroblock size which can be stored by the common memory 7. For each of the set LCUs, the block setting section 62b outputs the quantized data to the inverse quantization section 63, outputs the information regarding the intra prediction to the intra prediction section 80b, and outputs the information regarding the inter prediction to the inter prediction section 90b.

The inverse quantization section 63 performs inverse quantization on the quantized data input from the block setting section 62a or 62b to generate the transform coefficient data. Then, the inverse quantization section 63 outputs the generated transform coefficient data to the inverse orthogonal transform section 64a or 64b.

The inverse orthogonal transform section 64a sets the transform block in the macroblock according to the DCT size information decoded by the lossless decoding section 61a and performs an inverse orthogonal transform on the transform coefficient data of the base layer input from the inverse quantization section 63. The inverse orthogonal transform performed by the inverse orthogonal transform section 64a may be, for example, an inverse Discrete Cosine Transform (inverse DCT). The DCT size is 8x8 pixels or 4x4 pixels. The inverse orthogonal transform section 64a outputs the predicted error data acquired through the inverse orthogonal transform process for each transform block to the addition section 65. The inverse orthogonal transform section 64a causes the common memory 7 to buffer the DCT size information indicating the size of each of the set transform blocks.

The inverse orthogonal transform section 64b sets the TU in each CU set by the block setting section 62b and performs the inverse orthogonal transform on the transform coefficient data of the enhancement layer input from the inverse quantization section 63. The inverse orthogonal transform performed by the inverse orthogonal transform section 64b may also be, for example, an inverse DCT. The size of the TU set by the inverse orthogonal transform section 64b is 32x32 pixels, 16x16 pixels, 8x8 pixels, or 4x4 pixels. The inverse orthogonal transform section 64b can determine the TU size to be set in the enhancement layer using the scalability ratio and the DCT size information of the base layer stored by the common memory 7. The inverse orthogonal transform section 64b outputs the transform coefficient data acquired through the orthogonal transform process for each TU to the addition section 65.

The addition section 65 adds the predicted error data input from the inverse orthogonal transform section 64a or 64b and predicted image data input from the selector 71 to thereby generate decoded image data. Then, the addition section 65 outputs the generated decoded image data to the deblocking filter 66 and the frame memory 69.

The deblocking filter 66 removes block distortion by filtering the decoded image data input from the addition section 65, and outputs the decoded image data after filtering to the sorting buffer 67 and the frame memory 69.

The sorting buffer 67 generates a series of image data in a time sequence by sorting images input from the deblocking filter 66. Then, the sorting buffer 67 outputs the generated image data to the D/A conversion section 68.

The D/A conversion section 68 converts the image data in a digital format input from the sorting buffer 67 into an image signal in an analogue format. Then, the D/A conversion section 68 causes an image to be displayed by outputting the analogue image signal to a display (not shown) connected to the image decoding device 60, for example.

The frame memory 69 stores, using a storage medium, the decoded image data before filtering input from the addition section 65, and the decoded image data after filtering input from the deblocking filter 66.

The selector 70 switches an output destination of the image data from the frame memory 69 between the intra prediction section 80a or 80b and the inter prediction section 90a or 90b for each block in the image. For example, when the intra prediction mode is designated by the decoded parameter, the selector 70 outputs the decoded image data before the filtering supplied from the frame memory 69 as reference image data to the intra prediction section 80a or 80b. When the inter prediction mode is designated, the selector 70 outputs the decoded image data after the filtering supplied from the frame memory 69 as reference image data to the inter prediction section 90a or 90b.

The selector 71 switches an output source of the predicted image data to be supplied to the addition section 65 between the intra prediction section 80a or 80b and the inter prediction section 90a or 90b. For example, when the intra prediction mode is designated by the decoded parameter, the selector 71 supplies the addition section 65 with the predicted image data output from the intra prediction section 80a or 80b. When the inter prediction mode is designated, the selector 71 supplies the addition section 65 with the predicted image data output from the inter prediction section 90a or 90b.

The intra prediction section 80a generates the predicted image data by performing the intra prediction process of the base layer based on the information regarding the intra prediction input for each macroblock from the block setting section 62a and the reference image data from the frame memory 69. For example, the intra prediction section 80a sets the prediction block in the macroblock according to the prediction block size information and performs the intra prediction for each of the set prediction blocks according to the prediction mode information. The size of the prediction block set by the intra prediction section 80a is 16×16 pixels, 8×8 pixels, or 4x4 pixels. The intra prediction section 80a outputs the generated predicted image data of the base layer to the selector 71. The intra prediction section 80a causes the common memory 7 to buffer the prediction block size information.

The intra prediction section 80b generates the predicted image data by performing the intra prediction process of the enhancement layer based on the information regarding the intra prediction input for each LCU from the block setting section 62b and the reference image data from the frame memory 69. For example, the intra prediction section 80b sets the PU in each CU and performs the intra prediction for each of the set PUs according to the prediction mode information. The size of the PU set by the intra prediction section 80b is 64x64 pixels, 32×32 pixels, 16×16 pixels, 8×8 pixels, or 4x4 pixels. The intra prediction section 80b can determine the PU size to be set in the enhancement layer using the scalability ratio and the prediction block size information of the base layer stored by the common memory 7. The intra prediction section 80b outputs the generated predicted image data of the enhancement layer to the selector 71.

The inter prediction section 90a generates the predicted image data by performing the inter prediction process of the base layer based on the information, regarding the inter prediction input for each macro block from the block setting section 62a and the reference image data from the frame memory 69. For example, the inter prediction section 90a sets the prediction block in the macroblock according to the prediction block size information and performs the inter prediction (motion compensation) for each of the set prediction blocks using the motion information. The size of the prediction block set by the inter prediction section 90a is one of the 7 kinds of sizes shown in FIG. 7A. Then, the inter prediction section 90a outputs the generated predicted image data of the base layer to the selector 71. The inter prediction section 90a causes the common memory 7 to buffer the prediction block size information. The prediction block size information can include the sub macroblock type.

The inter prediction section 90b generates the predicted image data by performing the inter prediction process of the enhancement layer based on the information regarding the inter prediction input for each LCU from the block setting section 62b and the reference image data from the frame memory 69. For example, the inter prediction section 90b sets the PU in each CU and performs the inter prediction for each of the set PUs using the motion information. The inter prediction section 90b can determine the PU size to be set in the enhancement layer using the scalability ratio and the prediction block size information of the base layer stored by the common memory 7. Then, the inter prediction section 90b outputs the generated predicted image data of the enhancement layer to the selector 71.

The first decoding section 6a performs a series of decoding processes described here on a sequence of image data of the base layer. The second decoding section 6b performs a series of decoding processes described here on a sequence of image data of the enhancement layer. When a plurality of enhancement layers is present, the decoding process of the enhancement layer can be repeated as many times as the number of enhancement layers.

### [4-2. Detailed Configuration of Block Setting Section]

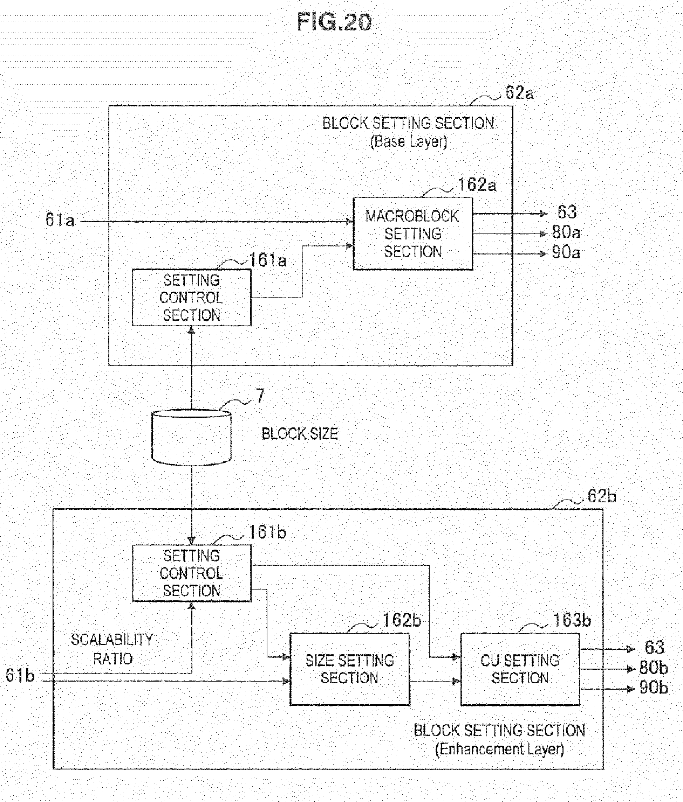

FIG. 20 is a block diagram showing an example of the detailed configurations of the block setting sections 62a and 62b shown in FIG. 19. Referring to FIG. 20, the block setting section 62a includes a setting control section 161a and a macroblock setting section 162a. The block setting section 62b includes a setting control section 161b, a size setting section 162b, and a CU setting section 163b.

### (1) Block Setting Process of Base Layer

The setting control section 161a of the block setting section 62a acquires the fixed macroblock size stored in advance by the common memory 7 and instructs the macroblock setting section 162a to set the macroblock with the acquired size.

The macroblock setting section 162a sets at least one macroblock in the base layer in response to the instruction from the setting control section 161a. Then, for each of the set macroblocks, the macroblock setting section 162a outputs the quantized data to the inverse quantization section 63, outputs the information regarding the intra prediction to the intra prediction section 80a, and outputs the information regarding the inter prediction to the inter prediction section 90a.

### (2) Block Setting Process of Enhancement Layer

The setting control section 161b of the block setting section 62b acquires the macroblock size stored by the common memory 7 and the scalability ratio between the base layer and the enhancement layer. The scalability ratio may be directly indicated by a parameter decoded by the lossless decoding section 61b or may be calculated from the resolution data of the two layers. Then, the setting control section 161b instructs the size setting section 162b to set the LCU size and the SCU size determined using the macroblock size and the scalability ratio.

The size setting section 162b sets the LCU size and the SCU size in the enhancement layer in response to the instruction from the setting control section 161b. The size setting section 162b may deterministically determine the LCU size by multiplying the macroblock size by the scalability ratio according to the first method described with reference to FIG. 3A. Instead, the size setting section 162b may narrow the candidates of the size using the product of the macroblock size and the scalability ratio as the reference according to the second method described with reference to FIG. 3B, and then select the LCU size with reference to the LCU size information decoded by the lossless decoding section 61b.

The size setting section 162b may deterministically determine the SCU size by multiplying the sub macroblock size stored in advance by the common memory 7 by the scalability ratio according to the first method described with reference to FIG. 4A. Instead, the size setting section 162b may select the SCU size from the plurality of candidates of the size equal to or less than the LCU size with reference to the SCU size information decoded by the lossless decoding section 61b according to the second method described with reference to FIG. 4B.

The CU setting section 163b sets the CU in each LCU by performing the recursive block division on the LCU according to the LCU size and the SCU size set by the size setting section 162b and the division flag decoded by the lossless decoding section 61b. Then, for each LCU, the CU setting section 163b outputs the quantized data to the inverse quantization section 63 and outputs the information regarding the intra prediction to the intra prediction section 80b, and outputs the information regarding the inter prediction to the inter prediction section 90b.

### [4-3. Detailed Configuration of Inverse Orthogonal Transform Section]

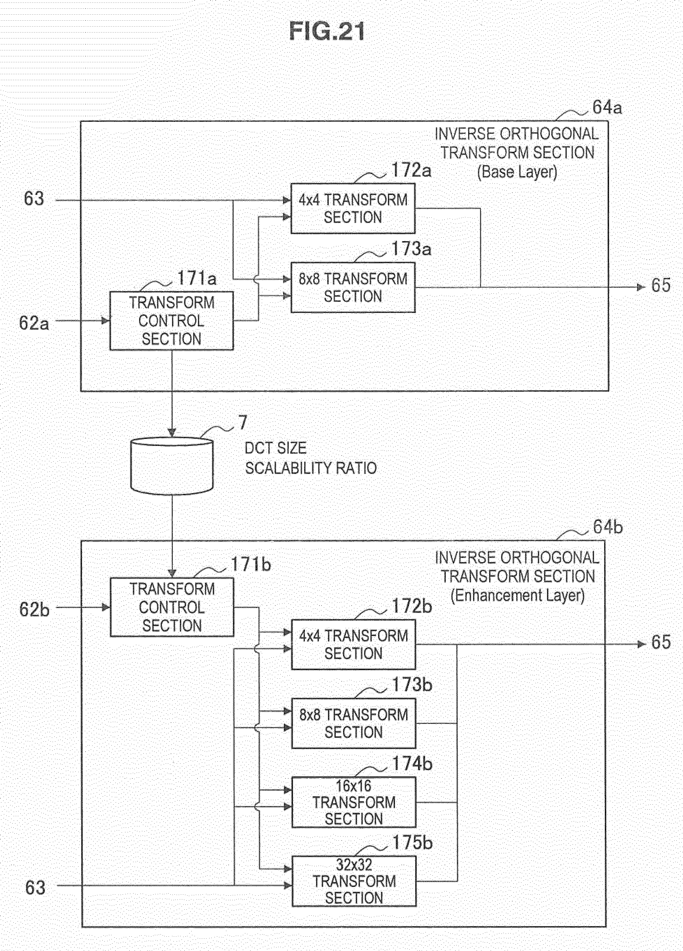

FIG. 21 is a block diagram showing an example of the detailed configurations of the inverse orthogonal transform sections 64a and 64b shown in FIG. 19. Referring to FIG. 21, the inverse orthogonal transform section 64a includes a transform control section 171a, a 4x4 transform section 172a, and an 8×8 transform section 173a. The inverse orthogonal transform section 64b includes a transform control section 171b, a 4x4 transform section 172b, an 8×8 transform section 173b, a 16×16 transform section 174b, and a 32x32 transform section 175b.

### (1) Inverse Orthogonal Transform Process of Base Layer

The transform control section 171a of the inverse orthogonal transform section 64a sets the transform block with the DCT size indicated by the DCT size information decoded by the lossless decoding section 61a in the macroblock. The transform control section 171a causes the transform section corresponding to the set DCT size between the 4x4 transform section 172a and the 8×8 transform section 173a to perform the inverse orthogonal transform on the transform coefficient data of the base layer input from the inverse quantization section 63. The transform control section 171a causes the common memory 7 to buffer the DCT size information indicating the size of each transform block.

When the transform block with the size of 4x4 pixels is set, the 4x4 transform section 172a performs a 2-dimensional inverse DCT of 4x4 pixels on the transform coefficient data of this transform block. Then, the 4x4 transform section 172a outputs the predicted error data to the addition section 65. When the transform block with the size of 8x8 pixels is set, the 8x8 transform section 173a performs a 2-dimensional inverse DCT of 8x8 pixels on the transform coefficient data of this transform block. Then, the 8x8 transform section 173a outputs the predicted error data to the addition section 65.

### (2) Inverse Orthogonal Transform Process of Enhancement Layer

The transform control section 171b of the inverse orthogonal transform section 64b acquires the scalability ratio and the DCT size information stored by the common memory 7. The transform control section 171b sets the TU with the size determined using the DCT size and the scalability ratio in each CU of the enhancement layer.

For example, the transform control section 171b may deterministically determine the TU size by multiplying the DCT size by the scalability ratio according to the first method described with reference to FIG. 5A. Instead, the transform control section 171b may narrow the candidates of the size using the product of the DCT size and the scalability ratio as the reference according to the second method described with reference to FIG. 5B, and then may select the TU size with reference to the TU size information decoded by the lossless decoding section 61b. The transform control section 171a causes the transform section corresponding to the set TU size among the 4x4 transform section 172b, the 8x8 transform section 173b, the 16x16 transform section 174b, and the 32x32 transform section 175b to perform the inverse orthogonal transform on the transform coefficient data of the enhancement layer input from the inverse quantization section 63.

When the TU with the size of 4x4 pixels is set, the 4x4 transform section 172b performs a 2-dimensional inverse DCT of 4x4 pixels on the transform coefficient data of this TU. Then, the 4x4 transform section 172b outputs the predicted error data to the addition section 65. When the TU with the size of 8x8 pixels is set, the 8x8 transform section 173b performs a 2-dimensional inverse DCT of 8x8 pixels on the transform coefficient data of this TU. Then, the 8x8 transform section 173b outputs the predicted error data to the addition section 65. When the TU with the size of 16×16 pixels is set, the 16×16 transform section 174b performs a 2-dimensional inverse DCT of 16×16 pixels on the transform coefficient data of this TU. Then, the 16×16 transform section 174b outputs the predicted error data to the addition section 65. When the TU with the size of 32x32 pixels is set, the 32×32 transform section 175b performs a 2-dimensional inverse DCT of 32x32 pixels on the transform coefficient data of this TU. Then, the 32x32 transform section 175b outputs the predicted error data to the addition section 65.

### [4-4. Detailed Configuration of Intra Prediction Section]

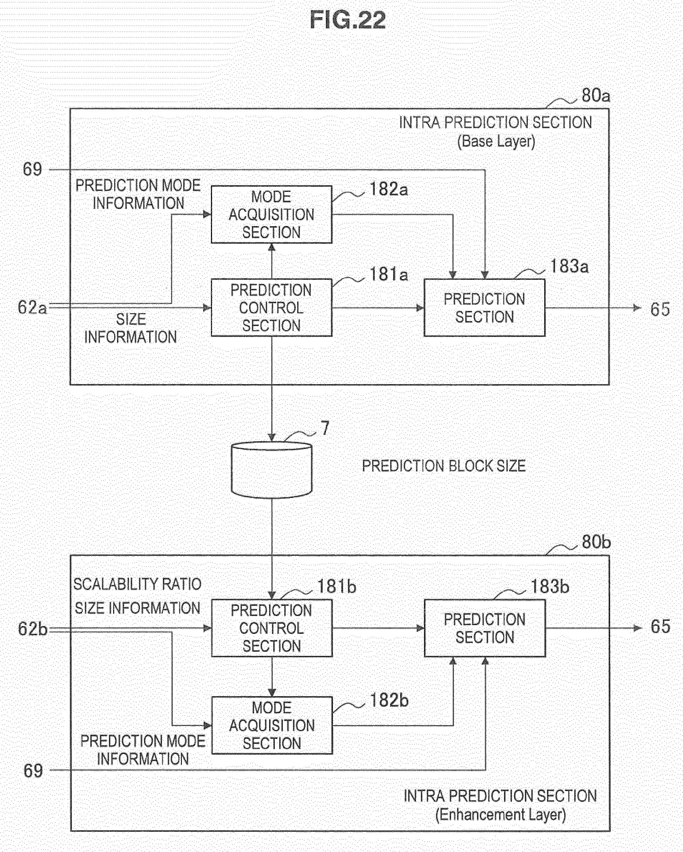

FIG. 22 is a block diagram illustrating an example of the detailed configurations of the intra prediction sections 80a and 80b shown in FIG. 19. Referring to FIG. 22, the intra prediction section 80a includes a prediction control section 181a, mode acquisition section 182a, and a prediction section 183a. The intra prediction section 80b includes a prediction control section 181b, a mode acquisition section 182b, and a prediction section 183b.

### (1) Intra Prediction Process of Base Layer

The prediction control section 181a of the intra prediction section 80a controls the intra prediction process of the base layer. More specifically, the prediction control section 181a sets the prediction block with the size indicated by the prediction block size information decoded by the lossless decoding section 61a in the macroblock. The mode acquisition section 182a acquires the prediction mode information decoded by the lossless decoding section 61a. The prediction control section 181a causes the prediction section 183a to perform the intra prediction in the prediction mode indicated by the prediction mode information. The prediction control section 181a causes the common memory 7 to buffer the prediction block size information indicating the size of each prediction block.

The prediction section 183a generates the predicted image data using the decoded image data input from the frame memory 69 for each prediction block set by the prediction control section 181a in the prediction mode indicated by the prediction mode information. Then, the prediction section 183a outputs the generated predicted image data to the addition section 65.

### (2) Intra Prediction Process of Enhancement Layer

The prediction control section 181b of the intra prediction section 80b controls the intra prediction process of the enhancement layer. More specifically, the prediction control section 181b sets the PU in each CU of the enhancement layer. The prediction control section 181b acquires the scalability ratio and the prediction block size information of the base layer stored by the common memory 7 to determine the PU size. The prediction control section 181b determines the CPU size to be set using the prediction block size and the scalability ratio.

For example, the prediction control section 181b may deterministically determine the PU size by multiplying the prediction block size by the scalability ratio according to the first method described with reference to FIG. 6A. Instead, the prediction control section 181b may narrow the candidates of the size using the product of the prediction block size and the scalability ratio as the reference according to the second method described with reference to FIG. 6B, and then may select the PU size with reference to the PU size information decoded by the lossless decoding section 61b.

The mode acquisition section 182b acquires the prediction mode information decoded by the lossless decoding section 61b. The prediction section 183b generates the predicted image data using the decoded image data input from the frame memory 69 for each PU set by the prediction control section 181b in the prediction mode indicated by the prediction mode information. Then, the prediction section 183b outputs the generated predicted image data to the addition section 65.

### [4-5. Detailed Configuration of Inter Prediction Section]

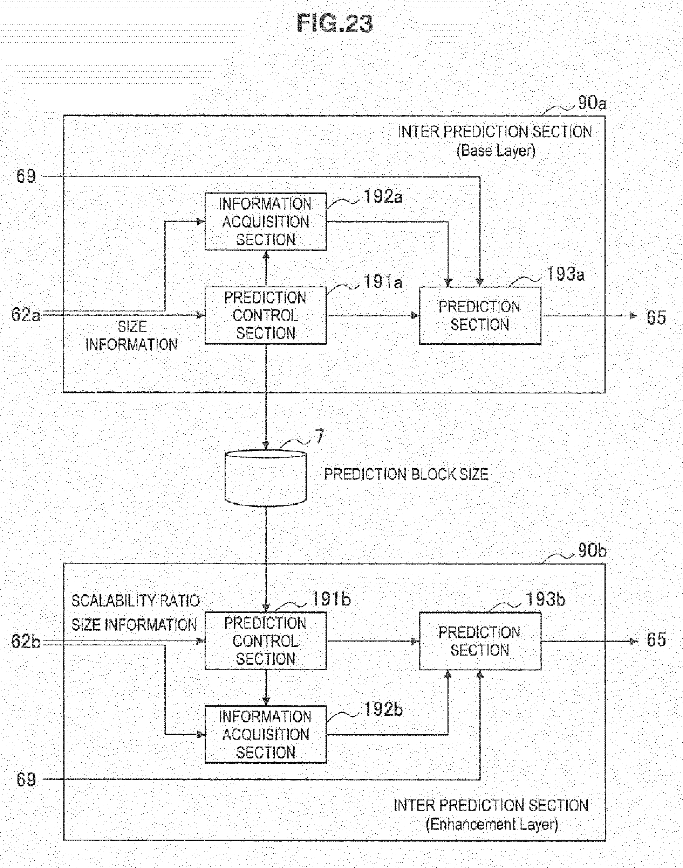

FIG. 23 is a block diagram illustrating an example of the detailed configurations of the inter prediction sections 90a and 90b shown in FIG. 19. Referring to FIG. 23, the inter prediction section 90a includes a prediction control section 191a, an information acquisition section 192a, and a prediction section 193a. The inter prediction section 90b includes a prediction control section 191b, an information acquisition section 192b, and a prediction section 193b.

### (1) Inter Prediction Process of Base Layer

The prediction control section 191a of the inter prediction section 90a controls the inter prediction process of the base layer. More specifically, the prediction control section 191a sets the prediction block with the size indicated by the prediction block size information decoded by the lossless decoding section 61a in the macroblock. The information acquisition section 192a acquires the prediction mode information and the motion information decoded by the lossless decoding section 61a. The prediction control section 191a causes the prediction section 193a to perform the inter prediction in the prediction mode indicated by the prediction mode information. The prediction control section 191a causes the common memory 7 to buffer the prediction block size information (which can include the sub macroblock type) indicating the size of each prediction block.

The prediction section 193a generates the predicted image data using the motion information and the decoded image data input from the frame memory 69 for each prediction block set by the prediction control section 191a in the prediction mode indicated by the prediction mode information. Then, the prediction section 193a outputs the generated predicted image data to the addition section 65.

### (2) Inter Prediction Process of Enhancement Layer

The prediction control section 191b of the inter prediction section 90b controls the inter prediction process of the enhancement layer. More specifically, the prediction control section 191b sets the PU in each CU of the enhancement layer. The prediction control section 191b acquires the scalability ratio and the prediction block size information of the base layer stored by the common memory 7 to determine the PU size. The prediction control section 191b determines the PU size to be set using the prediction block size and the scalability ratio.

For example, the prediction control section 191b may deterministically determine the PU size by multiplying the prediction block size by the scalability ratio. Instead, the prediction control section 191b may narrow the candidates of the size using the product of the prediction block size and the scalability ratio as the reference, and then may select the PU size with reference to the PU size information decoded by the lossless decoding section 61b. The prediction control section 141b may narrow the candidates of the size according to whether the sub macroblock type is present in regard to the corresponding prediction block in the base layer, and then may select the PU size with reference to the PU size information decoded by the lossless decoding section 61b.

The information acquisition section 192b acquires the motion information and the prediction mode information decoded by the lossless decoding section 61b. The prediction section 193b generates the predicted image data using the decoded image data input from the frame memory 69 for each PU set by the prediction control section 191b according the reference image information and the motion vector information included in the motion information. Then, the prediction section 193b outputs the generated predicted image data to the addition section 65.

### <5. Process Flow at Time of Decoding According to Embodiment>

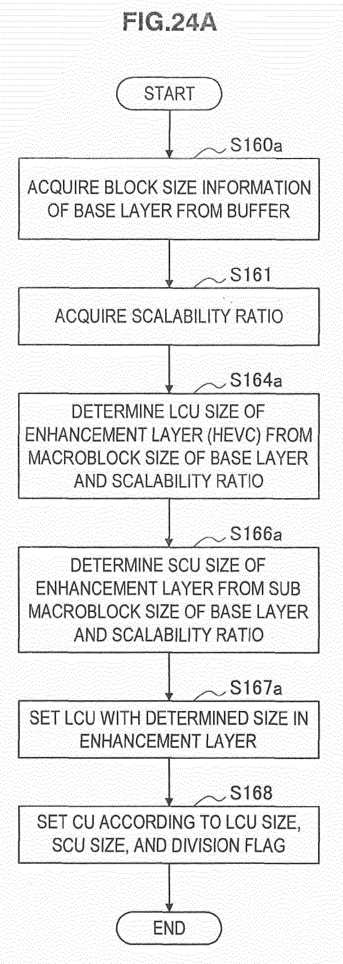

Next, process flows at the time of the decoding according to an embodiment will be described with reference to FIGS. 24A to 27B. For the sake of brevity of description, description of processes not directly relevant to the technology in the present disclosure will be omitted.

### [5-1. Block Setting Process]

### (1) First Example

FIG. 24A is a flow chart showing a first example of the flow of the block setting process in the enhancement layer at the time of the decoding. The block setting process shown in FIG. 24A is a process according to a combination of the first method of setting the LCU size, as described with reference to FIG. 3A, and the first method of setting the SCU size, as described with reference to FIG. 4A.

Referring to FIG. 24A, the setting control section 161b of the block setting section 62b for the enhancement layer first acquires the block size information indicating the macroblock size and the sub macroblock size of the base layer (step S160a). Next, the setting control section 161b acquires the scalability ratio between the base layer and the enhancement layer (step S161).

Next, the size setting section 162b deterministically determines the LCU size of the enhancement layer by multiplying the macroblock size indicated by the block size information by the scalability ratio (step S164a). The size setting section 162b deterministically determines the SCU size of the enhancement layer by multiplying the sub macroblock size indicated by the block size information by the scalability ratio (step S166a). The LCU size and the SCU size determined in steps S164a and 166a can be set in each sequence in the enhancement layer.

Next, the size setting section 162b sets the LCU with the LCU size determined in step S164a in the enhancement layer (step S167a). Next, the CU setting section 163b sets the CU in each LCU by performing the recursive block division on the LCU according to the LCU size and the SCU size set by the size setting section 162b and the division flag decoded by the lossless decoding section 61b (step S168).

### (2) Second Example

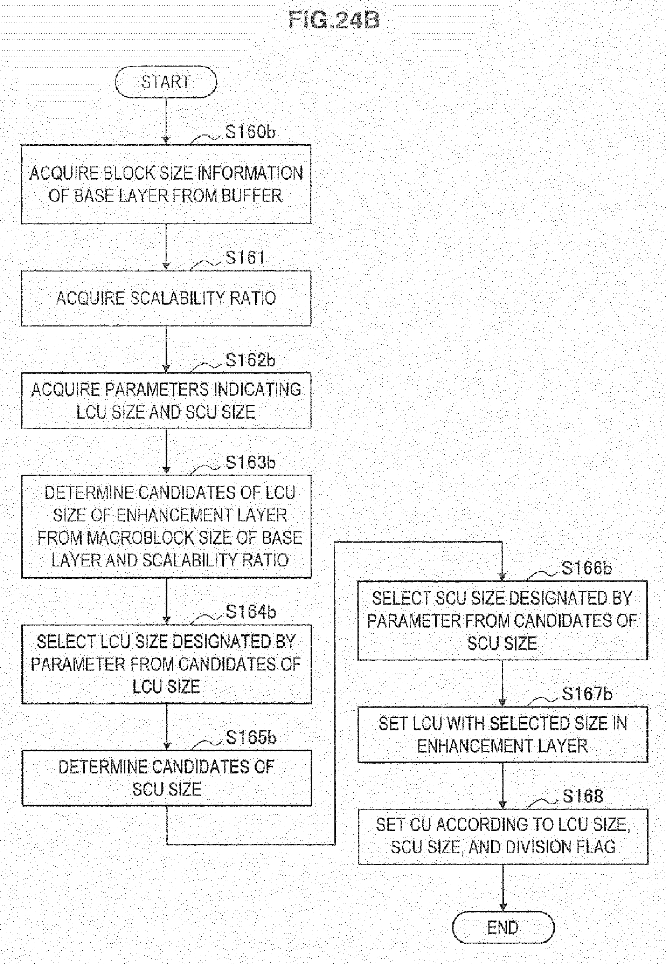

FIG. 24B is a flow chart showing a second example of the flow of the block setting process in the enhancement layer at the time of the decoding. The block setting process shown in FIG. 24B is a process according to a combination of the second method of setting the LCU size described with reference to FIG. 3B and the second method of setting the SCU size described with reference to FIG. 4B.

Referring to FIG. 24B, the setting control section 161b of the block setting section 62b for the enhancement layer first acquires the block size information indicating the macroblock size of the base layer (step S160b). Next, the setting control section 161b acquires the scalability ratio between the base layer and the enhancement layer (step S161). Next, the setting control section 161b acquires the parameters indicating the LCU size and the SCU size decoded by the lossless decoding section 61b (step S162b).

Next, the size setting section 162b determines at least one candidate of the LCU size using the product of the macroblock size and the scalability ratio as the reference (step S163b). Next, the size setting section 162b selects the LCU size designated by the parameter decoded by the lossless decoding section 61b from the candidates of the LCU size (step S164b). Then, the size setting section 162b determines at least one candidate of the SCU size equal to or less than the selected LCU size (step S165b). Next, the size setting section 162b selects the SCU size designated by the parameter decoded by the lossless decoding section 61b from the candidates of the SCU size (step S164b). The LCU size and the SCU size selected in step S164b and step S166b can be set in each sequence of the enhancement layer.

Next, the size setting section 162b sets the LCU with the LCU size selected in step S164b in the enhancement layer (step S167b). Next, the CPU setting section 163b sets the CU in each LCU by performing the recursive block division on the LCU according to the LCU size and the SCU size set by the size setting section 162b and the division flag decoded by the lossless decoding section 61b (step S168).

### [5-2. Inverse Orthogonal Transform Process]

### (1) First Example

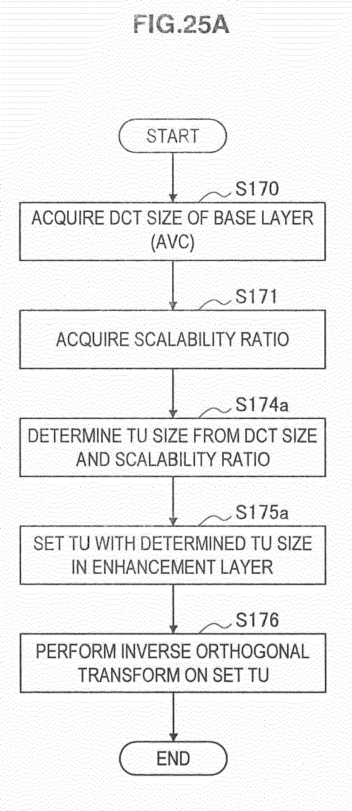

FIG. 25A is a flow chart showing a first example of the flow of the inverse orthogonal transform process in the enhancement layer at the time of the decoding. The orthogonal transform process shown in FIG. 25A is a process according to the first method of setting the TU size described with reference to FIG. 5A.

Referring to FIG. 25A, the transform control section 171b of the inverse orthogonal transform section 64b for the enhancement layer first acquires the DCT size information indicating the DCT size of the base layer from the common memory 7 (step S170). Next, the transform control section 171b acquires the scalability ratio between the base layer and the enhancement layer (step S171).

Next, the transform control section 171b deterministically determines the TU size of the enhancement layer by multiplying the DCT size by the scalability ratio (step S174a). Next, the transform control section 171b sets the TU with the determined TU size in each CU of the enhancement layer (step S175a).

Next, the transform section corresponding to the TU size determined by the transform control section 171b among the 4x4 transform section 172b, the 8×8 transform section 173b, the 16x16 transform section 174b, and the 32x32 transform section 175b performs the inverse orthogonal transform on the set TU (step S176).

### (2) Second Example

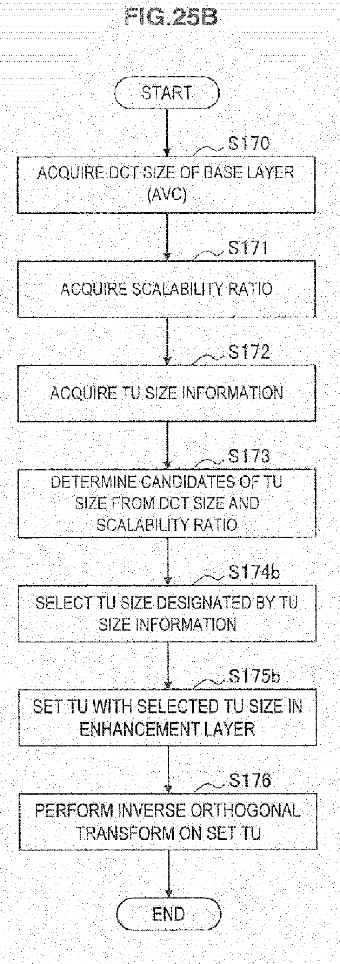

FIG. 25B is a flow chart showing a second example of the flow of the inverse orthogonal transform process in the enhancement layer at the time of the decoding. The inverse orthogonal transform process shown in FIG. 25B is a process according to the second method of setting the TU size described with reference to FIG. 5B.

Referring to FIG. 25B, the transform control section 171b of the inverse orthogonal transform section 64b for the enhancement layer first acquires the DCT size information indicating the DCT size of the base layer from the common memory 7 (step S170). Next, the transform control section 171b acquires the scalability ratio between the base layer and the enhancement layer (step S171). Next, the transform control section 171b acquires the TU size information decoded by the lossless decoding section 61b (step S172).

Next, the transform control section 171b determines at least one candidate of the TU size using the product of the DCT size and the scalability ratio as the reference (step S173). Next, the transform control section 171b selects the TU size designated by the TU size information from the candidates of the TU size (step S174b). Next, the transform control section 171b sets the TU with the selected TU size in each CU of the enhancement layer (step S175b).

Next, the transform section corresponding to the TU size selected by the transform control section 171b among the 4x4 transform section 172b, the 8x8 transform section 173b, the 16x16 transform section 174b, and the 32x32 transform section 175b performs the inverse orthogonal transform on the set TU (step S176).

### [5-3. Intra Prediction Process]

### (1) First Example

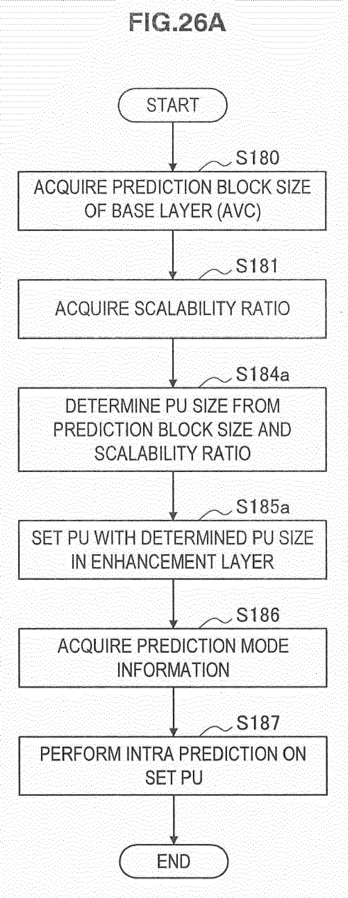

FIG. 26A is a flow chart showing a first example of the flow of the intra prediction process in the enhancement layer at the time of the decoding. The intra prediction process shown in FIG. 26A is a process according to the first method of setting the PU size described with reference to FIG. 6A.

Referring to FIG. 26A, the prediction control section 181b of the intra prediction section 80b for the enhancement layer first acquires the prediction block size information indicating the prediction block size of the base layer from the common memory 7 (step S180). Next, the prediction control section 181b acquires the scalability ratio between the base layer and the enhancement layer (step S181).

Next, the prediction control section 181b deterministically determines the PU size of the enhancement layer by multiplying the prediction block size by the scalability ratio (step S184a). Next, the prediction control section 181b sets the PU with the determined PU size in each CU of the enhancement layer (S185a).

Next, the mode acquisition section 182b acquires the prediction mode information decoded by the lossless decoding section 61b in regard to the PU set by the prediction control section 181b (step S186). Next, the prediction section 183b performs the intra prediction on the PU set by the prediction control section 181b according to the prediction mode indicated by the prediction mode information (step S187).

### (2) Second Example

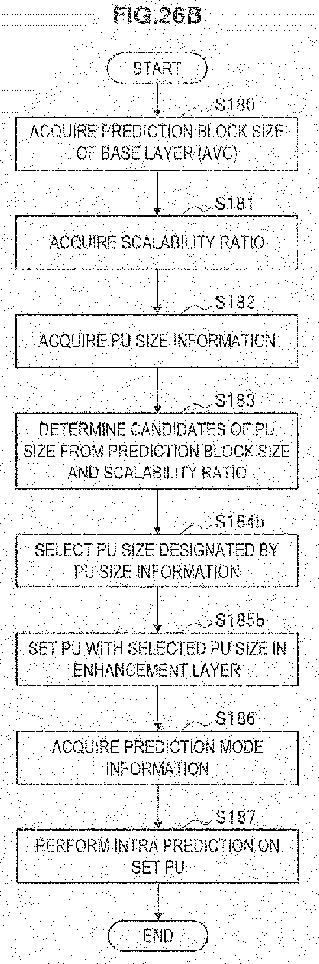

FIG. 26B is a flow chart showing a second example of the flow of the intra prediction process in the enhancement layer at the time of the decoding. The intra prediction process shown in FIG. 26B is a process according to the second method of setting the PU size described with reference to FIG. 6B.

Referring to FIG. 26B, the prediction control section 181b of the intra prediction section 80b for the enhancement layer first acquires the prediction block size information indicating the prediction block size of the base layer from the common memory 7 (step S180). Next, the prediction control section 181b acquires the scalability ratio between the base layer and the enhancement layer (step S181). Next, the prediction control section 181b acquires the PU size information decoded by the lossless decoding section 61b (step S182).

Next, the prediction control section 181b determines at least one candidate of the PU size using the product of the prediction block size and the scalability ratio as the reference (step S183). Next, the prediction control section 181b selects the PU size designated by the PU size information from the candidates of the PU size (step S184b). Next, the prediction control section 181b sets the PU with the selected PU size in each CU of the enhancement layer (step S185b).

Next, the mode acquisition section 182b acquires the prediction mode information decoded by the lossless decoding section 61b in regard to the PU set by the prediction control section 181b (step S186). Then, the prediction section 183b performs the intra prediction on the PU set by the prediction control section 181b according to the prediction mode indicated by the prediction mode information (step S187).

### [5-4. Inter Prediction Process]

### (1) First Example

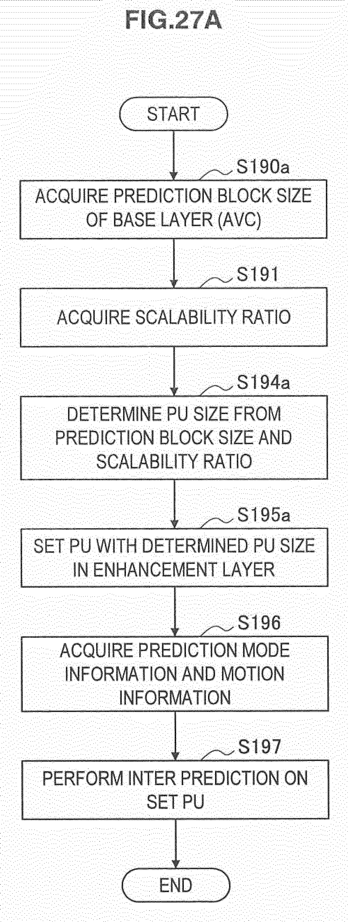

FIG. 27A is a flow chart showing a first example of the flow of the inter prediction process in the enhancement layer at the time of the decoding. The inter prediction process shown in FIG. 27A is a process in which the first method of setting the PU size described with reference to FIG. 6A is applied to the inter prediction.

Referring to FIG. 27A, the prediction control section 191b of the inter prediction section 90b for the enhancement layer first acquires the prediction block size information indicating the prediction block size of the base layer from the common memory 7 (step S190a). Next, the prediction control section 191b acquires the scalability ratio between the base layer and the enhancement layer (step S191).

Next, the prediction control section 191b deterministically determines the PU size of the enhancement layer by multiplying the prediction block size by the scalability ratio (step S194a). Next, the prediction control section 191b sets the PU with the determined PU size in each CU of the enhancement layer (step S195a).

Next, the information acquisition section 192b acquires the prediction mode information and the motion information decoded by the lossless decoding section 61b on the PU set by the prediction control section 191b (step S196). Then, the prediction section 193b performs the inter prediction on the PU set by the prediction control section 191b using the motion information according to the prediction mode indicated by the prediction mode information (step S197).

### (2) Second Example

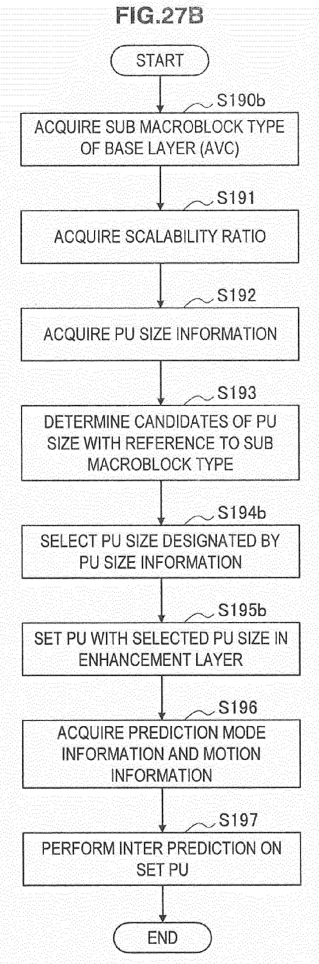

FIG. 27B is a flow chart showing a second example of the flow of the inter prediction process in the enhancement layer at the time of the decoding. The inter prediction process shown in FIG. 27B is a process according to the third method of setting the PU size described with reference to FIG. 7B.

Referring to FIG. 27B, the prediction control section 191b of the inter prediction section 90b for the enhancement layer first acquires the prediction block size information including the sub macroblock type designated in the corresponding prediction block of the base layer from the common memory 7 (step S190b). Next, the prediction control section 191b acquires the scalability ratio between the base layer and the enhancement layer (step S191). Next, the prediction control section 191b acquires the PU size information decoded by the lossless decoding section 61b (step S192).

Next, the prediction control section 191b determines at least one candidate of the PU size with reference to the sub macroblock type (step S193). Next, the prediction control section 191b selects the PU size designated by the PU size information from the candidates of the PU size (step S194b). Next, the prediction control section 191b sets the PU with the selected PU size in each CU of the enhancement layer (step S 195b).

Next, the information acquisition section 192b acquires the prediction mode information and the motion information decoded by the lossless decoding section 61b on the PU set by the prediction control section 191b (step S196). Then, the prediction section 193b performs the inter prediction on the PU set by the prediction control section 191b using the motion information according to the prediction mode indicated by the prediction mode information (step S197).

### <6. Example Application>

### [6-1. Application to Various Products]

The image encoding device 10 and the image decoding device 60 according to the embodiment described above may be applied to various electronic appliances such as a transmitter and a receiver for satellite broadcasting, cable broadcasting such as cable TV, distribution on the Internet, distribution to terminals via cellular communication, and the like, a recording device that records images in a medium such as an optical disc, a magnetic disk or a flash memory, a reproduction device that reproduces images from such storage medium, and the like. Four example applications will be described below.

### (1) First application example

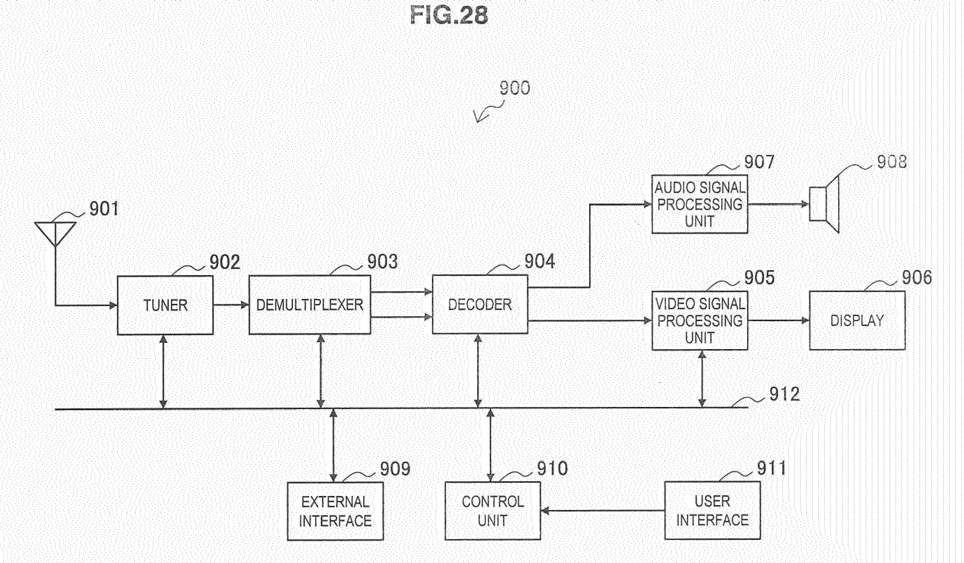

FIG. 28 is a diagram illustrating an example of a schematic configuration of a television device applying the aforementioned embodiment. A television device 900 includes an antenna 901, a tuner 902, a demultiplexer 903, a decoder 904, a video signal processing unit 905, a display 906, an audio signal processing unit 907, a speaker 908, an external interface 909, a control unit 910, a user interface 911, and a bus 912.

The tuner 902 extracts a signal of a desired channel from a broadcast signal received through the antenna 901 and demodulates the extracted signal. The tuner 902 then outputs an encoded bit stream obtained by the demodulation to the demultiplexer 903. That is, the tuner 902 has a role as transmission means receiving the encoded stream in which an image is encoded, in the television device 900.

The demultiplexer 903 isolates a video stream and an audio stream in a program to be viewed from the encoded bit stream and outputs each of the isolated streams to the decoder 904. The demultiplexer 903 also extracts auxiliary data such as an EPG (Electronic Program Guide) from the encoded bit stream and supplies the extracted data to the control unit 910. Here, the demultiplexer 903 may descramble the encoded bit stream when it is scrambled.

The decoder 904 decodes the video stream and the audio stream that are input from the demultiplexer 903. The decoder 904 then outputs video data generated by the decoding process to the video signal processing unit 905. Furthermore, the decoder 904 outputs audio data generated by the decoding process to the audio signal processing unit 907.

The video signal processing unit 905 reproduces the video data input from the decoder 904 and displays the video on the display 906. The video signal processing unit 905 may also display an application screen supplied through the network on the display 906. The video signal processing unit 905 may further perform an additional process such as noise reduction on the video data according to the setting. Furthermore, the video signal processing unit 905 may generate an image of a GUI (Graphical User Interface) such as a menu, a button, or a cursor and superpose the generated image onto the output image.

The display 906 is driven by a drive signal supplied from the video signal processing unit 905 and displays video or an image on a video screen of a display device (such as a liquid crystal display, a plasma display, or an OELD (Organic ElectroLuminescence Display)).

The audio signal processing unit 907 performs a reproducing process such as D/A conversion and amplification on the audio data input from the decoder 904 and outputs the audio from the speaker 908. The audio signal processing unit 907 may also perform an additional process such as noise reduction on the audio data.

The external interface 909 is an interface that connects the television device 900 with an external device or a network. For example, the decoder 904 may decode a video stream or an audio stream received through the external interface 909. This means that the external interface 909 also has a role as the transmission means receiving the encoded stream in which an image is encoded, in the television device 900.

The control unit 910 includes a processor such as a Central Processing Unit (CPU) and a memory such as a RAM and a ROM. The memory stores a program executed by the CPU, program data, EPG data, and data acquired through the network. The program stored in the memory is read by the CPU at the start-up of the television device 900 and executed, for example. By executing the program, the CPU controls the operation of the television device 900 in accordance with an operation signal that is input from the user interface 911, for example.

The user interface 911 is connected to the control unit 910. The user interface 911 includes a button and a switch for a user to operate the television device 900 as well as a reception part which receives a remote control signal, for example. The user interface 911 detects a user operation through these components, generates the operation signal, and outputs the generated operation signal to the control unit 910.

The bus 912 mutually connects the tuner 902, the demultiplexer 903, the decoder 904, the video signal processing unit 905, the audio signal processing unit 907, the external interface 909, and the control unit 910.

In the television device 900 having such a configuration, the decoder 904 has a function of the image decoding device 60 according to the above-described embodiment. Thus, by adopting an improved structure in which the block is set in the enhancement layer for the purpose of the scalable decoding of the multiple codecs of an image in the television device 900, the encoding efficiency can be improved.

### (2) Second application example

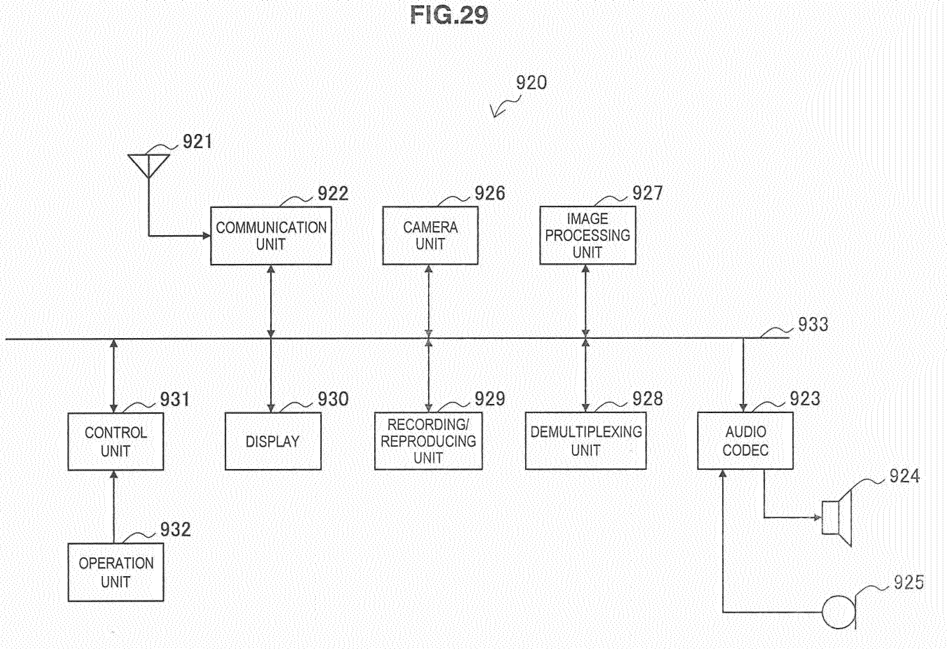

FIG. 29 is a diagram illustrating an example of a schematic configuration of a mobile telephone applying the aforementioned embodiment. A mobile telephone 920 includes an antenna 921, a communication unit 922, an audio codec 923, a speaker 924, a microphone 925, a camera unit 926, an image processing unit 927, a demultiplexing unit 928, a recording/reproducing unit 929, a display 930, a control unit 931, an operation unit 932, and a bus 933.

The antenna 921 is connected to the communication unit 922. The speaker 924 and the microphone 925 are connected to the audio codec 923. The operation unit 932 is connected to the control unit 931. The bus 933 mutually connects the communication unit 922, the audio codec 923, the camera unit 926, the image processing unit 927, the demultiplexing unit 928, the recording/reproducing unit 929, the display 930, and the control unit 931.

The mobile telephone 920 performs an operation such as transmitting/receiving an audio signal, transmitting/receiving an electronic mail or image data, imaging an image, or recording data in various operation modes including an audio call mode, a data communication mode, a photography mode, and a videophone mode.

In the audio call mode, an analog audio signal generated by the microphone 925 is supplied to the audio codec 923. The audio codec 923 then converts the analog audio signal into audio data, performs A/D conversion on the converted audio data, and compresses the data. The audio codec 923 thereafter outputs the compressed audio data to the communication unit 922. The communication unit 922 encodes and modulates the audio data to generate a transmission signal. The communication unit 922 then transmits the generated transmission signal to a base station (not shown) through the antenna 921. Furthermore, the communication unit 922 amplifies a radio signal received through the antenna 921, converts a frequency of the signal, and acquires a reception signal. The communication unit 922 thereafter demodulates and decodes the reception signal to generate the audio data and output the generated audio data to the audio codec 923. The audio codec 923 expands the audio data, performs D/A conversion on the data, and generates the analog audio signal. The audio codec 923 then outputs the audio by supplying the generated audio signal to the speaker 924.

In the data communication mode, for example, the control unit 931 generates character data configuring an electronic mail, in accordance with a user operation through the operation unit 932. The control unit 931 further displays a character on the display 930. Moreover, the control unit 931 generates electronic mail data in accordance with a transmission instruction from a user through the operation unit 932 and outputs the generated electronic mail data to the communication unit 922. The communication unit 922 encodes and modulates the electronic mail data to generate a transmission signal. Then, the communication unit 922 transmits the generated transmission signal to the base station (not shown) through the antenna 921. The communication unit 922 further amplifies a radio signal received through the antenna 921, converts a frequency of the signal, and acquires a reception signal. The communication unit 922 thereafter demodulates and decodes the reception signal, restores the electronic mail data, and outputs the restored electronic mail data to the control unit 931. The control unit 931 displays the content of the electronic mail on the display 930 as well as stores the electronic mail data in a storage medium of the recording/reproducing unit 929.

The recording/reproducing unit 929 includes an arbitrary storage medium that is readable and writable. For example, the storage medium may be a built-in storage medium such as a RAM or a flash memory, or may be an externally-mounted storage medium such as a hard disk, a magnetic disk, a magneto-optical disk, an optical disk, a USB (Unallocated Space Bitmap) memory, or a memory card.

In the photography mode, for example, the camera unit 926 images an object, generates image data, and outputs the generated image data to the image processing unit 927. The image processing unit 927 encodes the image data input from the camera unit 926 and stores an encoded stream in the storage medium of the storing/reproducing unit 929.

In the videophone mode, for example, the demultiplexing unit 928 multiplexes a video stream encoded by the image processing unit 927 and an audio stream input from the audio codec 923, and outputs the multiplexed stream to the communication unit 922. The communication unit 922 encodes and modulates the stream to generate a transmission signal. The communication unit 922 subsequently transmits the generated transmission signal to the base station (not shown) through the antenna 921. Moreover, the communication unit 922 amplifies a radio signal received through the antenna 921, converts a frequency of the signal, and acquires a reception signal. The transmission signal and the reception signal can include an encoded bit stream. Then, the communication unit 922 demodulates and decodes the reception signal to restore the stream, and outputs the restored stream to the demultiplexing unit 928. The demultiplexing unit 928 isolates the video stream and the audio stream from the input stream and outputs the video stream and the audio stream to the image processing unit 927 and the audio codec 923, respectively. The image processing unit 927 decodes the video stream to generate video data. The video data is then supplied to the display 930, which displays a series of images. The audio codec 923 expands and performs D/A conversion on the audio stream to generate an analog audio signal. The audio codec 923 then supplies the generated audio signal to the speaker 924 to output the audio.

The image processing unit 927 in the mobile telephone 920 configured in the aforementioned manner has a function of the image encoding device 10 and the image decoding device 60 according to the aforementioned embodiment. Accordingly, for multi-codec scalable video coding and decoding of images by the mobile telephone 920, coding efficiency can be increased by adopting an improved system for setting blocks in an enhancement layer.

### (3) Third application example

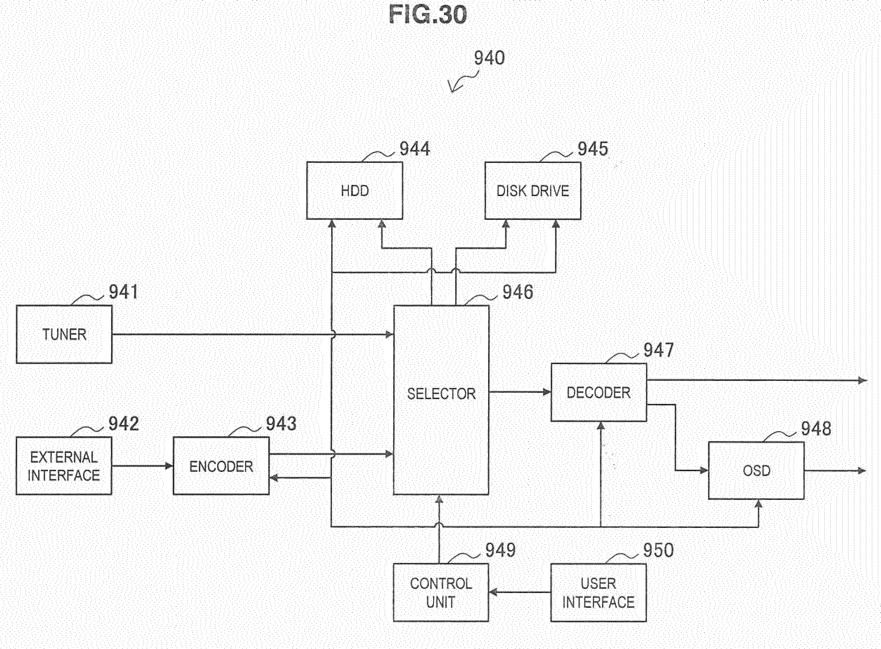

FIG. 30 is a diagram illustrating an example of a schematic configuration of a recording/reproducing device applying the aforementioned embodiment. A recording/reproducing device 940 encodes audio data and video data of a broadcast program received and records the data into a recording medium, for example. The recording/reproducing device 940 may also encode audio data and video data acquired from another device and record the data into the recording medium, for example. In response to a user instruction, for example, the recording/reproducing device 940 reproduces the data recorded in the recording medium on a monitor and a speaker. The recording/reproducing device 940 at this time decodes the audio data and the video data.

The recording/reproducing device 940 includes a tuner 941, an external interface 942, an encoder 943, an HDD (Hard Disk Drive) 944, a disk drive 945, a selector 946, a decoder 947, an OSD (On-Screen Display) 948, a control unit 949, and a user interface 950.

The tuner 941 extracts a signal of a desired channel from a broadcast signal received through an antenna (not shown) and demodulates the extracted signal. The tuner 941 then outputs an encoded bit stream obtained by the demodulation to the selector 946. That is, the tuner 941 has a role as transmission means in the recording/reproducing device 940.

The external interface 942 is an interface which connects the recording/reproducing device 940 with an external device or a network. The external interface 942 may be, for example, an IEEE 1394 interface, a network interface, a USB interface, or a flash memory interface. The video data and the audio data received through the external interface 942 are input to the encoder 943, for example. That is, the external interface 942 has a role as transmission means in the recording/reproducing device 940.

The encoder 943 encodes the video data and the audio data when the video data and the audio data input from the external interface 942 are not encoded. The encoder 943 thereafter outputs an encoded bit stream to the selector 946.

The HDD 944 records, into an internal hard disk, the encoded bit stream in which content data such as video and audio is compressed, various programs, and other data. The HDD 944 reads these data from the hard disk when reproducing the video and the audio.

The disk drive 945 records and reads data into/from a recording medium which is mounted to the disk drive. The recording medium mounted to the disk drive 945 may be, for example, a DVD disk (such as DVD-Video, DVD-RAM, DVD-R, DVD-RW, DVD+R, or DVD+RW) or a Blu-ray (Registered Trademark) disk.

The selector 946 selects the encoded bit stream input from the tuner 941 or the encoder 943 when recording the video and audio, and outputs the selected encoded bit stream to the HDD 944 or the disk drive 945. When reproducing the video and audio, on the other hand, the selector 946 outputs the encoded bit stream input from the HDD 944 or the disk drive 945 to the decoder 947.

The decoder 947 decodes the encoded bit stream to generate the video data and the audio data. The decoder 904 then outputs the generated video data to the OSD 948 and the generated audio data to an external speaker.

The OSD 948 reproduces the video data input from the decoder 947 and displays the video. The OSD 948 may also superpose an image of a GUI such as a menu, a button, or a cursor onto the video displayed.

The control unit 949 includes a processor such as a CPU and a memory such as a RAM and a ROM. The memory stores a program executed by the CPU as well as program data. The program stored in the memory is read by the CPU at the start-up of the recording/reproducing device 940 and executed, for example. By executing the program, the CPU controls the operation of the recording/reproducing device 940 in accordance with an operation signal that is input from the user interface 950, for example.

The user interface 950 is connected to the control unit 949. The user interface 950 includes a button and a switch for a user to operate the recording/reproducing device 940 as well as a reception part which receives a remote control signal, for example. The user interface 950 detects a user operation through these components, generates the operation signal, and outputs the generated operation signal to the control unit 949.

The encoder 943 in the recording/reproducing device 940 configured in the aforementioned manner has a function of the image encoding device 10 according to the aforementioned embodiment. On the other hand, the decoder 947 has a function of the image decoding device 60 according to the aforementioned embodiment. Accordingly, for multi-codec scalable video coding and decoding of images by the recording/reproducing device 940, coding efficiency can be increased by adopting an improved system for setting blocks in an enhancement layer.

### (4) Fourth application example

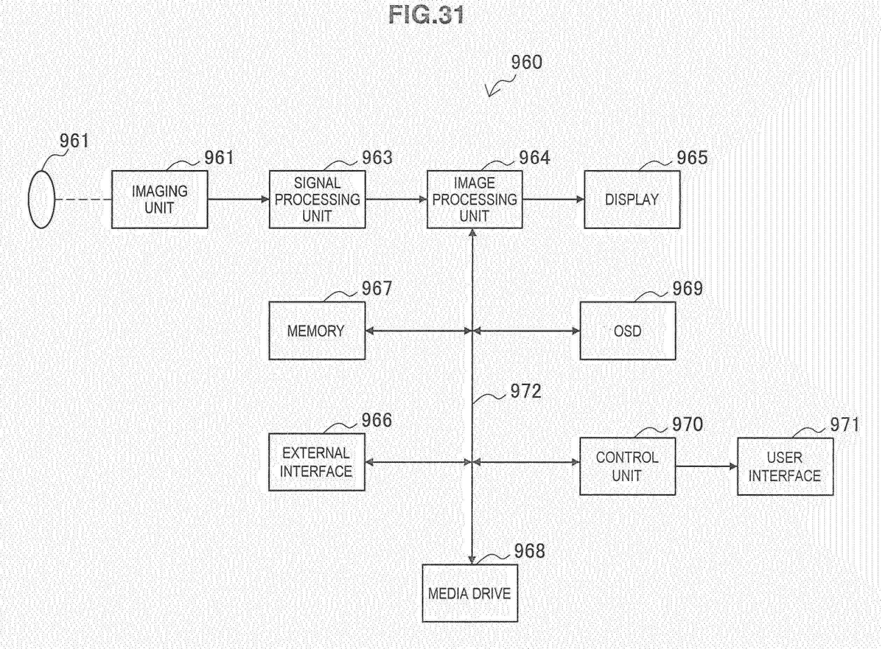

FIG. 31 shows an example of a schematic configuration of an image capturing device applying the aforementioned embodiment. An imaging device 960 images an object, generates an image, encodes image data, and records the data into a recording medium.

The imaging device 960 includes an optical block 961, an imaging unit 962, a signal processing unit 963, an image processing unit 964, a display 965, an external interface 966, a memory 967, a media drive 968, an OSD 969, a control unit 970, a user interface 971, and a bus 972.

The optical block 961 is connected to the imaging unit 962. The imaging unit 962 is connected to the signal processing unit 963. The display 965 is connected to the image processing unit 964. The user interface 971 is connected to the control unit 970. The bus 972 mutually connects the image processing unit 964, the external interface 966, the memory 967, the media drive 968, the OSD 969, and the control unit 970.

The optical block 961 includes a focus lens and a diaphragm mechanism. The optical block 961 forms an optical image of the object on an imaging surface of the imaging unit 962. The imaging unit 962 includes an image sensor such as a CCD (Charge Coupled Device) or a CMOS (Complementary Metal Oxide Semiconductor) and performs photoelectric conversion to convert the optical image formed on the imaging surface into an image signal as an electric signal. Subsequently, the imaging unit 962 outputs the image signal to the signal processing unit 963.

The signal processing unit 963 performs various camera signal processes such as a knee correction, a gamma correction and a color correction on the image signal input from the imaging unit 962. The signal processing unit 963 outputs the image data, on which the camera signal process has been performed, to the image processing unit 964.

The image processing unit 964 encodes the image data input from the signal processing unit 963 and generates the encoded data. The image processing unit 964 then outputs the generated encoded data to the external interface 966 or the media drive 968. The image processing unit 964 also decodes the encoded data input from the external interface 966 or the media drive 968 to generate image data. The image processing unit 964 then outputs the generated image data to the display 965. Moreover, the image processing unit 964 may output to the display 965 the image data input from the signal processing unit 963 to display the image. Furthermore, the image processing unit 964 may superpose display data acquired from the OSD 969 onto the image that is output on the display 965.

The OSD 969 generates an image of a GUI such as a menu, a button, or a cursor and outputs the generated image to the image processing unit 964.

The external interface 966 is configured as a USB input/output terminal, for example. The external interface 966 connects the imaging device 960 with a printer when printing an image, for example. Moreover, a drive is connected to the external interface 966 as needed. A removable medium such as a magnetic disk or an optical disk is mounted to the drive, for example, so that a program read from the removable medium can be installed to the imaging device 960. The external interface 966 may also be configured as a network interface that is connected to a network such as a LAN or the Internet. That is, the external interface 966 has a role as transmission means in the imaging device 960.

The recording medium mounted to the media drive 968 may be an arbitrary removable medium that is readable and writable such as a magnetic disk, a magneto-optical disk, an optical disk, or a semiconductor memory. Furthermore, the recording medium may be fixedly mounted to the media drive 968 so that a non-transportable storage unit such as a built-in hard disk drive or an SSD (Solid State Drive) is configured, for example.

The control unit 970 includes a processor such as a CPU and a memory such as a RAM and a ROM. The memory stores a program executed by the CPU as well as program data. The program stored in the memory is read by the CPU at the start-up of the imaging device 960 and then executed. By executing the program, the CPU controls the operation of the imaging device 960 in accordance with an operation signal that is input from the user interface 971, for example.

The user interface 971 is connected to the control unit 970. The user interface 971 includes a button and a switch for a user to operate the imaging device 960, for example. The user interface 971 detects a user operation through these components, generates the operation signal, and outputs the generated operation signal to the control unit 970.

The image processing unit 964 in the imaging device 960 configured in the aforementioned manner has a function of the image encoding device 10 and the image decoding device 60 according to the aforementioned embodiment. Accordingly, for multi-codec scalable video coding and decoding of images by the imaging device 960,
coding efficiency can be increased by adopting an improved system for setting blocks in an enhancement layer.

### [6-2. Various Uses of Scalable Video Coding]

Advantages of scalable video coding described above can be enjoyed in various uses. Three examples of use will be described below.

### (1) First example

In the first example, scalable video coding is used for selective transmission of data. Referring to FIG. 32, a data transmission system 1000 includes a stream storage device 1001 and a delivery server 1002. The delivery server 1002 is connected to some terminal devices via a network 1003. The network 1003 may be a wire network or a wireless network or a combination thereof. FIG. 32 shows a PC (Personal Computer) 1004, an AV device 1005, a tablet device 1006, and a mobile phone 1007 as examples of the terminal devices.

The stream storage device 1001 stores, for example, stream data 1011 including a multiplexed stream generated by the image encoding device 10. The multiplexed stream includes an encoded stream of the base layer (BL) and an encoded stream of an enhancement layer (EL). The delivery server 1002 reads the stream data 1011 stored in the stream storage device 1001 and delivers at least a portion of the read stream data 1011 to the PC 1004, the AV device 1005, the tablet device 1006, and the mobile phone 1007 via the network 1003.

When a stream is delivered to a terminal device, the delivery server 1002 selects the stream to be delivered based on some condition such as capabilities of a terminal device or the communication environment. For example, the delivery server 1002 may avoid a delay in a terminal device or an occurrence of overflow or overload of a processor by not delivering an encoded stream having high image quality exceeding image quality that can be handled by the terminal device. The delivery server 1002 may also avoid occupation of communication bands of the network 1003 by not delivering an encoded stream having high image quality. On the other hand, when there is no risk to be avoided or it is considered to be appropriate based on a user's contract or some condition, the delivery server 1002 may deliver an entire multiplexed stream to a terminal device.

In the example of FIG. 32, the delivery server 1002 reads the stream data 1011 from the stream storage device 1001. Then, the delivery server 1002 delivers the stream data 1011 directly to the PC 1004 having high processing capabilities. Because the AV device 1005 has low processing capabilities, the delivery server 1002 generates stream data 1012 containing only an encoded stream of the base layer extracted from the stream data 1011 and delivers the stream data 1012 to the AV device 1005. The delivery server 1002 delivers the stream data 1011 directly to the tablet device 1006 capable of communication at a high communication rate. Because the mobile phone 1007 can communicate at a low communication rate, the delivery server 1002 delivers the stream data 1012 containing only an encoded stream of the base layer to the mobile phone 1007.

By using the multiplexed stream in this manner, the amount of traffic to be transmitted can adaptively be adjusted. The code amount of the stream data 1011 is reduced when compared with a case when each layer is individually encoded and thus, even if the whole stream data 1011 is delivered, the load on the network 1003 can be lessened. Further, memory resources of the stream storage device 1001 are saved.

Hardware performance of the terminal devices is different from device to device. In addition, capabilities of applications run on the terminal devices are diverse. Further, communication capacities of the network 1003 are varied. Capacities available for data transmission may change every moment due to other traffic. Thus, before starting delivery of stream data, the delivery server 1002 may acquire terminal information about hardware performance and application capabilities of terminal devices and network information about communication capacities of the network 1003 through signaling with the delivery destination terminal device. Then, the delivery server 1002 can select the stream to be delivered based on the acquired information.

Incidentally, the layer to be decoded may be extracted by the terminal device. For example, the PC 1004 may display a base layer image extracted and decoded from a received multiplexed stream on the screen thereof. After generating the stream data 1012 by extracting an encoded stream of the base layer from a received multiplexed stream, the PC 1004 may cause a storage medium to store the stream data 1012 or transfer the stream data to another device.

The configuration of the data transmission system 1000 shown in FIG. 32 is only an example. The data transmission system 1000 may include any numbers of the stream storage device 1001, the delivery server 1002, the network 1003, and terminal devices.

### (2) Second example

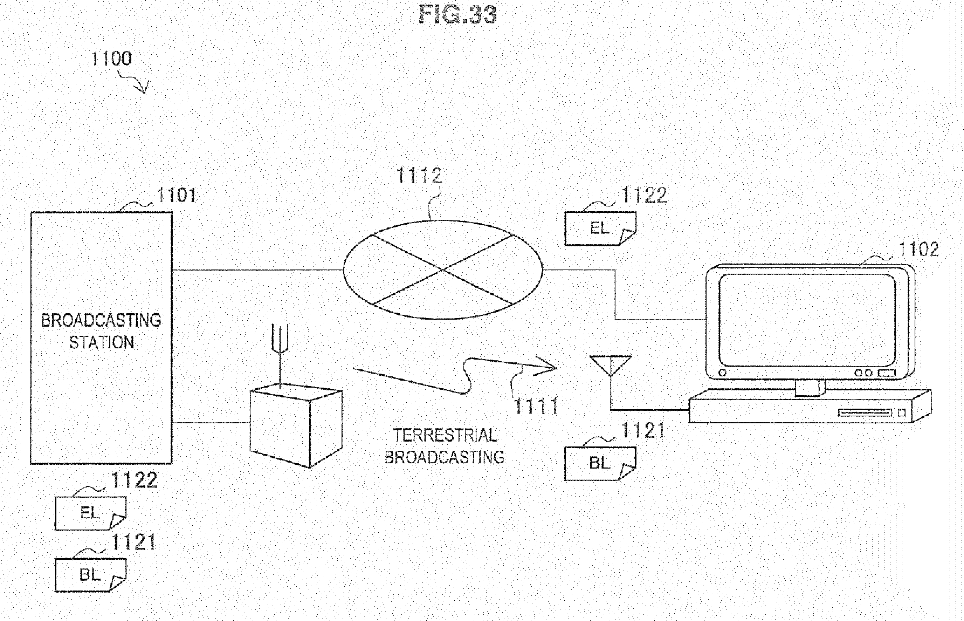

In the second example, scalable video coding is used for transmission of data via a plurality of communication channels. Referring to FIG. 33, a data transmission system 1100 includes a broadcasting station 1101 and a terminal device 1102. The broadcasting station 1101 broadcasts an encoded stream 1121 of the base layer on a terrestrial channel 1111. The broadcasting station 1101 also broadcasts an encoded stream 1122 of an enhancement layer to the terminal device 1102 via a network 1112.

The terminal device 1102 has a receiving function to receive terrestrial broadcasting broadcast by the broadcasting station 1101 and receives the encoded stream 1121 of the base layer via the terrestrial channel 1111. The terminal device 1102 also has a communication function to communicate with the broadcasting station 1101 and receives the encoded stream 1122 of an enhancement layer via the network 1112.

After receiving the encoded stream 1121 of the base layer, for example, in response to user's instructions, the terminal device 1102 may decode a base layer image from the received encoded stream 1121 and display the base layer image on the screen. Alternatively, the terminal device 1102 may cause a storage medium to store the decoded base layer image or transfer the base layer image to another device.

After receiving the encoded stream 1122 of an enhancement layer via the network 1112, for example, in response to user's instructions, the terminal device 1102 may generate a multiplexed stream by multiplexing the encoded stream 1121 of the base layer and the encoded stream 1122 of an enhancement layer. The terminal device 1102 may also decode an enhancement image from the encoded stream 1122 of an enhancement layer to display the enhancement image on the screen. Alternatively, the terminal device 1102 may cause a storage medium to store the decoded enhancement layer image or transfer the enhancement layer image to another device.

As described above, an encoded stream of each layer contained in a multiplexed stream can be transmitted via a different communication channel for each layer. Accordingly, a communication delay or an occurrence of overflow can be reduced by distributing loads on individual channels.

The communication channel to be used for transmission may dynamically be selected in accordance with some condition. For example, the encoded stream 1121 of the base layer whose data amount is relatively large may be transmitted via a communication channel having a wider bandwidth and the encoded stream 1122 of an enhancement layer whose data amount is relatively small may be transmitted via a communication channel having a narrower bandwidth. The communication channel on which the encoded stream 1122 of a specific layer is transmitted may be switched in accordance with the bandwidth of the communication channel. Accordingly, the load on individual channels can be lessened more effectively.

The configuration of the data transmission system 1100 shown in FIG. 33 is only an example. The data transmission system 1100 may include any numbers of communication channels and terminal devices. The configuration of the system described here may also be applied to other uses than broadcasting.

### (3) Third example

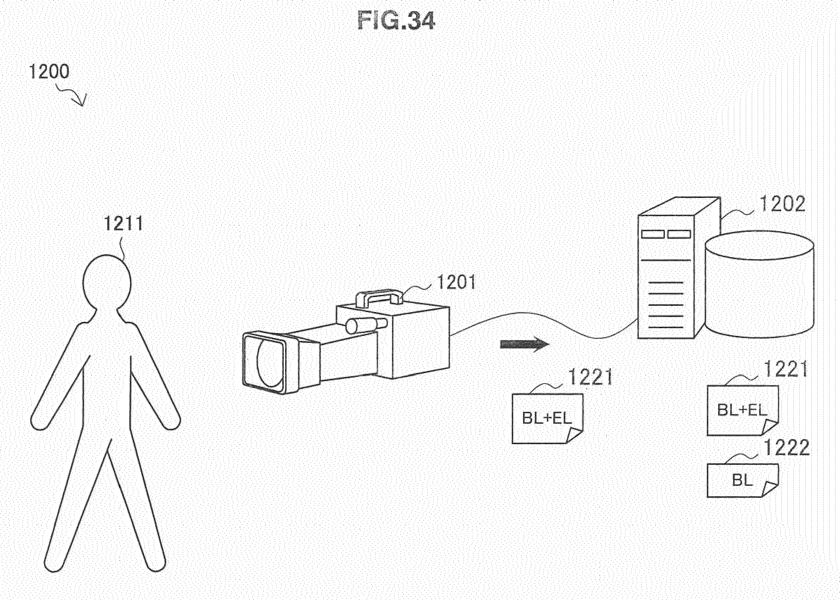

In the third example, scalable video coding is used for storage of video. Referring to FIG. 34, a data transmission system 1200 includes an imaging device 1201 and a stream storage device 1202. The imaging device 1201 scalable-encodes image data generated by a subject 1211 being imaged to generate a multiplexed stream 1221. The multiplexed stream 1221 includes an encoded stream of the base layer and an encoded stream of an enhancement layer. Then, the imaging device 1201 supplies the multiplexed stream 1221 to the stream storage device 1202.

The stream storage device 1202 stores the multiplexed stream 1221 supplied from the imaging device 1201 in different image quality for each mode. For example, the stream storage device 1202 extracts the encoded stream 1222 of the base layer from the multiplexed stream 1221 in normal mode and stores the extracted encoded stream 1222 of the base layer. In high quality mode, by contrast, the stream storage device 1202 stores the multiplexed stream 1221 as it is. Accordingly, the stream storage device 1202 can store a high-quality stream with a large amount of data only when recording of video in high quality is desired. Therefore, memory resources can be saved while the influence of image degradation on users is curbed.

For example, the imaging device 1201 is assumed to be a surveillance camera. When no surveillance object (for example, no intruder) appears in a captured image, the normal mode is selected. In this case, the captured image is likely to be unimportant and priority is given to the reduction of the amount of data so that the video is recorded in low image quality (that is, only the encoded stream 1222 of the base layer is stored). In contract, when a surveillance object (for example, the subject 1211 as an intruder) appears in a captured image, the high-quality mode is selected. In this case, the captured image is likely to be important and priority is given to high image quality so that the video is recorded in high image quality (that is, the multiplexed stream 1221 is stored).

In the example of FIG. 34, the mode is selected by the stream storage device 1202 based on, for example, an image analysis result. However, the present embodiment is not limited to such an example and the imaging device 1201 may select the mode. In the latter case, imaging device 1201 may supply the encoded stream 1222 of the base layer to the stream storage device 1202 in normal mode and the multiplexed stream 1221 to the stream storage device 1202 in high-quality mode.

Selection criteria for selecting the mode may be any criteria. For example, the mode may be switched in accordance with the loudness of voice acquired through a microphone or the waveform of voice. The mode may also be switched periodically. Also, the mode may be switched in response to user's instructions. Further, the number of selectable modes may be any number as long as the number of hierarchized layers is not exceeded.

The configuration of the data transmission system 1200 shown in FIG. 34 is only an example. The data transmission system 1200 may include any number of the imaging device 1201. The configuration of the system described here may also be applied to other uses than the surveillance camera.

### [6-3. Others]

### (1) Application to the multi-view codec

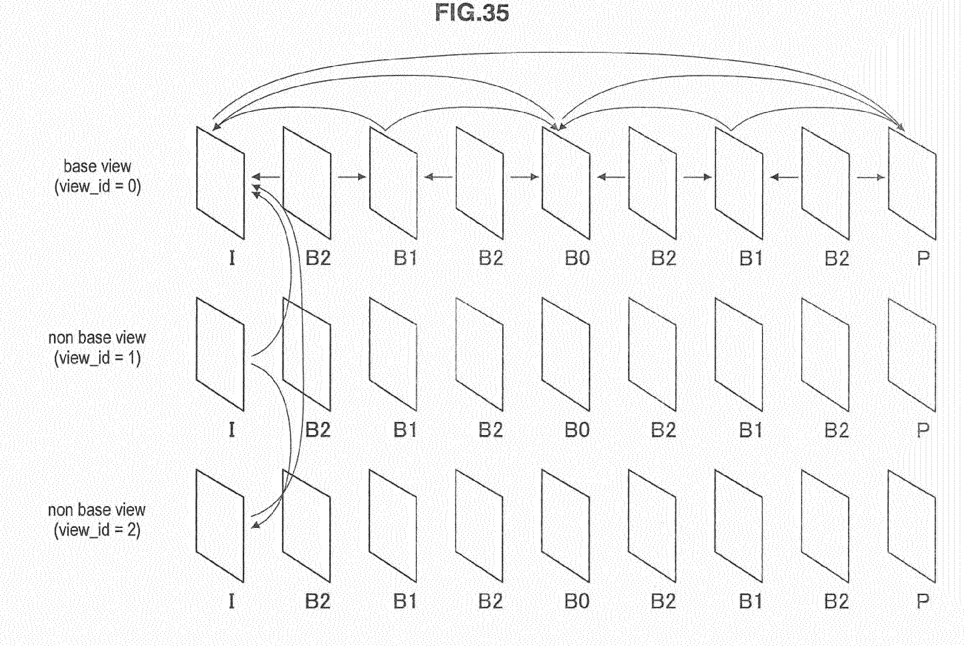

The multi-view codec is a kind of multi-layer codec and is an image encoding system to encode and decode so-called multi-view video. FIG. 35 is an explanatory view illustrating a multi-view codec. Referring to FIG. 35, sequences of three view frames captured from three viewpoints are shown. A view ID (view_id) is attached to each view. Among a plurality of these views, one view is specified as the base view. Views other than the base view are called non-base views. In the example of FIG. 35, the view whose view ID is "0" is the base view and two views whose view ID is "1" or "2" are non-base views. When these views are hierarchically encoded, each view may correspond to a layer. As indicated by arrows in FIG. 35, an image of a non-base view is encoded and decoded by referring to an image of the base view (an image of the other non-base view may also be referred to).

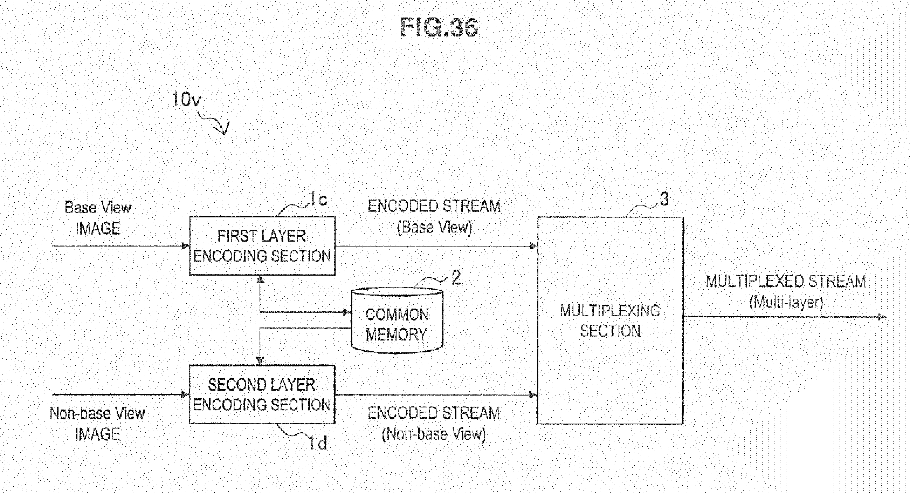

FIG. 36 is a block diagram showing a schematic configuration of an image encoding device 10v supporting the multi-view codec. Referring to FIG. 36, the image encoding device 10v includes a first layer encoding section 1c, a second layer encoding section 1d, the common memory 2, and the multiplexing section 3.

The function of the first layer encoding section 1c is the same as that of the first encoding section 1a described using FIG. 8 except that, instead of a base layer image, a base view image is received as input. The first layer encoding section 1c encodes the base view image to generate an encoded stream of a first layer. The function of the second layer encoding section 1d is the same as that of the second encoding section 1b described using FIG. 8 except that, instead of an enhancement layer image, a non-base view image is received as input. The second layer encoding section 1d encodes the non-base view image to generate an encoded stream of a second layer. The common memory 2 stores information commonly used between layers. The multiplexing section 3 multiplexes an encoded stream of the first layer generated by the first layer encoding section 1c and an encoded stream of the second layer generated by the second layer encoding section 1d to generate a multilayer multiplexed stream.

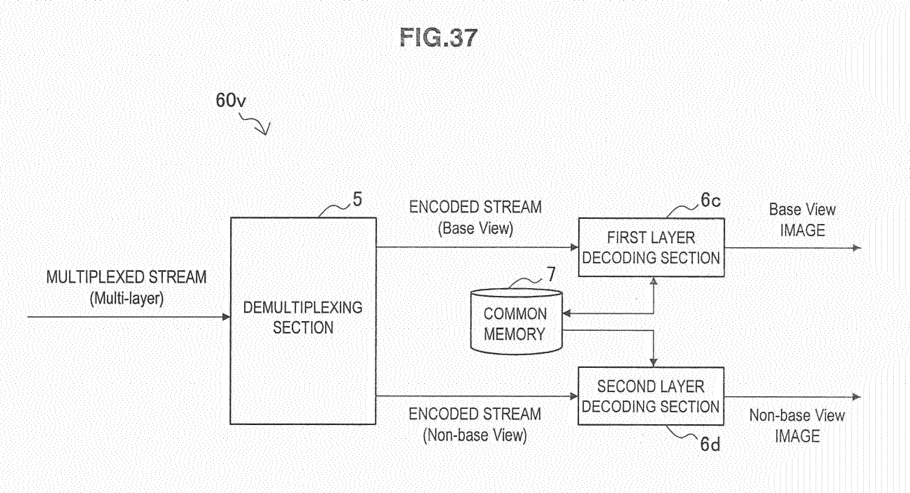

FIG. 37 is a block diagram showing a schematic configuration of an image decoding device 60v supporting the multi-view codec. Referring to FIG. 37, the image decoding device 60v includes the demultiplexing section 5, a first layer decoding section 6c, a second layer decoding section 6d, and the common memory 7.

The demultiplexing section 5 demultiplexes a multilayer multiplexed stream into an encoded stream of the first layer and an encoded stream of the second layer. The function of the first layer decoding section 6c is the same as that of the first decoding section 6a described using FIG. 9 except that an encoded stream in which, instead of a base layer image, a base view image is encoded is received as input. The first layer decoding section 6c decodes a base view image from an encoded stream of the first layer. The function of the second layer decoding section 6d is the same as that of the second decoding section 6b described using FIG. 9 except that an encoded stream in which, instead of an enhancement layer image, a non-base view image is encoded is received as input. The second layer decoding section 6d decodes a non-base view image from an encoded stream of the second layer. The common memory 7 stores information commonly used between layers.

When multi-view image data is encoded or decoded, coding efficiency may be increased by setting blocks in a layer of a non-base view according to the technology in the present disclosure.

### (2) Application to streaming technology

Technology in the present disclosure may also be applied to a streaming protocol. In MPEG-DASH (Dynamic Adaptive Streaming over HTTP), for example, a plurality of encoded streams having mutually different parameters such as the resolution is prepared by a stream server in advance. Then, the streaming server dynamically selects appropriate data for streaming from the plurality of encoded streams and delivers the selected data. In such a streaming protocol, the technology in the present disclosure may be adapted.

### <7. Conclusion>

The various embodiments of the image encoding device 10 and the image decoding device 60 have been described above with reference to FIGS. 1 to 37. According to the above-described embodiments, the base layer is encoded with the image coding scheme of the macroblock base and the CU is set in the enhancement layer according to the block size set in the base layer in the scalable video coding of the multiple codecs in which the enhancement layer is encoded with the image coding scheme of the CU base subjected to the recursive block division. Accordingly, the high coding efficiency can be achieved compared to the method of forming the Quad-Tree structure from the beginning in the enhancement layer.

According to the above-described embodiments, the largest size of the CU, i.e., the LCU size, is determined using the block size in the base layer and the scalability ratio between the layers. On the other hand, the block division to the CU in the LCU does not necessarily depend on the block size in the base layer. Accordingly, the coding efficiency of the enhancement layer can be optimized while maintaining the advantages of the flexibility of the Quad-Tree structure without being limited the macroblock structure unique to HEVC with a lattice form of the base layer. When the LCU size is deterministically determined using the macroblock size and the scalability ratio, the block size information in the enhancement layer may not be encoded, thereby reducing the encoding amount. Further, when the candidates of the LCU size are narrowed using the product of the macroblock size and the scalability ratio as the reference, the flexibility of the setting of the LCU size can also be obtained while reducing the encoding amount.

Mainly described herein is the example where the various pieces of information such as the information related to intra prediction and the information related to inter prediction are multiplexed to the header of the encoded stream and transmitted from the encoding side to the decoding side. The method of transmitting these pieces of information however is not limited to such example. For example, these pieces of information may be transmitted or recorded as separate data associated with the encoded bit stream without being multiplexed to the encoded bit stream. Here, the term "association" means to allow the image included in the bit stream (may be a part of the image such as a slice or a block) and the information corresponding to the current image to establish a link when decoding. Namely, the information may be transmitted on a different transmission path from the image (or the bit stream). The information may also be recorded in a different recording medium (or a different recording area in the same recording medium) from the image (or the bit stream). Furthermore, the information and the image (or the bit stream) may be associated with each other by an arbitrary unit such as a plurality of frames, one frame, or a portion within a frame.

The preferred embodiments of the present disclosure have been described above with reference to the accompanying drawings, whilst the present disclosure is not limited to the above examples, of course. A person skilled in the art may find various alternations and modifications within the scope of the appended claims, and it should be understood that they will naturally come under the technical scope of the present disclosure.

Additionally, the present technology may also be configured as below.
(1)
   An image processing apparatus including:
   a first setting section configured to set a macroblock in a base layer decoded with a first coding scheme which is based on the macroblock with a fixed size; and
   a second setting section configured to set a coding unit in an enhancement layer decoded with a second coding scheme which is based on the coding unit subjected to recursive block division in accordance with a block size set by the first setting section.
(2)
   The image processing apparatus according to (1), wherein the second setting section determines a size of the coding unit using a macroblock size and a scalability ratio between the layers.
(3)
   The image processing apparatus according to (2), wherein the second setting section determines a largest size of the coding unit by multiplying the macroblock size by the scalability ratio.
(4)
   The image processing apparatus according to (2), wherein the second setting section determines, as a largest size of the coding unit, a size selected from a plurality of sizes narrowed using a product of the macroblock size and the scalability ratio as a reference in accordance with a parameter acquired from an encoded stream.
(5)
   The image processing apparatus according to (3) or (4), wherein the second setting section determines a smallest size of the coding unit by multiplying a sub macroblock size by the scalability ratio.
(6)
   The image processing apparatus according to (3) or (4), wherein the second setting section determines a smallest size of the coding unit in accordance with a parameter acquired from an encoded stream.
(7)
   The image processing apparatus according to any one of (2) to (6), further including:
   a first prediction section configured to set a first prediction block in the base layer and perform intra prediction or inter prediction on the first prediction block; and
   a second prediction section configured to set a second prediction block corresponding to the first prediction block in the enhancement layer using a size of the first prediction block and the scalability ratio and perform intra prediction or inter prediction on the second prediction block.
(8)
   The image processing apparatus according to (7), wherein the second prediction section determines a size of the second prediction block by multiplying the size of the first prediction block set by the first prediction section by the scalability ratio.
(9)
   The image processing apparatus according to (7), wherein the second prediction section determines, as a size of the second prediction block, a size selected from a plurality of sizes narrowed using a product of the size of the first prediction block set by the first prediction section and the scalability ratio as a reference in accordance with a parameter acquired from an encoded stream.
(10)
   The image processing apparatus according to (7),
   wherein the first and second prediction sections perform the inter prediction, and
   wherein the second prediction section determines, as a size of the second prediction block, a size selected from a plurality of sizes narrowed in accordance with whether division into sub macroblocks is used by the first prediction section at the time of the setting of the first prediction block in accordance with a parameter acquired from an encoded stream.
(11)
   The image processing apparatus according to any one of (2) to (10), further including:
   a first transform section configured to set a first transform block in the base layer and perform an inverse orthogonal transform on the first transform block; and
   a second transform section configured to set a second transform block corresponding to the first transform block in the enhancement layer using a size of the first transform block and the scalability ratio and perform an inverse orthogonal transform on the second transform block.
(12)
   The image processing apparatus according to (11), wherein the second transform section determines a size of the second transform block by multiplying the size of the first transform block set by the first transform section by the scalability ratio.
(13)
   The image processing apparatus according to (11), wherein the second transform section determines, as a size of the second transform block, a size selected from a plurality of sizes narrowed using a product of the size of the first transform block set by the first transform section and the scalability ratio as a reference in accordance with a parameter acquired from an encoded stream.
(14)
   An image processing method including:
   setting a macroblock in a base layer decoded with a first coding scheme which is based on the macroblock with a fixed size; and
   setting a coding unit in an enhancement layer decoded with a second coding scheme which is based on the coding unit subjected to recursive block division in accordance with a block size set in the base layer.
(15)
   An image processing apparatus including:
   a first setting section configured to set a macroblock in a base layer encoded with a first coding scheme which is based on the macroblock with a fixed size; and
   a second setting section configured to set a coding unit in an enhancement layer encoded with a second coding scheme which is based on the coding unit subjected to recursive block division in accordance with a block size set by the first setting section.
(16)
   The image processing apparatus according to (15), wherein the second setting section determines a size of the coding unit using a macroblock size and a scalability ratio between the layers.
(17)
   The image processing apparatus according to (16), wherein the second setting section determines a largest size of the coding unit by multiplying the macroblock size by the scalability ratio.
(18)
   The image processing apparatus according to (17), wherein the second setting section determines a smallest size of the coding unit by multiplying a sub macroblock size by the scalability ratio.
(19)
   The image processing apparatus according to (17), wherein the second setting section generates a parameter indicating a size selected as a smallest size of the coding unit.
(20)
   An image processing method including:
   setting a macroblock in a base layer encoded with a first coding scheme which is based on the macroblock with a fixed size; and
   setting a coding unit in an enhancement layer encoded with a second coding scheme which is based on the coding unit subjected to recursive block division in accordance with a block size set in the base layer.

### Reference Signs List

- 10: image encoding device (image processing apparatus)
- 12a: block setting section (first setting section)
- 12b: block setting section (second setting section)
- 14a: orthogonal transform section (first transform section)
- 14b: orthogonal transform section (second transform section)
- 30a: intra prediction section (first prediction section)
- 30b: intra prediction section (second prediction section)
- 40a: inter prediction section (first prediction section)
- 40b: inter prediction section (second prediction section)
- 60: image decoding device (image processing apparatus)
- 62a: block setting section (first setting section)
- 62b: block setting section (second setting section)
- 64a: inverse orthogonal transform section (first transform section)
- 64b: inverse orthogonal transform section (second transform section)
- 80a: intra prediction section (first prediction section)
- 80b: intra prediction section (second prediction section)
- 90a: inter prediction section (first prediction section)
- 90b: inter prediction section (second prediction section)

## Claims

1. An image processing apparatus comprising:
a first setting section configured to set a macroblock in a base layer decoded with a first coding scheme which is based on the macroblock with a fixed size; and
a second setting section configured to set a coding unit in an enhancement layer decoded with a second coding scheme which is based on the coding unit subjected to recursive block division in accordance with a block size set by the first setting section.

2. The image processing apparatus according to claim 1, wherein the second setting section determines a size of the coding unit using a macroblock size and a scalability ratio between the layers.

3. The image processing apparatus according to claim 2, wherein the second setting section determines a largest size of the coding unit by multiplying the macroblock size by the scalability ratio.

4. The image processing apparatus according to claim 2, wherein the second setting section determines, as a largest size of the coding unit, a size selected from a plurality of sizes narrowed using a product of the macroblock size and the scalability ratio as a reference in accordance with a parameter acquired from an encoded stream.

5. The image processing apparatus according to claim 3, wherein the second setting section determines a smallest size of the coding unit by multiplying a sub macroblock size by the scalability ratio.

6. The image processing apparatus according to claim 3, wherein the second setting section determines a smallest size of the coding unit in accordance with a parameter acquired from an encoded stream.

7. The image processing apparatus according to claim 2, further comprising:
a first prediction section configured to set a first prediction block in the base layer and perform intra prediction or inter prediction on the first prediction block; and
a second prediction section configured to set a second prediction block corresponding to the first prediction block in the enhancement layer using a size of the first prediction block and the scalability ratio and perform intra prediction or inter prediction on the second prediction block.

8. The image processing apparatus according to claim 7, wherein the second prediction section determines a size of the second prediction block by multiplying the size of the first prediction block set by the first prediction section by the scalability ratio.

9. The image processing apparatus according to claim 7, wherein the second prediction section determines, as a size of the second prediction block, a size selected from a plurality of sizes narrowed using a product of the size of the first prediction block set by the first prediction section and the scalability ratio as a reference in accordance with a parameter acquired from an encoded stream.

10. The image processing apparatus according to claim 7,
wherein the first and second prediction sections perform the inter prediction, and
wherein the second prediction section determines, as a size of the second prediction block, a size selected from a plurality of sizes narrowed in accordance with whether division into sub macroblocks is used by the first prediction section at the time of the setting of the first prediction block in accordance with a parameter acquired from an encoded stream.

11. The image processing apparatus according to claim 2, further comprising:
a first transform section configured to set a first transform block in the base layer and perform an inverse orthogonal transform on the first transform block; and
a second transform section configured to set a second transform block corresponding to the first transform block in the enhancement layer using a size of the first transform block and the scalability ratio and perform an inverse orthogonal transform on the second transform block.

12. The image processing apparatus according to claim 11, wherein the second transform section determines a size of the second transform block by multiplying the size of the first transform block set by the first transform section by the scalability ratio.

13. The image processing apparatus according to claim 11, wherein the second transform section determines, as a size of the second transform block, a size selected from a plurality of sizes narrowed using a product of the size of the first transform block set by the first transform section and the scalability ratio as a reference in accordance with a parameter acquired from an encoded stream.

14. An image processing method comprising:
setting a macroblock in a base layer decoded with a first coding scheme which is based on the macroblock with a fixed size; and
setting a coding unit in an enhancement layer decoded with a second coding scheme which is based on the coding unit subjected to recursive block division in accordance with a block size set in the base layer.

15. An image processing apparatus comprising:
a first setting section configured to set a macroblock in a base layer encoded with a first coding scheme which is based on the macroblock with a fixed size; and
a second setting section configured to set a coding unit in an enhancement layer encoded with a second coding scheme which is based on the coding unit subjected to recursive block division in accordance with a block size set by the first setting section.

16. The image processing apparatus according to claim 15, wherein the second setting section determines a size of the coding unit using a macroblock size and a scalability ratio between the layers.

17. The image processing apparatus according to claim 16, wherein the second setting section determines a largest size of the coding unit by multiplying the macroblock size by the scalability ratio.

18. The image processing apparatus according to claim 17, wherein the second setting section determines a smallest size of the coding unit by multiplying a sub macroblock size by the scalability ratio.

19. The image processing apparatus according to claim 17, wherein the second setting section generates a parameter indicating a size selected as a smallest size of the coding unit.

20. An image processing method comprising:
setting a macroblock in a base layer encoded with a first coding scheme which is based on the macroblock with a fixed size; and
setting a coding unit in an enhancement layer encoded with a second coding scheme which is based on the coding unit subjected to recursive block division in accordance with a block size set in the base layer.
